# EUROPEAN PATENT APPLICATION

(11) **EP 1 389 842 A2**
(43) Date of publication of application: **18.02.2004**
(21) Application number: 03102544.8
(22) Date of filing: 14.08.2003
(51) Int. Cl.: H04B 10/18

(54) **Polarization mode dispersion compensation method and polarization mode dispersion compensation device**

(30) Priority: 16.08.2002 JP 2002237490
(71) Applicant: Nippon Telegraph and Telephone Corporation, Tokyo (JP)
(72) Inventor: KISAKA, Yoshiaki NTT Int. Prop. Center, TOKYO (JP); TOMIZAWA, Masahito NTT Int. Prop. Center, TOKYO (JP); MIYAMOTO, Yutaka NTT Int. Prop. Center, TOKYO (JP); HIRANO, Akira NTT Int. Prop. Center, TOKYO (JP); KUWAHARA, Shoichirou NTT Int. Prop. Center, TOKYO (JP)
(74) Representative: Poulin, Gérard

(57) **Abstract**

With this polarization mode dispersion compensation method, an optical signal which is sent by an optical signal transmitter 5 is propagated along an optical transmission path 6, and, after having passed through a polarization controller 1, is inputted to a polarizer 2. A specified polarization component is separated out by the polarizer 2 from this optical signal which has been thus inputted. The optical signal which has been thus separated is inputted into a waveform deterioration detector 3, which detects waveform deterioration thereof. Based upon information related to the waveform deterioration which has been detected, a control device 7 controls the polarization controller 1 so that the waveform deterioration becomes a minimum.

## Description

### BACKGROUND OF THE INVENTION

### Field of the Invention

The present invention relates to a polarization mode dispersion compensation method and a polarization mode dispersion compensation device, which compensate for deterioration of transmission characteristic due to polarization mode dispersion of an optical transmission path of an optical fiber, an optical amplifier relay and the like through which an optical signal is propagated.

### Background Art

With ultra high speed optical transmission and long distance optical transmission, deterioration of the transmission quality due to so called polarization mode dispersion (PMD) in which the group velocity of an optical signal upon the optical transmission path is different for two principal state of polarization (PSP) which are orthogonal to one another becomes a great problem. The PMD characteristic depends upon the manufacturing process for the optical fiber and upon the circumstances of its installation, and exhibits changes over the passage of time due to changes in the stress which is imposed upon the optical fiber and in the environmental temperature. Due to this it is necessary to compensate for such transmission quality deterioration due to PMD in an adaptive manner, as for example disclosed by T.Takahashi et al. in Electronics Letters, vol. 30, no. 4, p. 348 (1994).

There are two main divisions into which methods of compensating for transmission quality deterioration due to first order PMD can be classified. Two such prior art methods of compensating for transmission quality deterioration due to PMD will now be described as representative examples of their types. The magnitude of the first order PMD is termed the differential group delay (DGD).

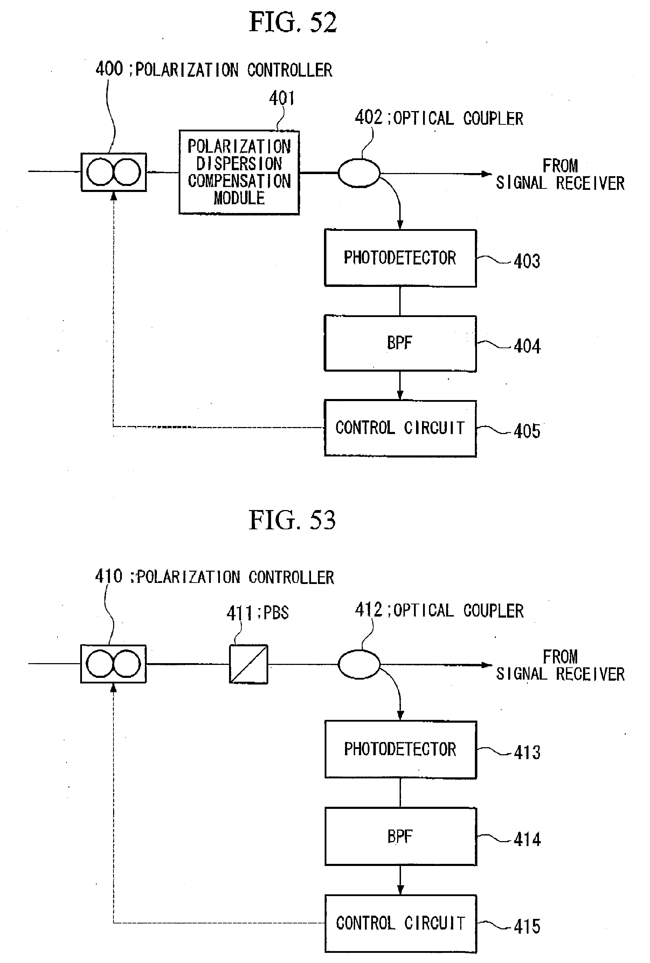

As one such method, there is a PMD compensator (hereinafter termed "prior art 1") which compensates for the transmission quality deterioration due to DGD by allocating to the optical signal which is received a DGD of the opposite sign to the DGD of the optical transmission path. The structure and the operation of this PMD compensator will now be explained with reference to FIG. 52. An optical signal which is incident from an optical transmission path, after having passed through a polarization conversion device 400 and a polarization dispersion compensation module 401, is separated by an optical coupler 402, and is incident on the one hand upon a signal receiver, and on the other hand upon a photodetector 403. The optical signal which is thus incident is recognized by the photodetector 403, and a specified frequency component of this optical signal (for example half of its bit rate) is extracted by a band pass filter (BPF) 404. Based upon information related to this frequency component which has thus been extracted, a control circuit 405 controls the polarization conversion device 400 so that the frequency component which has been thus extracted attains a maximum. By doing this, the optical signal is subjected to the DGD of the optical transmission path and - by the polarization dispersion compensation module 401 - to DGD of the opposite characteristic, so that it is possible to compensate for the deterioration of the transmission quality due to DGD.

As another such method, as for example disclosed in Japanese Patent Laying Open Publication 2000-356760, there is a PMD compensator (hereinafter termed "prior art 2") which compensates for transmission quality deterioration due to DGD by separating out, from the optical signal which is received, only the optical signal component which is parallel, or the optical signal component which is perpendicular, to the principal state of polarization of the optical transmission path.

The structure and the operation of this PMD compensator will now be explained with reference to FIG. 53. An optical signal which is incident from an optical transmission path, after having been converted into any desired linear polarization by a polarization conversion device 410, is incident upon a polarization beam splitter (PBS) 411. One of the two mutually orthogonal polarization components of the optical signal is selected by the polarization beam splitter 411. The optical signal which has been selected is outputted to an optical coupler 412, and, after having been separated, is incident on the one hand upon a signal receiver, and on the other hand upon a photodetector 433.

A BPF 414 extracts a specified frequency component of the signal which is outputted from the photodetector 413 (for example half of its bit rate). Based upon information related to this frequency component which has thus been extracted, a control circuit 415 controls the polarization angle of the light which is outputted by the polarization conversion device 410 so that said frequency component which has been thus extracted attains a maximum.

Thus, when this is done, it is possible to compensate for the waveform deterioration due to DGD, and to reduce the deterioration of the transmission quality, by performing wave separation with the PBS 411 of only the optical signal component which is parallel (or is perpendicular) to the PSP of the optical transmission path, and by receiving it as a signal.

Since with this method only one of the two mutually orthogonal polarization components which have different propagation delays due to DGD is received as a signal, there is no restriction upon the amount of DGD which can be compensated. However, there is the question of controlling the polarization angle. Since the PSP of the optical transmission path varies along with time, the ratio of the intensities of the parallel component and the perpendicular component with respect to the PSP of the optical signal incident in the optical transmission path due to the optical signal receiver varies with the passage of time. Because of this, with this PMD compensator, when the optical signal intensity which is incident in the PSP parallel to the polarization component which is being received as a signal drops, then the intensity of the optical signal which is received drops, and transmission quality deterioration is consequently engendered.

Although this transmission quality deterioration is improved by controlling the polarization conversion device so as to receive the polarization component which is orthogonal to the polarization component which has been being received, it is not possible, when the control is being performed, to compensate the waveform deterioration due to DGD, so that at this time the transmission quality deteriorates remarkably.

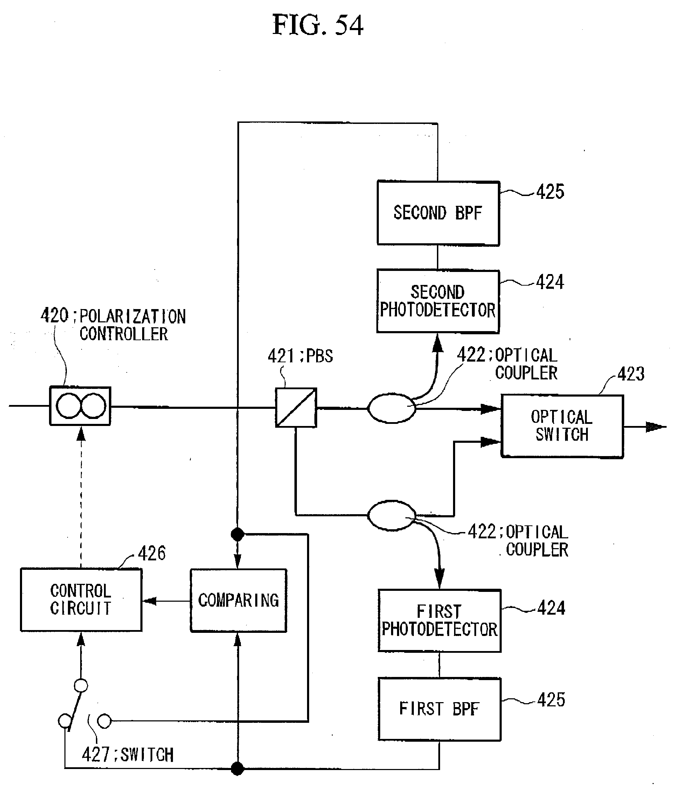

As for example disclosed in Japanese Patent Laying Open Publication 2000-356760, there has also been proposed a PMD compensator (hereinafter termed "prior art 3") which solves this problem, and the structure and operation of this device will now be explained with reference to FIG. 54.

An optical signal which is incident from an optical transmission path, after having been converted into any desired linear polarization by a polarization conversion device 420, is wave separated into two mutually orthogonal polarization components by a PBS 421. One of the two optical signals which have been wave separated out by the PBS 421 is wave separated by a first optical coupler 422, one of the resultant portions being incident upon an optical switch 423, while the other of the resultant portions is incident upon a first photodetector 424.

A first BPF 425 extracts a specified frequency component of the signal which is outputted from the first photodetector 424 (for example half of its bit rate).

The other one of the two optical signals which have been wave separated out by the PBS 421 is wave separated by a second optical coupler 422, one of the resultant portions being incident upon the optical switch 423, while the other of the resultant portions is incident upon a second photodetector 424. A second BPF 425 extracts a specified frequency component of the signal which is outputted from the second photodetector 424 (for example half of its bit rate).

By comparing together the intensities of the two frequency components which have been extracted by the first BPF 425 and by the second BPF 425, that polarization component the intensity of whose extracted frequency component is the greatest is selected by the optical switch 423, and is dispatched to the signal receiver.

Furthermore, a switch 427 is switched over based upon the results of this comparison, and that frequency component among the two extracted frequency components whose intensity is the greatest is inputted to a control circuit 426. The control circuit 426 controls the polarization angle of the output light of the polarization conversion device so that the intensity of the frequency component attains a maximum, based upon information related to the intensity of this frequency component.

Yet further, when the intensity of the optical signal which is incident in the PSP parallel to the polarization component which is being received drops, the optical switch 423 is changed over, and the other one of the polarization components which are being separated out by the PBS 421 is received.

By doing this, even if the PSP of the optical transmission path has changed along with time, it is possible to compensate for the waveform deterioration due to DGD, and thereby to reduce the deterioration of transmission quality.

The PMD characteristic of the installed fiber exhibits changes over the passage of time due to change of the stress which is imposed upon the optical fiber and due to changes of the temperature of the environment, and its DGD value also changes along with the passage of time. However, with the above described prior art 1, the compensation DGD amount is restricted by the DGD value which is imparted to the optical signal by the polarization dispersion compensation module 401. In other words, if the DGD value of the optical transmission path is not equal to the DGD value which is imparted by the polarization dispersion compensation module 401, transmission quality deterioration will be engendered in correspondence to the difference between these two DGD values. Accordingly, when the DGD value of the optical transmission path changes along with the passage of time and exceeds some threshold value, it becomes impossible to compensate for transmission quality deterioration due to DGD.

With the above described prior arts 2 and 3, DGD compensation is possible without any restriction upon the DGD compensation value. However, since the PSP of the installed fiber changes along with the passage of time, the ratio of the intensities of the component which is parallel and the component which is perpendicular with respect to PSP of the optical signal which is incident upon the optical transmission path from the optical signal transmitter also varies along with the passage of time. Due to this, with the above described prior art 2, when the intensity of the optical signal which is incident in PSP which is parallel to the polarization component which is being received drops, the intensity of the optical signal which is received becomes low, which entails transmission quality deterioration.

This transmission quality deterioration can be improved by controlling the polarization conversion device 410 so as to receive the polarization component which is orthogonal to the polarization component which has been received, but, since it is not possible to perform compensation for waveform deterioration due to DGD during this control, there is the problem that at this time the transmission quality deteriorates remarkably.

On the other hand, with the above described prior art 3, if the PSP has changed along with the passage of time, this situation is coped with by changing over the polarization component which is received, between the two mutually orthogonal polarization components which have been separated, using the optical switch 223. However, since due to the DGD the propagation delay of the optical signal for each polarization component is different, it is not possible to avoid generation of errors when changing over the optical switch 223. Furthermore, new problems also arise, in that the number of components which are required for manufacture of the polarization mode dispersion compensation device as a whole becomes greatly increased, and in that its control also becomes complicated.

Furthermore, with the prior art, although a beneficial effect can be obtained with regard to transmission quality deterioration due to first order PMD, it is not possible to compensate for transmission quality deterioration due to higher order PMD.

By higher order PMD is meant change of the DGD value which is dependent upon the wavelength, and change of the PSP dependent upon the wavelength. For example, as disclosed in H.Rosenfeld et al., OFC 2001, PD 27-1, 2001, along with increase of the bit rate of optical transmission systems, the optical spectrum width of the optical signal widens, and changes of the DGD value and of the PSP within the signal waveband become impossible to ignore. Due to this, with an ultra high speed optical transmission system, it is not only necessary to compensate for first order PMD, but for higher order PMD as well.

The present invention has been conceived in the light of the above described type of situation, and its objective is to provide a poiarization mode dispersion compensation method and a polarization mode dispersion compensation device, which can stably compensate for transmission quality deterioration due to first order PMD without restriction with respect to compensation DGD value, even in the case of a system in which the PSP of the optical transmission path varies along with the passage of time, and which furthermore can compensate for transmission quality deterioration due to higher order PMD.

### SUMMARY OF THE INVENTION

A first aspect of the present invention is a polarization mode dispersion compensation method in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, has sending said optical signal from said optical signal transmitter to said optical transmission path, separating from said optical signal which is propagated along said optical transmission path, the polarization component which is parallel to, or the polarization component which is perpendicular to, the principal state of polarization of said optical transmission path, compensating the group velocity dispersion at said polarization component which has thus been separated, and receiving by said optical signal receiver said optical signal which has been compensated.

A second aspect of the present invention is a polarization mode dispersion compensation method in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, has sending said optical signal from said optical signal transmitter to said optical transmission path, separating from said optical signal which is propagated along said optical transmission path, the polarization component which is parallel to, and the polarization component which is perpendicular to, the principal state of polarization of said optical transmission path, compensating the group velocity dispersion of said one polarization component which has thus been separated, and receiving by said optical signal receiver said optical signal which has been compensated.

A third aspect of the present invention is a polarization mode dispersion compensation method in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, has outputting said optical signal from said optical signal transmitter, receiving input of said optical signal, and converting said optical signal to circular polarization or to linear polarization, sending said optical signal which has been thus converted to said optical transmission path, a PMD medium which is connected to said optical transmission path is provided in advance at the signal reception side of said optical transmission path, separating the PSP of said optical transmission path and said PMD medium from the optical signal which has been propagated through said optical transmission path and said PMD medium, said optical transmission path and said PMD medium are made so that the principal axes of polarization (PSP) of said optical transmission path and said PMD medium are linearly polarized or circularly polarized, and the polarization component which is parallel to, or the polarization component which is perpendicular to, compensating the group velocity dispersion at said polarization component which has thus been separated, and receiving by said optical signal receiver said optical signal which has been compensated.

A fourth aspect of the present invention is a polarization mode dispersion compensation method in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, has outputting said optical signal from said optical signal transmitter, receiving input of said optical signal, and converting said optical signal is to circular polarization or to linear polarization, sending said optical signal which has been thus converted to said optical transmission path, a PMD medium which is connected to said optical transmission path is provided in advance at the signal reception side of said optical transmission path, separating the principal axes of polarization (PSP) of said optical transmission path and said PMD medium from the optical signal which has been propagated through said optical transmission path and said PMD medium, said optical transmission path and said PMD medium are made so that the PSP of said optical transmission path and said PMD medium are linearly polarized or circularly polarized, and the polarization component which is parallel to, and the polarization component which is perpendicular to, compensating the group velocity dispersion at said polarization component which has thus been separated, and receiving by said optical signal receiver said optical signal which has been compensated.

In the polarization mode dispersion compensation method, said polarization component which has been separated out from said optical signal may be controlled so that, when said polarization component has been converted into an electrical signal, the ratio of a specified frequency component with respect to the DC component becomes a maximum, and may be separated into a polarization component which is parallel to, and a polarization component which is perpendicular to, said principal state of polarization.

The polarization component of said optical signal which is parallel to, and the polarization component of said optical signal which is perpendicular to, said principal state of polarization (PSP) of said optical transmission path are converted into respective electrical signals, may also be controlled so that the intensities of specified frequency components become equal to one another, and may be separated into a polarization component which is parallel to, and a polarization component which is perpendicular to, said PSP.

The polarization component of said optical signal which is parallel to, and the polarization component of said optical signal which is perpendicular to, said principal state of poiaryzation (PSP) of said optical transmission path may be controlled so that the phase difference between said two parallel polarization component and perpendicular polarization component which are parallel to one another becomes a maximum or a minimum, and may be separated into a polarization component which is parallel to, and a polarization component which is perpendicular to, said PSP.

The polarization component of said optical signal which is parallel to, and the polarization component of said optical signal which is perpendicular to, said principal state of polarization (PSP) of said optical transmission path are converted into respective electrical signals, may also be controlled, after the respective high frequency components have been eliminated, so that the phase difference between said two parallel polarization component and perpendicular polarization component which are parallel to one another becomes a maximum or a minimum, and may be separated into polarization components which are parallel to, or polarization components which are perpendicular to, said PSP.

The polarization component of said optical signal which is parallel to, and the polarization component of said optical signal which is perpendicular to, said principal state of polarization (PSP) of said optical transmission path may also be controlled, after their respective signal patterns have been pattern converted according a specified rule, so that the phase difference between said two parallel polarization component and perpendicular polarization component which are parallel to one another becomes a maximum or a minimum, and may be separated into polarization components which are parallel to, or polarization components which are perpendicular to, said PSP.

The polarization mode dispersion compensation method may be allocating specified codes from said optical signal transmitter to said optical signal and sending them, receiving by said optical signal receiver said optical signal and detecting errors in said codes, and controlling the polarization components which are separated from said optical signal which is propagated along said optical transmission path, so that the number of errors which are detected by said optical signal receiver becomes a minimum.

The polarization mode dispersion compensation method may be allocating specified error correction codes from said optical signal transmitter to said optical signal and sending them, receiving by said optical signal receiver said optical signal and decoding said error correction codes and correcting it, and controlling the polarization components which are separated from said optical signal which is propagated along said optical transmission path, so that the number of errors which are corrected by said optical signal receiver becomes a minimum.

A fifth aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device provided upon said transmission path, has a polarization controller which converts the polarization state of the optical signal which has been outputted from said optical signal transmitter, a polarizer which separates out a specified polarization component from the optical signal which is outputted from said polarization controller, a waveform deterioration detector which detects waveform deterioration of the polarization component which has been separated out by said polarizes, a control device which controls said polarization controller so that the waveform deterioration which is detected by said waveform deterioration detector becomes a minimum, and an automatic dispersion compensator which compensates the group velocity dispersion of the polarization component which has been separated out by said polarizer.

A sixth aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device provided upon said transmission path, has a polarization controller which converts the polarization state of the optical signal which has been outputted from said optical signal transmitter, a polarizer which separates out a specified polarization component from the optical signal which is outputted from said polarization controller, a dispersion compensation module which compensates the group velocity dispersion of the polarization component which has been separated out by said polarizer, a waveform deterioration detector which detects waveform deterioration of the polarisation component which is outputted from said dispersion compensation module, and a control device which controls said polarization controller and said dispersion compensation module so that the waveform deterioration which is detected by said waveform deterioration detector becomes a minimum.

A seventh aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device, provided upon said transmission path, has a polarization controller which converts the polarization state of the optical signal which has been outputted from said optical signal transmitter, a principal state of polarization (PSP) detector which detects the PSP of said optical transmission path from the optical signal which is outputted from said polarization controller, a polarizer which separates out a specified polarization component from the optical signal which is outputted from said polarization controller, a control device which controls said polarization controller so that the PSP which has been detected by said PSP detector agrees with the polarization state which is separated by said polarizer, and an automatic dispersion compensator which compensates the group velocity dispersion of the polarization component which has been separated out by said polarizer.

A eighth aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device provided upon said transmission path, has a polarization controller which converts the polarization state of the optical signal which has been outputted from said optical signal transmitter, a Differential Group Delay (DGD) element which allocates a PMD to the optical signal which is outputted from said polarization controller, a polarizer which separates out a specified polarization component from the optical signal which is outputted from said DGD element, a waveform deterioration detector which detects waveform deterioration of the polarization component which has been separated out by said polarizer, a control device which controls said polarization controller so that the waveform deterioration which is detected by said waveform deterioration detector becomes a minimum, and an automatic dispersion compensator which compensates the group velocity dispersion of the polarization component which has been separated out by said polarizer.

The polarization mode dispersion compensation device may have a polarization setting device that sets the polarization state of the optical signal which is outputted from said optical signal transmitter to circular polarization or to linear polarization.

A ninth aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device provided upon said transmission path, has a polarization controller which converts the polarization state of the optical signal which has been outputted from said optical signal transmitter, a Differential Group Delay (DGD) element which allocates a PMD to the optical signal which is outputted from said polarization controller, a polarizer which separates out a specified polarization component from the optical signal which is outputted from said DGD element, a dispersion compensation module which compensates the group velocity dispersion of the polarization component which has been separated out by said polarizer, a waveform deterioration detector which detects waveform deterioration of the optical signal which is outputted from said dispersion compensation module, and a control device which controls said polarization controller and said dispersion compensation module so that the waveform deterioration which is detected by said waveform deterioration detector becomes a minimum.

The polarization mode dispersion compensation device may have a polarization setting device which sets the polarization state of the optical signal which is outputted from said optical signal transmitter to circular polarization or to linear polarization.

A tenth aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device provided upon said transmission path, has a polarization controller which converts the polarization state of the optical signal which has been outputted from said optical signal transmitter, a Differential Group Delay (DGD) element which allocates a PMD to the optical signal which is outputted from said polarization controller, a principal state of polarization (PSP) detector which detects the PSP of said optical transmission path and of said DGD element said from the optical signal which is outputted from said DGD element, a polarizer which separates out a specified polarization component from the optical signal which is outputted from said polarization controller, a control device which controls said polarization controller so that the PSP which has been detected by said PSP detector agrees with the polarization state which is separated by said polarizer, and an automatic dispersion compensator which compensates the group velocity dispersion of the polarization component which has been separated out by said polarizer.

The polarization mode dispersion compensation device may have a polarization setting device that sets the polarization state of the optical signal which is outputted from said optical signal transmitter to circular polarization or to linear polarization.

In the polarization mode dispersion compensation device, the waveform deterioration detector comprises an optical divider which divides the polarization components which have been separated by said polarization selection device, a photoelectric conversion device which converts one of the optical signals which have been divided by said optical divider into an electrical signal, a specified frequency detector which detects a specified frequency component of the electrical signal which has been converted by said photoelectric conversion device, and a DC component detector which detects the DC compuonent of the electrical signal which has been convened by said photoelectric conversion device, and said control device controls said polarization controller so that the ratio of said specified frequency component and said DC component becomes a maximum.

The waveform deterioration detector may also have an optical divider which divides the polarization components which have been separated by said polarization selection device, a photoelectric conversion device which converts one of the optical signals which have been divided by said optical divider into an electrical signal, an electrical signal divider which divides the electrical signal which has thus been converted by said photoelectric conversion device into two, two recognition circuits which recognize and regenerate the electrical signals which have been divided out by said electrical signal divider, an agreement decision circuit which decides whether or not the logical values of said two signals which have been respectively outputted by said two recognition circuits agree with one another, and a low frequency pass circuit which detects the low frequency component of the output signal of said agreement decision circuit, and said control device controls said polarization controller so that the output voltage of said low frequency pass circuit becomes a minimum.

The waveform deterioration detector may also be an optical divider which divides the polarization components which have been separated by said polarization selection device, a photoelectric conversion device which converts one of the optical signals which have been divided by said optical divider into an electrical signal, an electrical signal divider which divides the electrical signal which has thus been converted by said photoelectric conversion device into two signals, two recognition circuits which recognize and regenerate the electrical signals which have thus been divided out by said electrical signal divider, an agreement decision circuit which decides whether or not the logical values of said two signals which have been respectively outputted by said two recognition circuits agree with one another, and a pulse number detection circuit which integrates the number of pulses in the output signal of said agreement decision circuit and outputs a voltage which is proportional to this pulse number, and said control device controls said polarization controller so that the output voltage of said pulse number detection circuit becomes a minimum,

The waveform deterioration detector may also have an optical divider which divides the polarization components which have been separated by said polarization selection device, a photoelectric conversion device which converts one of the optical signals which have been divided by said optical divider into an electrical signal, an electrical signal divider which divides the electrical signal which has thus been converted by said photoelectric conversion device into (2×n) signals, (2×n) recognition circuits which recognize and regenerate the respective electrical signals which have been divided out by said electrical signal divider, n agreement decision circuits which decide whether or not the logical values of two signals which have been respectively outputted by two of the recognition circuits which are selected from said (2×n) recognition circuits agree with one another, n low frequency pass circuits which detect the low frequency components of the output signals of said n agreement decision circuits, and an addition circuit which adds together and outputs the output voltages of said n low frequency pass circuits, and said control device controls said polarization controller so that the output voltage of said addition circuit becomes a minimum.

The waveform deterioration detector may also have an optical divider which divides the polarization components which have been separated by said polarization selection device, a photoelectric conversion device which converts one of the optical signals which have been divided by said optical divider into an electrical signal, an electrical signal divider which divides the electrical signal which has thus been converted by said photoelectric conversion device into (2×n) signals, (2×n) recognition circuits which recognize and regenerate the respective electrical signals which have been divided out by said electrical signal divider, n agreement decision circuits which decide whether or not the logical values of two signals which have been respectively outputted by two of the recognition circuits which are selected from said (2×n) recognition circuits agree with one another, n pulse number detection circuits which integrate the numbers of pulses in the output signals of said n agreement decision circuits and output voltages which are proportional to these pulse numbers, and an addition circuit which adds together and outputs the output voltages of said n pulse number detection circuits, and said control device controls said polarization controller so that the output voltage of said addition circuit becomes a minimum.

The waveform deterioration detector may also have an optical divider which divides the polarization components which have been separated by said polarization selection device, a photoelectric conversion device which converts one of the optical signals which have been divided by said optical divider into an electrical signal, a first electrical signal divider which divides the electrical signal which has thus been converted by said photoelectric conversion device into n signals, n recognition circuits which recognize and regenerate the respective electrical signals which have been divided out by said first electrical signal divider, a second electrical signal divider which divides the output signal of one recognition circuit which has been selected from said n recognition circuits into (n-1) signals, (n-1) agreement decision circuits which decide whether or not the logical values of the (n-1) output signals of those (n-1) recognition circuits other than said one recognition circuit which has been selected and the logical values of the (n-1) output signals of said second electrical divider respectively agree with one another, (n-1) low frequency pass circuits which detect the low frequency components of the output signals of said (n-1) agreement decision circuits, and an addition circuit which adds together and outputs the output voltages of said (n-1) low frequency pass circuits, and said control device controls said polarization controller so that the output voltage of said addition circuit becomes a minimum.

The waveform deterioration detector may also have an optical divider which divides the polarization components which have been separated by said polarization selection device, a photoelectric conversion device which converts one of the optical signals which have been divided by said optical divider into an electrical signal, a first electrical signal divider which divides the electrical signal which has thus been converted by said photoelectric conversion device into n signals, n recognition circuits which recognize and regenerate the respective electrical signals which have been divided out by said first electrical signal divider, a second electrical signal divider which divides the output signal of one recognition circuit which has been selected from said n recognition circuits into (n-1) signals, (n-1) agreement decision circuits which decide whether or not the logical values of the (n-1) output signals of those (n-1) recognition circuits other than said one recognition circuit which has been selected and the logical values of the (n-1) output signals of said second electrical divider respectively agree with one another, (n-1) pulse number detection circuits which integrate the number of pulses in the output signals of said (n-1) agreement decision circuits and output voltages which are proportional to these pulse numbers, and an addition circuit which adds together and outputs the output voltages of said (n-1) pulse number detection circuits, and said control device controls said polarization controller so that the output voltage of said addition circuit becomes a minimum.

The waveform deterioration detector may also have an optical divider which divides the polarization components which have been separated by said polarization selection device; a photoelectric conversion device which converts one of the optical signals which have been divided by said optical divider into an electrical signal; a first electrical signal divider which divides the electrical signal which has thus been converted by said photoelectric conversion device into (m×n) signals; m functional block groups, each of which consists of n recognition circuits which recognize and regenerate the respective electrical signals which have been divided out by said first electrical signal divider, a second electrical signal divider which divides the output signal of one recognition circuit which has been selected from said n recognition circuits into (n-1) signals, (n-1) agreement decision circuits which respectively decide whether or not the logical values of the output signals from those (n-1) recognition circuits other than said recognition circuit which has thus been selected and the logical values of the respective (n-1) output signals of said second electrical signal divider agree with one another, and (n-1) low frequency pass circuits which detect the low frequency components of the output signals of said (n-1) agreement decision circuits; and an addition circuit which adds together and outputs the (m×(n-1)) output voltages which are outputted from said functional block groups, and said control device controls said polarization controller so that the output voltage of said addition circuit becomes a minimum.

The waveform deterioration detector may also have an optical divider which divides the polarization components which have been separated by said polarization selection device; a photoelectric conversion device which converts one of the optical signals which have been divided by said optical divider into an electrical signal; a first electrical signal divider which divides the electrical signal which has thus been converted by said photoelectric conversion device into (m×n) signals; m functional block groups, each of which consists of n recognition circuits which recognize and regenerate the respective electrical signals which have been divided out by said first electrical signal divider, a second electrical signal divider which divides the output signal of one recognition circuit which has been selected from said n recognition circuits into (n-1) signals, (n-1) agreement decision circuits which respectively decide whether or not the logical values of the output signals from those (n-1) recognition circuits other than said recognition circuit which has thus been selected and the logical values of the respective (n-1) output signals of said second electrical signal divider agree with one another, and (n-1) pulse number detection circuits which integrate the numbers of pulses in the output signals of said (n-1) agreement decision circuits and output voltages proportional to said numbers of pulses; and an addition circuit which adds together and outputs the (m×(n-1)) output voltages which are outputted from said functional block groups, and said control device controls said polarization controller so that the output voltage of said addition circuit becomes a minimum.

In the polarisation mode dispersion compensation device, the principal state of polarization (PSP) detector and the polarizer each may have a polarization separation device which separates the optical signal which is outputted from said polarization controller into two polarization components which are orthogonal to one another, an optical divider which divides one of the optical signals which are separated out by said polarization separation device, a first photoelectric conversion device which converts the other optical signal which is separated out by said polarization separation device into an electrical signal, a second photoelectric conversion device which converts one of the optical signals which are separated out by said optical divider into an electrical signal, a first specified frequency detector which detects a specified frequency component of the electrical signal which is converted by said first photoelectric conversion device, and a second specified frequency detector which detects a specified frequency component of the electrical signal which is converted by said second photoelectric conversion device, and said control device controls said polarization controller so that the intensities of the two frequency components which are detected by said specified frequency detector become equal to one another.

The principal state of polarization (PSP) detector and the polarizer each may also have a polarization separation device which separates the optical signal which is outputted from said polarization controller into two polarization components which are orthogonal to one another, an optical divider which divides one of the optical signals which are separated out by said polarization separation device, a first photoelectric conversion device which converts the other optical signal which is separated out by said polarization separation device into an electrical signal, a second photoelectric conversion device which converts one of the optical signals which are separated out by said optical divider into an electrical signal, and a phase comparison device which compares together the phase of the electrical signal which has been converted by said first photoelectric conversion device and the phase of the electrical signal which has been converted by said second photoelectric conversion device, and said control device controls said polarization controller so that the phase difference which is detected by said phase comparison device becomes a maximum or a minimum.

The principal state of polarization (PSP) detector and the polarizer each may also have a polarization separation device which separates the optical signal which is outputted from said polarization controller into two polarization components which are orthogonal to one another, an optical divider which divides one of the optical signals which are separated out by said polarization separation device, a first photoelectric conversion device which converts the other optical signal which is separated out by said polarization separation device into an electrical signal, a first band restriction device which eliminates the high frequency component from the electrical signal which has been converted by said first photoelectric conversion device, a second photoelectric conversion device which converts one of the optical signals which are separated out by said optical divider into an electrical signal, a second band restriction device which eliminates the high frequency component from the electrical signal which has been converted by said second photoelectric conversion device, and a phase comparison device which compares together the phase of the electrical signal from which the high frequency component has been eliminated by said first band restriction device and the phase of the electrical signal from which the high frequency component has been eliminated by said second band restriction device, and said control device controls said polarization controller so that the phase difference which is detected by said phase comparison device becomes a maximum or a minimum.

The principal state of polarization (PSP) detector and the polarizer each comprises a polarization separation device which separates the optical signal which is outputted from said polarization controller into two polarization components which are orthogonal to one another, an optical divider which divides one of the optical signals which are separated out by said polarization separation device, a first photoelectric conversion device which converts the other optical signal which is separated out by said polarization separation device into an electrical signal, a first signal processing device which performs pattern conversion upon the signal pattern of the electrical signal which has been converted by said first photoelectric conversion device according to a specified rule, a second photoelectric conversion device which converts one of the optical signals which are separated out by said optical divider into an electrical signal, a second signal processing device which performs pattern conversion upon the signal pattern of the electrical signal which has been converted by said second photoelectric conversion device according to a specified rule, and a phase comparison device which compares together the phase of the electrical signal upon which pattern conversion has been performed by said first signal processing device and the phase of the electrical signal upon which pattern conversion has been performed by said second signal processing device, and said control device controls said polarization controller so that the phase difference which is detected by said phase comparison device becomes a maximum or a minimum.

A eleventh aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device provided upon said transmission path, has a polarization controller which converts the polarization state of the optical signal which has been outputted from said optical signal transmitter, a polarizer which separates out a specified polarization component from the optical signal which is outputted from said polarization controller, a control device which controls said polarization controller so that the number of code errors which is detected by said optical signal receiver becomes a minimum, and an automatic dispersion compensator which compensates the group velocity dispersion of the polarization component which has been separated out by said polarizer.

A twelfth aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device provided upon said transmission path, has a polarization controller which converts the polarization state of the optical signal which has been outputted from said optical signal transmitter, a polarizer which separates out a specified polarization component from the optical signal which is outputted from said polarization controller, a dispersion compensation module which compensates the group velocity dispersion of the polarization component which has been separated out by said polarizer, and a control device which controls said polarization controller and said dispersion compensation module so that the number of code errors which is detected by said optical signal receiver becomes a minimum.

A thirteenth aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device provided upon said transmission path, has a polarization controller which converts the polarization state of the optical signal which has been outputted from said optical signal transmitter, a polarizer which separates out a specified polarization component from the optical signal which is outputted from said polarization controller, a control device which controls said polarization controller so that the number of errors which are corrected by said optical signal receiver becomes a minimum, and an automatic dispersion compensator which compensates the group velocity dispersion of the polarization component which has been separated out by said polarizer.

A fourteenth aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device provided upon said transmission path, has a polarization controller which converts the polarization state of the optical signal which has been outputted from said optical signal transmitter, a polarizer which separates out a specified polarization component from the optical signal which is outputted from said polarization controller, a dispersion compensation module which compensates the group velocity dispersion of the polarization component which has been separated out by said polarizer, and a control device which controls said polarization controller and said dispersion compensation module so that the number of errors which are corrected by said optical signal receiver becomes a minimum

A fifteenth aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device provided upon said transmission path, has a polarization controller which converts the polarization state of the optical signal which has been outputted from said optical signal transmitter, a polarizer which separates out a specified polarization component from the optical signal which is outputted from said polarization controller, a dispersion compensation module which compensates the group velocity dispersion of the polarization component which has been separated out by said polarizer; and wherein said optical signal receiver is endowed with a waveform deterioration detection function, and further comprises a control device which controls said polarization controller and said dispersion compensation module so that the waveform deterioration which is detected by said optical signal receiver becomes a minimum.

A sixteenth aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device provided upon said transmission path, has a polarization controller which converts the polarization state of the optical signal which has been outputted from said optical signal transmitter, a Differential Group Delay (DGD) element which allocates a PMD to the optical signal which is outputted from said polarization controller, a polarizer which separates out a specified polarization component from the optical signal which is outputted from said polarization controller, a control device which controls said polarization controller so that the number of code errors which is detected by said optical signal receiver becomes a minimum, and an automatic dispersion compensator which compensates the group velocity dispersion of the polarization component which has been separated out by said polarizer.

The polarization mode dispersion compensation device may have a polarization setting device which sets the polarization state of the optical signal which is outputted from said optical signal transmitter to circular polarization or to linear polarization.

A seventeenth aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device provided upon said transmission path, has a polarization controller which converts the polarization state of the optical signal which has been outputted from said optical signal transmitter, a Differential Group Delay (DGD) element which allocates a PMD to the optical signal which is outputted from said polarization controller, a polarizer which separates out a specified polarization component from the optical signal which is outputted from said polarization controller, a dispersion compensation module which compensates the group velocity dispersion of the polarization component which has been separated out by said polarizer, and a control device which controls said polarization controller and said dispersion compensation module so that the number of code errors which is detected by said optical signal receiver becomes a minimum.

The polarization mode dispersion compensation device may have a polarization setting device that sets the polarization state of the optical signal which is outputted from said optical signal transmitter to circular polarization or to linear polarization.

A eighteenth aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device provided upon said transmission path has a polarization controller which converts the polarization state of the optical signal which has been outputted from said optical signal transmitter, a Differential Group Delay (DGD) element which allocates a PMD to the optical signal which is outputted from said polarization controller, a polarizer which separates out a specified polarization component from the optical signal which is outputted from said DGD element, a control device which controls said polarization controller so that the number of errors which are corrected by said optical signal receiver becomes a minimum, and an automatic dispersion compensator which compensates the group velocity dispersion of the polarization component which has been separated out by said polarizer.

The polarization mode dispersion compensation device may have a polarization setting device that sets the polarization state of the optical signal which is outputted from said optical signal transmitter to circular polarization or to linear polarization.

A ninteenth aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device provided upon said transmission path, has a polarization controller which converts the polarization state of the optical signal which has been outputted from said optical signal transmitter, a Differential Group Delay (DGD) element which allocates a PMD to the optical signal which is outputted from said polarization controller, a polarizer which separates out a specified polarization component from the optical signal which is outputted from said DGD element, a dispersion compensation module which compensates the group velocity dispersion of the polarization component which has been separated out by said polarizer, a control device which controls said polarization controller and said dispersion compensation-module so that the number of errors which are corrected by said optical signal receiver becomes a minimum.

The polarization mode dispersion compensation device may have a polarization setting device which sets the polarization state of the optical signal which is outputted from said optical signal transmitter to circular polarization or to linear polarization.

A twentieth aspect of the present invention is a polarization mode dispersion compensation device in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, the polarization mode dispersion compensation device provided upon said transmission path, has a polarization controller which converts the polarization state of the optical signal which has been outputted from said optical signal transmitter, a Differential Group Delay (DGD) element which allocates a PMD to the optical signal which is outputted from said polarization controller, a polarizes which separates out a specified polarization component from the optical signal which is outputted from said DGD element, and a dispersion compensation module which compensates the group velocity dispersion of the polarization component which has been separated out by said polarizer, and wherein said optical signal receiver is endowed with a waveform deterioration detection function, and further comprises a control device which controls said polarization controller and said dispersion compensation module so that the waveform deterioration which is detected by said optical detector becomes a minimum.

The polarization mode dispersion compensation device may have a polarization setting device which sets the polarization state of the optical signal which is outputted from said optical signal transmitter to circular polarization or to linear polarization.

The optical signal receiver which is endowed with said waveform deterioration detection function may have a photoelectric conversion device which converts the optical signal into an electrical signal, an electrical signal divider which divides the electrical signal which has thus been converted by said photoelectric conversion device into three signals, three recognition circuits which recognize and regenerate the three electrical signals which have thus been divided out by said electrical signal divider, an agreement decision circuit which decides whether or not the logical values of two of said recognition circuits which have been selected from said three recognition circuits agree with one another, and a low frequency pass circuit which detects the low frequency component of the output signal of said agreement decision circuit, said control device controls said polarization controller and said dispersion compensation module so that the output voltage of said low frequency pass circuit becomes a minimum, and the one said recognition circuit other than said two recognition circuits which have been selected outputs recognition data to the outside.

The optical signal receiver which is endowed with said waveform deterioration detection function may also have a photoelectric conversion device which converts the optical signal into an electrical signal, an electrical signal divider which divides the electrical signal which has thus been converted by said photoelectric conversion device into three signals, three recognition circuits which recognize and regenerate the three electrical signals which have thus been divided out by said electrical signal divider, an agreement decision circuit which decides whether or not the logical values of two of said recognition circuits which have been selected from said three recognition circuits agree with one another, and a pulse number detection circuit which integrates the number of pulses in the output signal of said agreement decision circuit and outputs a voltage proportional to said number of pulses, said control device controls said polarization controller and said dispersion compensation module so that the output voltage of said pulse number detection circuit becomes a minimum, and the one said recognition circuit other than said two recognition circuits which have been selected outputs recognition data to the outside.

The optical signal receiver which is endowed with said waveform deterioration detection function may also have a photoelectric conversion device which converts the optical signal into an electrical signal, an electrical signal divider which divides the electrical signal which has thus been converted by said photoelectric conversion device into ((2×n)+1) signals, ((2×n)+3,) recognition circuits which recognize and regenerate the respective electrical signals which have been divided out by said electrical signal divider, n agreement decision circuits which extract (2×n) of said recognition circuits from said ((2×n)+1) recognition circuits and decide whether or not the logical values of two signals which have been respectively outputted by two of the recognition circuits which are further selected from said (2×n) recognition circuits which have been extracted agree with one another, n low frequency pass circuits which detect the low frequency components of the output signals of said n agreement decision circuits, and an addition circuit which adds together and outputs the output voltages of said n low frequency pass circuits, and said control device controls said polarization controller and said dispersion compensation module so that the output voltage of said addition circuit becomes a minimum, and the one said recognition circuit other than said (2×n) recognition circuits which have been extracted outputs recognition data to the outside.

The optical signal receiver which is endowed with said waveform deterioration detection function may also have a photoelectric conversion device which converts the optical signal into an electrical signal, an electrical signal divider which divides the electrical signal which has thus been converted by said photoelectric conversion device into ((2×n)+1) signals, ((2×n)+1) recognition circuits which recognize and regenerate the respective electrical signals which have been divided out by said electrical signal divider, n agreement decision circuits which extract (2×n) of said recognition circuits from said ((2×n)+1) recognition circuits and decide whether or not the logical values of two signals which have been respectively outputted by two of the recognition circuits which are further selected from said (2×n) recognition circuits which have been extracted agree with one another, n pulse number detection circuits which integrate the numbers of pulses in the output signals of said n agreement decision circuits and output voltages proportional to said numbers of pulses, and an addition circuit which adds together and outputs the output voltages of said n pulse number detection circuits, and said control device controls said polarization controller and said dispersion compensation module so that the output voltage of said addition circuit becomes a minimum, and the one said recognition circuit other than said (2×n) recognition circuits which have been extracted outputs recognition data to the outside.

The optical signal receiver which is endowed with said waveform deterioration detection function may also have a photoelectric conversion device which converts the optical signal into an electrical signal, a first electrical signal divider which divides the electrical signal which has thus been converted by said photoelectric conversion device into n signals, n recognition circuits which recognize and regenerate the respective electrical signals which have been divided out by said first electrical signal divider, a second electrical signal divider which divides the output signal of a one of said recognition circuits which has been selected from said n recognition circuits into n signals, (n-1) agreement decision circuits which decide whether or not the logical values of the output signals of the (n-1) recognition circuits other than said one recognition circuit which has thus been selected and the logical values of the (n-1) output signals which have been selected from said n output signals of said second electrical signal divider respectively agree with one another, (n-1) low frequency pass circuits which detect the low frequency components of the output signals of said (n-1) agreement decision circuits, and an addition circuit which adds together and outputs the output voltages of said (n-1) low frequency pass circuits, said control device controls said polarization controller and said dispersion compensation module so that the output voltage of said addition circuit becomes a minimum, and said second electrical signal divider outputs to thc outside the one said output signal other than said (n-1) output signals which have been selected.

The optical signal receiver which is endowed with said waveform deterioration detection function may also have a photoelectric conversion device which converts the optical signal into an electrical signal, a first electrical signal divider which divides the electrical signal which has thus been converted by said photoelectric conversion device into n signals, n recognition circuits which recognize and regenerate the respective electrical signals which have been divided out by said first electrical signal divider, a second electrical signal divider which divides the output signal of a one of said recognition circuits which has been selected from said n recognition circuits into n signals, (n-1) agreement decision circuits which decide whether or not the logical values of the output signals of the (n-1) recognition circuits other than said one recognition circuit which has thus been selected and the logical values of the (n-1) output signals which have been selected from said n output signals of said second electrical signal divider respectively agree with one another, (n-1) pulse number detection circuits which integrate the numbers of pulses in the output signals of said (n-1) agreement decision circuits and output voltages proportional to said numbers of pulses, and an addition circuit which adds together and outputs the output voltages of said (n-1) pulse number detection circuits, and said control device controls said polarization controller and said dispersion compensation module so that the output voltage of said addition circuit becomes a minimum, and said second electrical signal divider outputs a further one output signal to the outside.

In the polarization mode dispersion compensation device, the optical signal transmitter may output an optical signal to which has been allocated a return-to-zero format in which the phase of the light has been reversed for each bit.

The optical signal transmitter may also output an optical signal to which has been allocated a return-to-zero format in which the phase of the light has been reversed for each pulse.

In the polarization mode dispersion compensation device, the automatic dispersion compensator may have a dispersion compensation module which compensates for dispersion in said optical signal which has been inputted, a second waveform deterioration detector which is connected in series with said dispersion compensation module, and which detects waveform deterioration of the optical signal which has passed through said dispersion compensation module, and a second control device which controls said dispersion compensation module so that the waveform deterioration which has been detected by said second waveform deterioration deteccor becomes a minimum.

The automatic dispersion compensator may also have a dispersion compensation module which compensates for dispersion of said optical signal which has been inputted, a dispersion detector which is connected in series with said dispersion compensation module, and which detects the cumulative dispersion value of the optical signal which has passed through said dispersion compensation module, and a second control device which controls said dispersion compensation module so that said cumulative dispersion value which has been detected by said dispersion detector becomes zero.

In the polarization mode dispersion compensation device, the optical signal transmitter sends an optical signal in which a plurality of wavelengths have been modulated with the same signal pattern, and the dispersion detector may have an optical separation device which separates the optical signal into a plurality of different wavelengths, a plurality of photoelectric conversion devices which convert said plurality of optical signals which have been separated out into respective electrical signals, and a phase comparison device which detects the phase differences between the electrical signals which have thus been converted by said photoelectric conversion devices.

### BRIEF DESCRIPTION OF THE DRAWINGS

FIG. 1 is a block diagram showing the structure of a polarization mode dispersion compensation device according to a first preferred embodiment of the present invention.
FIG. 2 is a block diagram showing the structure of a polarization mode dispersion compensation device according to a second preferred embodiment.
FIG. 3 is a block diagram showing the structure of a polarization mode dispersion compensation device according to a third preferred embodiment.
FIG. 4 is a block diagram showing the structure of a polarization mode dispersion compensation device according to a fourth preferred embodiment.
FIG. 5 is a block diagram showing the detailed structure of a Differential Group Delay (DGD) element of this fourth preferred embodiment.
FIG. 6 is a schematic figure showing the operation for PMD vector control by this polarization mode dispersion compensation device according to the fourth preferred embodiment.
FIG 7 is a block diagram showing the structure of a polarization mode dispersion compensation device according to a fifth preferred embodiment.
FIG. 8 is a block diagram showing the structure of a polarization mode dispersion compensation device according to a sixth preferred embodiment.
FIG. 9 is a block diagram showing the structure of a polarization mode dispersion compensation device according to a seventh preferred embodiment.
FIG. 10 is a block diagram showing the structure of a polarization mode dispersion compensation device according to an eighth preferred embodiment,
FIG. 11 is a block diagram showing the structure of a polarization mode dispersion compensation device according to a ninth preferred embodiment,
FIG. 12 is a block diagram showing the structure of a polarization mode dispersion compensation device according to a tenth preferred embodiment.
FIG. 13 is a block diagram showing the structure of a polarization mode dispersion compensation device according to an eleventh preferred embodiment.
FIG. 14 is a block diagram showing the structure of a polarization mode dispersion compensation device according to a twelfth preferred embodiment.
FIG. 15 is a block diagram showing the structure of a polarization mode dispersion compensation device according to a thirteenth preferred embodiment.
FIG. 16 is a block diagram showing the structure of a polarization mode dispersion compensation device according to a fourteenth preferred embodiment.
FIG. 17 is a block diagram showing the structure of a polarization mode dispersion compensation device according to a fifteenth preferred embodiment.
FIG. 18 is a block diagram showing the structure of a polarization mode dispersion compensation device according to a sixteenth preferred embodiment.
FIG. 19 is a block diagram showing the structure of a polarization mode dispersion compensation device according to a seventeenth preferred embodiment.
FIG. 20 is a block diagram showing the structure of a polarization mode dispersion compensation device according to an eighteenth preferred embodiment.
FIG. 21 is a block diagram showing the structure of a polarization mode dispersion compensation device according to a nineteenth preferred embodiment.
FIG. 22 is a block diagram showing the structure of a polarization mode dispersion compensation device according to a twentieth preferred embodiment.
FIG. 23 is a block diagram showing the structure of a polarization mode dispersion compensation device according to a twenty-first preferred embodiment.
FIG. 24 is a waveform signal diagram of an electrical signal from which a high frequency component has been eliminated by a band restriction means of this polarization mode dispersion compensation device according to the twenty-first preferred embodiment.
FIG. 25 is a block diagram showing the structure of a polarization mode dispersion compensation device according to a twenty-second preferred embodiment.
FIG. 26 is a waveform signal diagram which has been pattern converted by a signal processing means of this polarization mode dispersion compensation device according to the twenty-second preferred embodiment.
FIG. 27 is a block diagram showing the structure of a polarization mode dispersion compensation device according to a twenty-third preferred embodiment.
FIG. 28 is a block diagram showing the structure of a polarization mode dispersion compensation device according to a twenty-fourth preferred embodiment.
FIG. 29 is a block diagram showing the structure of a polarization mode dispersion compensation device according to a twenty-fifth preferred embodiment.
FIG. 30 is a block diagram showing the structure of a polarization mode dispersion compensation device according to a twenty-sixth preferred embodiment.
FIG. 31 is a block diagram showing the structure of a polarization mode dispersion compensation device according to a twenty-seventh preferred embodiment.
FIG. 32 is a block diagram showing the structure of a polarization mode dispersion compensation device according to a twenty-eighth preferred embodiment
FIG, 33 is a block diagram showing the structure of a polarization mode dispersion compensation device according to a twenty-ninth preferred embodiment.
FIG. 34 is a block diagram showing the structure of a polarization mode dispersion compensation device according to a thirtieth preferred embodiment.
FIG. 35 is a block diagram showing the structure of a polarization mode dispersion compensation device according to a thirty-first preferred embodiment.
FIG. 36 is a block diagram showing the structure of a polarization mode dispersion compensation device according to a thirty-second preferred embodiment.

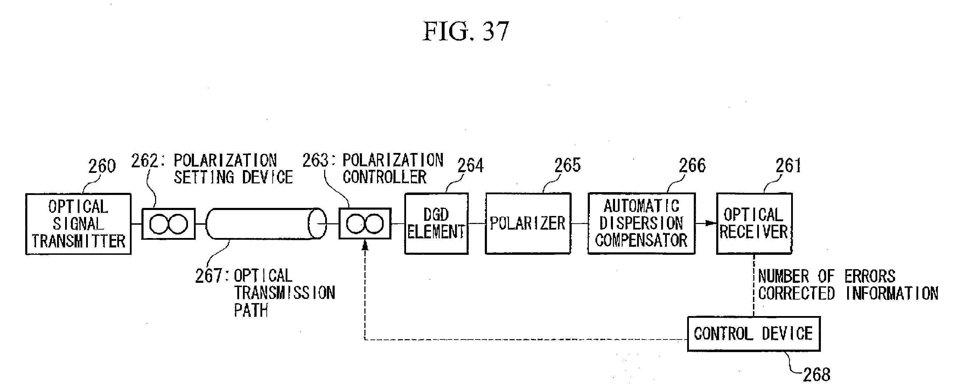

FIG. 37 is a block diagram showing the structure of a polarization mode dispersion compensation device according to a thirty-third preferred embodiment.
FIG. 38 is a block diagram showing the structure of a polarization mode dispersion compensation device according to a thirty-fourth preferred embodiment.
FIG. 39 is a block diagram showing the structure of a polarization mode dispersion compensation device according to a thirty-fifth preferred embodiment.
FIG. 40 is a block diagram showing the structure of a polarization mode dispersion compensation device according to a thirty-sixth preferred embodiment.
FIG. 41 is a block diagram showing the structure of a polarization mode dispersion compensation device according to a thirty-seventh preferred embodiment.
FIG. 42 is a block diagram showing the structure of a polarization mode dispersion compensation device according to thirty-eighth preferred embodiment.
FIG. 43 is a block diagram showing the structure of a polarization mode dispersion compensation device according to a thirty-ninth preferred embodiment.
FIG. 44 is a block diagram showing the structure of a polarization mode dispersion compensation device according to a fortieth preferred embodiment.
FIG. 45 is a block diagram showing the structure of a polarization mode dispersion compensation device according to a forty-first preferred embodiment.
FIG. 46 is a block diagram showing the structure of a polarization mode dispersion compensation device according to a forty-second preferred embodiment.
FIG- 47 is a block diagram showing the structure of a polarization mode dispersion compensation device according to a forty-third preferred embodiment,
FIG. 48 is a block diagram showing the structure of a polarization mode dispersion compensation device according to a forty-fifth preferred embodiment.
FIG. 49 is a block diagram showing the structure of a polarization mode dispersion compensation device according to a forty-sixth preferred embodiment.
FIG. 50 is a block diagram showing the structure of a polarization mode dispersion compensation device according to a forty-seventh preferred embodiment.
FIG. 51 is a schematic figure showing the operation for transmission and reception of signal light at two different wavelengths by this polarization mode dispersion compensation device according to the forty-seventh preferred embodiment.
FIG. 52 is a block diagram showing the structure of a polarization mode dispersion compensation device according to a first prior art.
FIG. 53 is a block diagram showing the structure of a polarization mode dispersion compensation device according to a second prior art.
FIG. 54 is a block diagram showing the structure of a polarization mode dispersion compensation device according to a third prior art.

### DESCRIPTION OF THE PREFERRED EMBODIMENTS

In the following, various preferred embodiments of the polarization mode dispersion compensation device of the present invention will be explained with reference to the appended drawings. It should be understood that, in the explanation of each of the following preferred embodiments, explanation of structural elements which have already been described in connection with a previously described preferred embodiment will be curtailed; in other words, the explanation of each structural element which is given in connection with the earliest preferred embodiment in which said element appears will be taken as applying to all the subsequent preferred embodiments in which it appears.

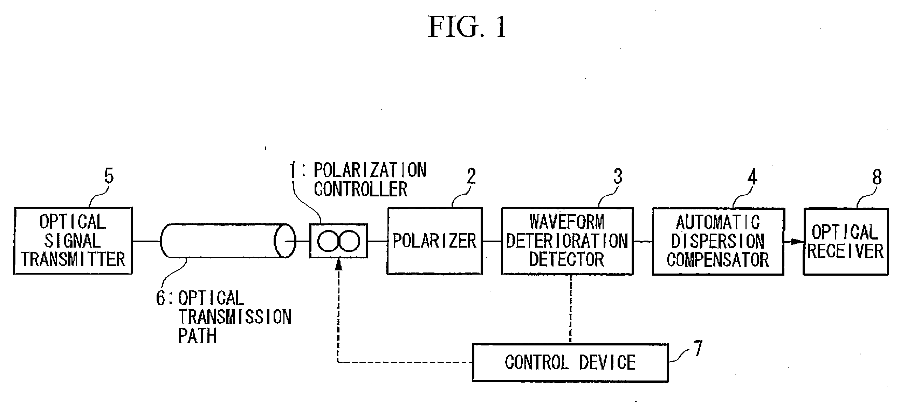

FIG. 1 is a block diagram showing the structure of a polarization mode dispersion compensation device according to the first preferred embodiment of the present invention. This first preferred embodiment polarization mode dispersion compensation device is made up from a polarization controller 1 which is disposed at the signal reception side of an optical transmission system, a polarizer 2 which separates out a specified polarization component, a waveform deterioration detector 3 which detects waveform deterioration of the optical-signal which has been separated by the polarizer 2, and an automatic dispersion compensator 4.

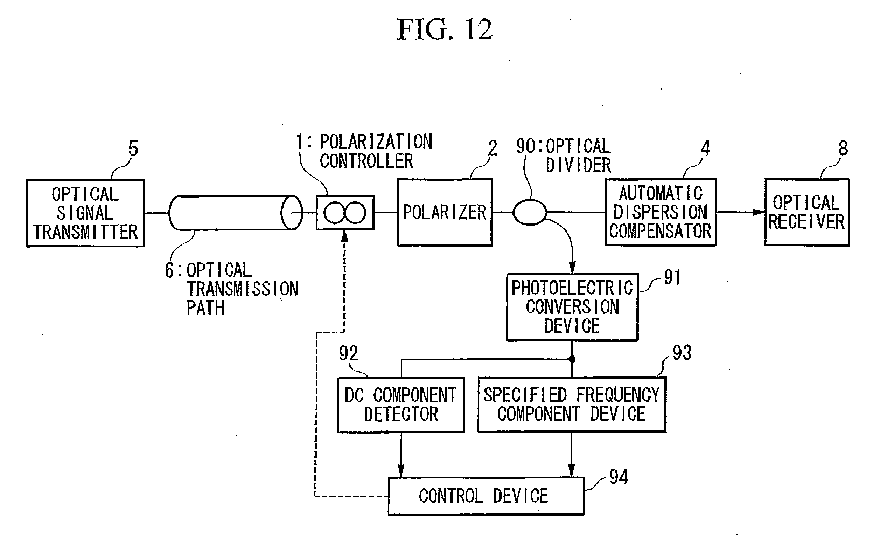

It should be understood that an appropriate example of a polarization controller or a polarization modulator may be employed as the above described polarization controller 1. Furthermore, an appropriate example of a PBS or a polarizer (a linear polarization element) may be employed as the polarizes 2 Yet further, it is desirable for the above described waveform deterioration detector 3 to be made from a photodiode which constitutes the photoelectric conversion device 91 shown in FIG. 12 etc., an LPF (Low Pass Filter) and a voltage sensor which constitute the DC component detector 92, a BPF (Band Pass Filter) which constitutes the specified frequency component detector 93, and a RF power detector and a voltage sensor. And an appropriate example of a variable dispersion compensator such as a fiber grating or the like may be employed as the automatic dispersion compensator 4.

The optical signal which is dispatched by an optical signal transmitter 5 is propagated along an optical transmission path 6, and, after having passed through the polarization controller 1, is inputted to the polarizer 2. A specified polarization component which is to become the optical signal which is to be transmitted to the optical receiver 8 is separated out from the optical signal which has thus been inputted to the polarizer 2. When this optical signal which has been thus separated out is inputted to the waveform detector 3, deterioration of its waveform is detected. Based upon the information related to waveform deterioration which has thus been detected, a control device 7 controls the polarization detector so that this waveform deterioration becomes a minimum.

Since the waveform deterioration of the optical signal which has thus been separated out attains a minimum in the state in which the polarizer 2 is separating out the polarization component which is parallel (or perpendicular) to the main axis of polarization of the optical transmission path 6, the control device 7 is able, by controlling the polarization controller 1 so that the waveform deterioration attains a minimum to separate out only the optical signal component which has arrived by propagation along the main axis of polarization of the optical transmission path 6, and it is thus able to compensate for transmission quality deterioration due to DGD,

The effect of change (PCD) dependent upon the DGD wavelength becomes equivalent to group velocity dispersion, if attention is paid only to one of the two main propagation axes which are orthogonal to one another. Due to this, the optical signal which has been separated out by the polarizer 2 is the optical signal which has arrived by propagation along one of the main propagation axes, and it is possible simultaneously to implement PCD compensation by compensating the group velocity dispersion with the automatic dispersion compensator 4. It should be understood that the automatic dispersion compensator 4 may also be disposed in the stage before the polarization controller 1.

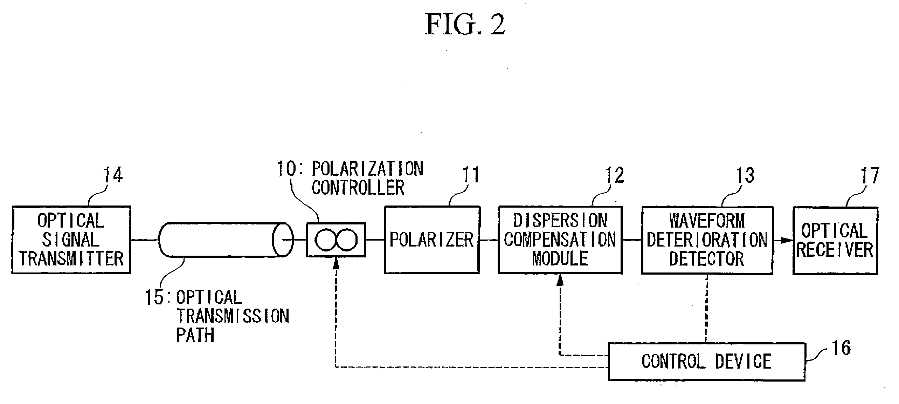

FIG 2 is a block diagram showing the structure of a polarization mode dispersion compensation device according to a second preferred embodiment of the present invention. This polarization mode dispersion compensation device of the second preferred embodiment is made up from a polarization controller 10 which is disposed at the signal reception side of the optical transmission system, a polarizer 11 which separates out a specified polarization component, a dispersion compensation module 12 which compensates dispersion of the optical signal which has been separated by the polarizer 11, and a waveform deterioration detector 13 which detects waveform deterioration of the optical signal whose dispersion has been compensated by the dispersion compensation module 12.

The signal light which is received from an optical signal transmitter 14 is propagated along an optical transmission path 15, and, after it has passed through the polarization controller 10, a specified polarization component is separated out therefrom by the polarizer 11, so that it becomes an optical signal which is dispatched to an optical receiver 17. After the optical signal which has been separated has been compensated by the dispersion compensation module 12, it is inputted into the waveform deterioration detector 13 in which its waveform deterioration is detected. A control device 16 controls the polarization controller 10 and the dispersion compensation module 12 so as to minimize the waveform deterioration. The waveform deterioration of the optical signal which has thus been separated out attains a minimum in the state in which the polarizer 11 is separating out the polarization component which is parallel (or perpendicular) to the main axis of polarization of the optical transmission path 15. Due to this, by exerting control so that the waveform deterioration is minimal, it is possible to separate out only the optical signal component which has arrived by propagation along the main axis of polarization of the optical transmission path 15, and it is thus possible to compensate for transmission quality deterioration due to DGD.

The effect of change (PCD) dependent upon the DGD wavelength becomes equivalent to group velocity dispersion, if attention is paid to only one of the two main propagation axes which are orthogonal to one another. Due to this, the optical signal which has been separated out by the polarizer 11 is the optical signal which has arrived by propagation along one of the main propagation axes, and it is possible simultaneously to implement PCD compensation by compensating the group velocity dispersion with the dispersion compensation module 12. It should be understood that the dispersion compensation module 12 may also be disposed in the stage before the polarization controller 10. Furthermore, since the variation of the group velocity dispersion is comparatively slow speed as compared to variation of the polarization mode dispersion, it would alse be acceptable to implement control of the dispersion compensation module at a slower speed than that of the polarization controller 10.

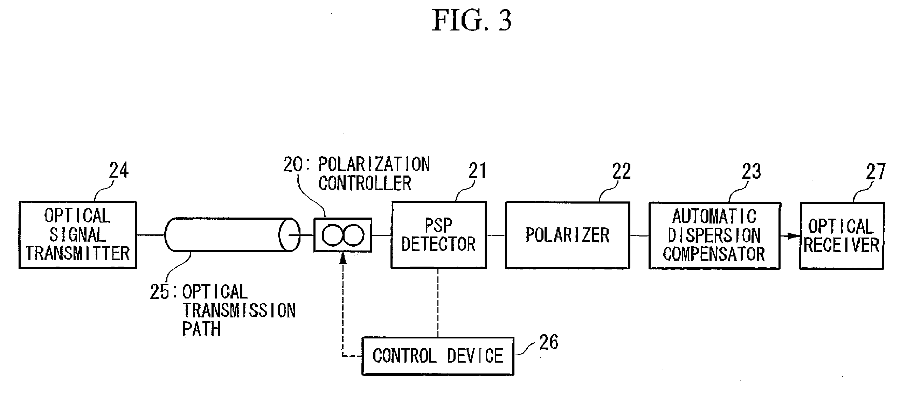

FIG. 3 is a block diagram showing the structure of a polarization mode dispersion compensation device according to a third preferred embodiment of the present invention. This polarization mode dispersion compensation device of the third preferred embodiment is made up from a polarization controller 20 which is disposed at the signal reception side of the optical transmission system, a principal state of polarization (PSP) detector 21 which detects PSP, a polarizer 22 which separates out a specified polarization component, and an automatic dispersion compensator 23.

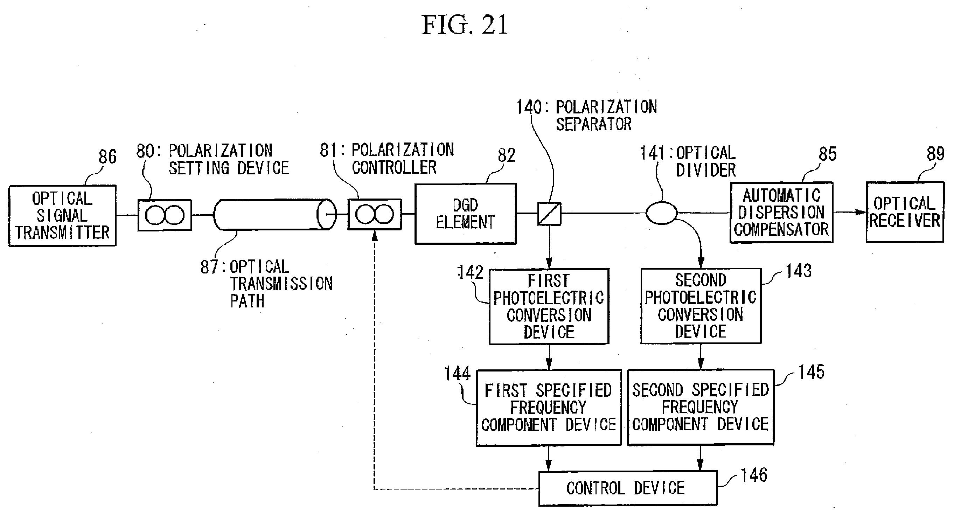

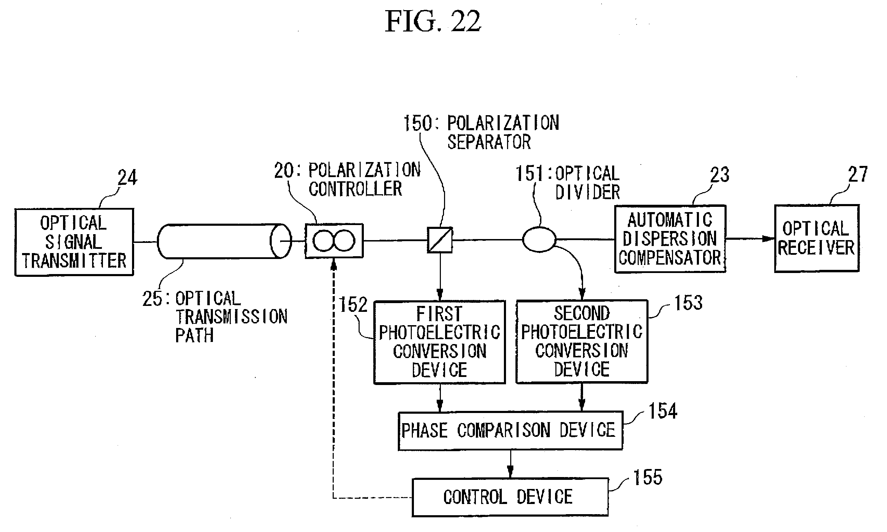

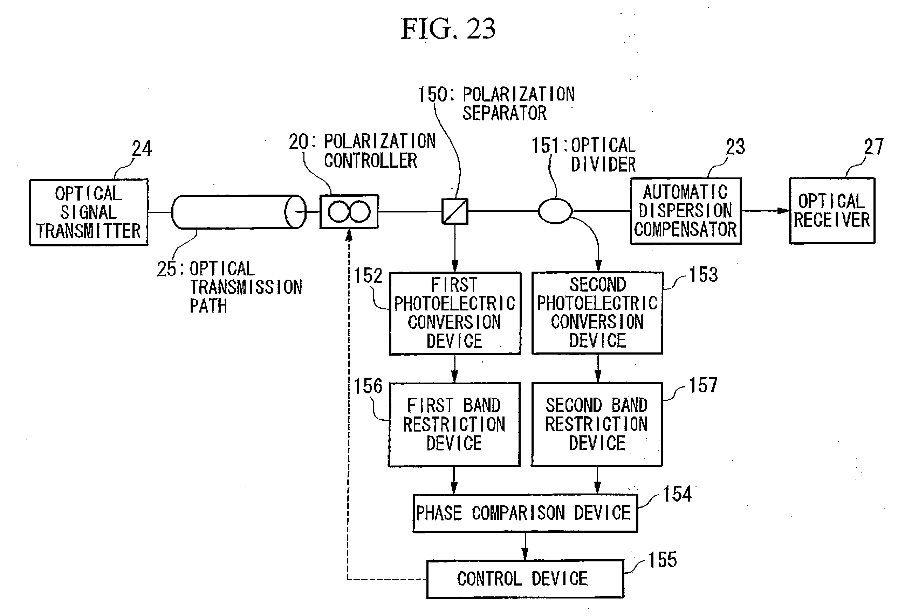

It should be understood that, as shown in FIG. 21, the above described principal state of polarization (PSP) detector 21 may be made from the first and second photoelectric conversion devices 142 and 143 which are photodiodes and the first and second specified frequency component detectors 144 and 145 which are BPFs (Band Pass Filters), and from an RF power detector and a voltage measuring device. Furthermore, as shown in FIG. 22, it may be made from the first and second photoelectric conversion devices 152 and 153 which are photodiodes and the phase comparator 154 which is a phase comparison device. Yet further, as shown in FIG. 23, it may be made from the first and second photoelectric conversion devices 152 and 153 which are photodiodes, the first and second band restriction means 156 and 157 which are LPFs, and the phase comparator 154 which is a phase comparison means.

The optical signal which is dispatched from an optical signal transmitter 24 is propagated along an optical transmission path 25, and, after having passed through the polarization controller 20, is inputted to the principal state of polarization detector 21. The optical signal which has passed through the principal state of polarization detector 21 is inputted to the polarizer 22, and a specified polarization component is separated out therefrom by this polarizer 22, so that it becomes an optical signal which is dispatched to an optical receiver 27. A control device 26 controls the polarization controller 20 so that the PSP which is detected by the principal stale of polarization detector 21 becomes parallel (or perpendicular) to the polarization component which is separated out by the polarizer 22,

In this manner, it is possible to separate out only the optical signal component which has arrived by propagation along the main axis of polarization of the optical transmission path 25, and it is thus possible to compensate for transmission quality deterioration due to DGD.

The effect of change (PCD) dependent upon the DGD wavelength becomes equivalent to group velocity dispersion, if as described above attention is paid to only one of the two main propagation axes which are orthogonal to one another. Due to this, the optical signal which has been separated out by the polarizer 22 is the optical signal which has arrived by propagation along one of the main propagation axes, and it is possible simultaneously to implement PCD compensation by compensating the group velocity dispersion with the automatic dispersion compensator 23, It should be understood that the automatic dispersion compensator 23 may also be disposed in the stage before the polarization controller 20.

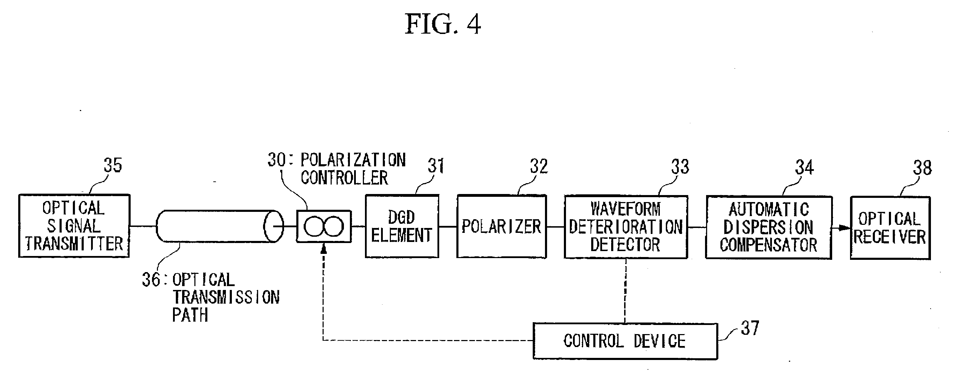

FIG. 4 is a block diagram showing the Structure of a polarization mode dispersion compensation device according to a fourth preferred embodiment of the present invention. This polarization mode dispersion compensation device of the fourth preferred embodiment is made up from a polarization controller 30 which is disposed at the signal reception side of the optical transmission system, a DGD element 31 which compensates for PMD, a polarizer 32 which separates out a specified polarization component, a waveform deterioration detector 33 which detects waveform deterioration of the optical signal which has been separated out by the polarizer 32, and an automatic dispersion compensator 34.

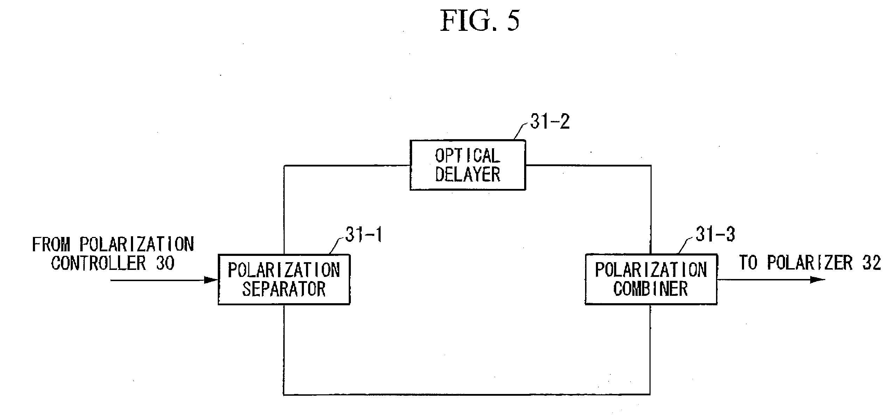

It should be understood that it is desirable for the DGD element 31 to be made from a polarization separator 31-1, an optical delayer 31-2, and a polarization combiner 31-3, as shown in FIG. 5.

The optical signal which is received from an optical signal transmitter 35 is propagated along an optical transmission path 36, and, after it has passed through the polarization controller 30, it is inputted to the DGD element 31. The DGD element 31 compensates the PMD for the optical signal which has been inputted, and outputs it to the polarizer 32. A specified polarization component is separated out by the polarizer 32 from this optical signal whose PMD has been compensated, and the resulting optical signal is dispatched to the optical receiver 38. When the waveform deterioration detector 33 inputs the optical signal which has been separated out, it detects the waveform deterioration thereof, and, based upon information related to this waveform deterioration, the control device 37 controls the polarization controller 30 so as to minimize this waveform deterioration,

In this manner, the control device 26 changes the directions of the PMD vectors of the optical transmission path 36 and of the DGD element 31 by changing the polarization state of the optical signal with the polarization controller 30, and thus it is possible to control the overall PMD vector of the optical transmission path 36 and of the DGD element 31.

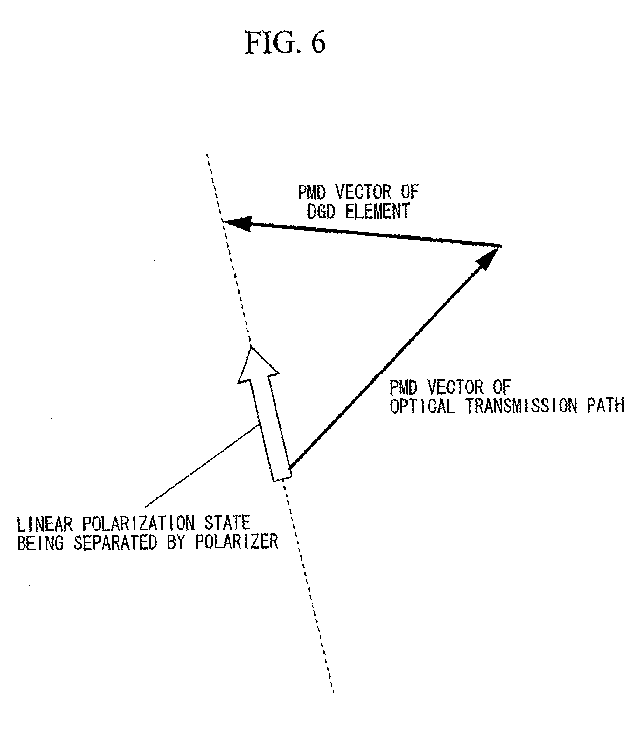

FIG. 6 shows in schematic form an example of this operation of PMD vector control. When the overall PSP of the optical transmission path 36 and of the DGD element 31 which is separated by the polarizer 32 becomes parallel (or perpendicular) to the linear polarization state (or the circular polarization state), the waveform deterioration of the optical signal becomes a minimum.

Due to this, by the control device 37 controlling the polarization controller 30 so that the waveform deterioration becomes a minimum, it is possible to separate out only the optical signal component which has arrived by propagation in the overall PSP of the optical transmission path 36 and of the DGD element 31, so that it is possible to compensate for the transmission quality deterioration due to DGD,

Furthermore, even if the PSP of the optical transmission path 36 changes along with the passage of time, the overall PSP of the optical transmission path 36 and of the DGD element 31 is controlled to be parallel (or perpendicular) to the polarization state which is separated by the polarizer 32. Accordingly, if the polarizer 32 is separating out the linear polarization component, by setting the optical signal which is dispatched to circular polarization, the power which is inputted in the PSP in which the polarization component which is received is being propagated is always kept constant, and therefore it becomes possible to perform PMD compensation in a stable manner.

The effect of change (PCD) dependent upon the DGD wavelength becomes equivalent to group velocity dispersion, if attention is paid to only one of the two principal states of polarization which are orthogonal to one another, as described above. Due to this, the optical signal which has been separated out by the polarizer 32 is the optical signal which has arrived by propagation in one of the PSP, and it is possible simultaneously to implement PCD compensation by compensating the group velocity dispersion with the automatic dispersion compensator 34. It should be understood that the automatic dispersion compensator 34 may also be disposed in the stage before the polarization controller 30.

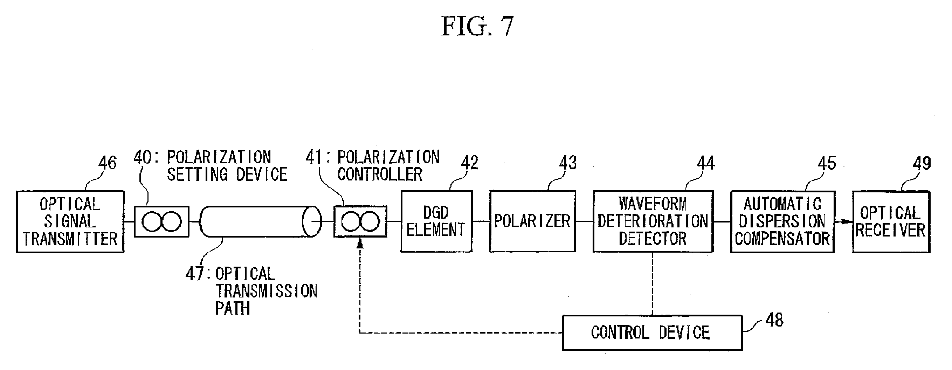

FIG. 7 is a block diagram showing the structure of a polarization mode dispersion compensation device according to a fifth preferred embodiment of the present invention. This polarization mode dispersion compensation device of the fifth preferred embodiment is made up from a polarization setting device 40 which is provided upon the signal dispatch side of an optical transmission system, a polarization controller 41 which is provided at the signal reception side, a DGD element 42 which compensates for PMD, a polarizer 43 which separates out a specified polarization component, a waveform deterioration detector 44 which detects waveform deterioration of the optical signal which has been separated out by the polarizer 43, and an automatic dispersion compensator 45.

It should be understood that it is possible to apply a polarization controller which is the same as the above described polarization controller 1 for the above described polarization setting device 40; or it is possible to utilize an appropriate polarization modulator by applying passive control thereof.

The optical signal which is being dispatched from the optical signal transmitter 46 is set to circular polarization (or to linear polarization) by the polarization setting device 40, and is incident upon the optical transmission path 47. This optical signal which is propagated along the optical transmission path 47, after having passed through the polarization controller 41, is inputted to a DGD element 42. This DGD element 42 compensates the PMD for the optical signal which has been inputted to it, and outputs the result to the polarizer 43. A specified polarization component is separated out by the polarizer 43 from this optical signal which has been compensated for PDM, and the resulting optical signal is dispatched to the optical receiver 49. When this optical signal which has been thus separated out is inputted to the waveform deterioration detector 44, its waveform deterioration is detected, and, based upon information related to this waveform deterioration, a control device 48 controls the polarization controller 41 so as to bring this waveform deterioration to a minimum.

In this manner, by changing the polarization state of the optical signal with the polarization controller 41, the control device 48 is able to change the direction of the PMD vectors of the optical transmission path 47 and the DGD element 42, and is thereby able to control the overall PMD vector of the optical transmission path 47 and the DGD element 42.

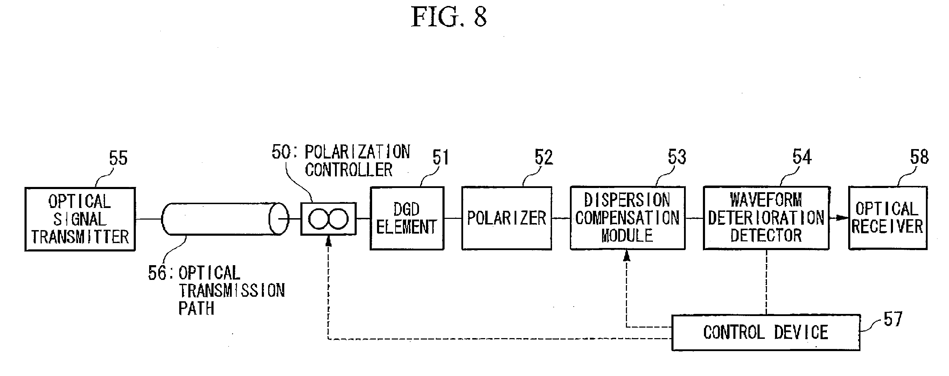

FIG. 8 is a block diagram showing the structure of a polarization mode dispersion compensation device according to a sixth preferred embodiment of the present invention This polarization mode dispersion compensation device of the sixth preferred embodiment is made up from a polarization controller 50 which is disposed at the signal reception side of the optical transmission system, a DGD element 51 which compensates for PMD, a polarizer 52 which separates out a specified polarization component, a dispersion compensation module which compensates the dispersion in the optical signal which has been separated out by the polarizer 52, and a waveform deterioration detector 54 which detects waveform deterioration of the optical signal which has been dispersion compensated by the dispersion compensation module 53.

The optical signal which is received from an optical signal transmitter 55 is propagated along an optical transmission path 56, and, after it has passed through the polarization controller 50, it is inputted to the DGD element 51. The DGD element 51 compensates the PMD for the optical signal which has been inputted, and outputs it to the polarizer 52. A specified polarization component is separated out by the polarizer 52 frown this optical signal whose PMD has been compensated, and the resulting optical signal is dispatched to the optical receiver 58. After the dispersion of this optical signal which has been separated out has been compensated by the dispersion compensation module 53, it is inputted to the waveform deterioration detection device 54, and the waveform deterioration thereof is detected. The control device 57 controls the polarization controller 50 and the dispersion compensation module 53 so as to bring this waveform deterioration to a minimum.

In this manner, by changing the polarization state of the optical signal with the polarization controller 50, the control device 57 is able to change the direction of the PMD vectors of the optical transmission path 56 and the DGD element 51, and is thereby able to control the overall PMD vector of the optical transmission path 56 and the DGD element 51 If the overall PSP of the optical transmission path 56 and the DGD element 51 is parallel (or is perpendicular) to the polarization state which is being separated out by the polarizer 52, then the waveform deterioration of the optical signal will become a minimum. Due to this, by controlling the waveform deterioration so that it becomes a minimum, it is possible to separate out only the optical signal component which has arrived by propagation in the overall PSP of the optical transmission path 56 and the DGD element 51, and it is possible to compensate for the transmission quality deterioration due to DGD.

Furthermore, even if the PSP of the optical transmission path 56 changes along with the passage of time, the overall PSP of the optical transmission path 56 and of the DGD element 51 is controlled to be parallel (or perpendicular) to the polarization state which is being separated out by the polarizer 52. The optical signal which has been separated out by the polarizer 52 is the optical signal which has arrived by propagation in one of the PSP, and it is possible simultaneously to implement PCD compensation by compensating the group velocity dispersion with the dispersion compensation module 53. It should be understood that the dispersion compensation module 53 may also be disposed in the stage before the polarization controller 50. Furthermore, since the variation of the group velocity dispersion is comparatively slow speed as compared to the speed of variation of the polarization mode dispersion, it would alse be acceptable to implement control of the dispersion compensation module 53 at a slower speed than that of the polarization controller 50.

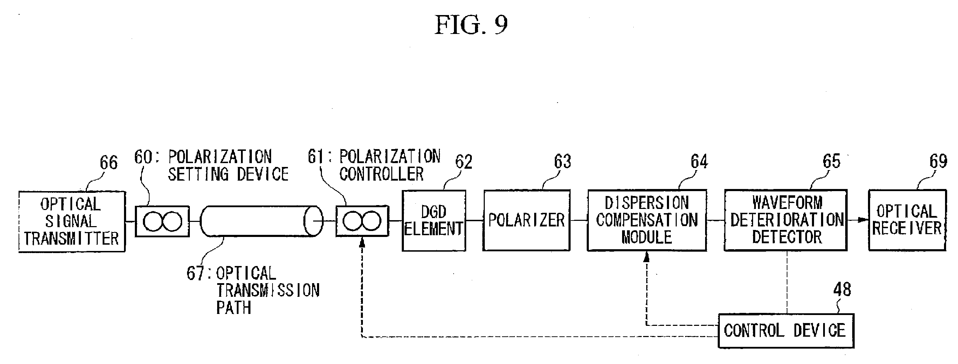

FIG. 9 is a block diagram showing the structure of a polarization mode dispersion compensation device according to a seventh preferred embodiment of the present invention. This polarization mode dispersion compensation device of the seventh preferred embodiment is made up from a polarization setting device 60 which is disposed at the signal dispatch side of the optical transmission system, a polarization controller 6] which is disposed at the signal reception side of the optical transmission system, a DGD element 62 which compensates for PMD, a polarizer 63 which separates out a specified polarization component, a dispersion compensation module 64 which compensates for the dispersion of the optical signal which has been separated out by the polarizer 63, and a waveform deterioration detector 65 which detects waveform deterioration of the optical signal whose dispersion has been compensated by the dispersion compensation module 64.

The optical signal which has been dispatched by an optical signal transmitter 66 is set to circular polarization (or to linear polarization) by the polarization setting device 60, and is then incident into the optical transmission path 67. After this optical signal has been propagated along the optical transmission path 67, and it has passed through the polarization controller 61, it is inputted to the DGD element 62. The DGD element 62 compensates the PMD for the optical signal which has been inputted, and outputs it to the polarizer 63. A specified polarization component is separated out by the polarizer 63 from this optical signal whose PMD has been compensated, and the resulting optical signal is dispatched to the optical receiver 69. After the dispersion in the optical signal which has thus been separated out is compensated by the dispersion compensation module 64, it is inputted to the waveform deterioration detector 64 and its waveform deterioration is detected. And the control device 68 controls the polarization controller 61 and the dispersion compensation module 64 so as to bring this waveform deterioration to a minimum.

In this manner, by changing the polarization state of the optical signal with the polarization controller 61, the control device 68 is able to change the direction of the PMD vectors of the optical transmission path 67 and the DGD element 62, and is thereby able to control the overall PMD vector of the optical transmission path 67 and the DGD element 62. If the overall PSP of the optical transmission path 67 and the DGD element 62 is parallel (or is perpendicular) to the linear polarization state (or to the circular polarization state) which is being separated out by the polarizer 63, then the waveform deterioration of the optical signal will become a minimum. Due to this, by controlling the waveform deterioration so that it becomes a minimum, it is possible to separate cut only the optical signal component which has arrived by propagation in the overall PSP of the optical transmission path 67 and the DGD element 62, and it is possible to compensate for the transmission quality deterioration due to DGD.

Even if the PSP of the optical transmission path 67 changes along with the passage of time, since the overall PSP of the optical transmission path 67 and of the DGD element 62 is controlled to be parallel (or perpendicular) to the polarization state which is separated by the polarizer 63, accordingly, if the polarizer 63 is separating out the linear polarization component, by setting the optical signal which is dispatched to circular polarization, the power which is inputted in the PSP in which the polarization component which is being received is being propagated is always kept constant, and therefore it becomes possible to perform PMD compensation in a stable manner. The optical signal which has been separated out by the polarizer 63 is the optical signal which has arrived by propagation in one of the PSP, and it is possible simultaneously to implement PCD compensation by compensating the group velocity dispersion with the dispersion compensation module 64. It should be understood that the dispersion compensation module 64 may also be disposed in the stage before the polarization controller 61. Furthermore, since the variation of the group velocity dispersion is comparatively slow speed as compared to the speed of variation of the polarization mode dispersion, it would alse be acceptable to implement control of the dispersion compensation module 64 at a slower speed than that of the polarization controller 61.

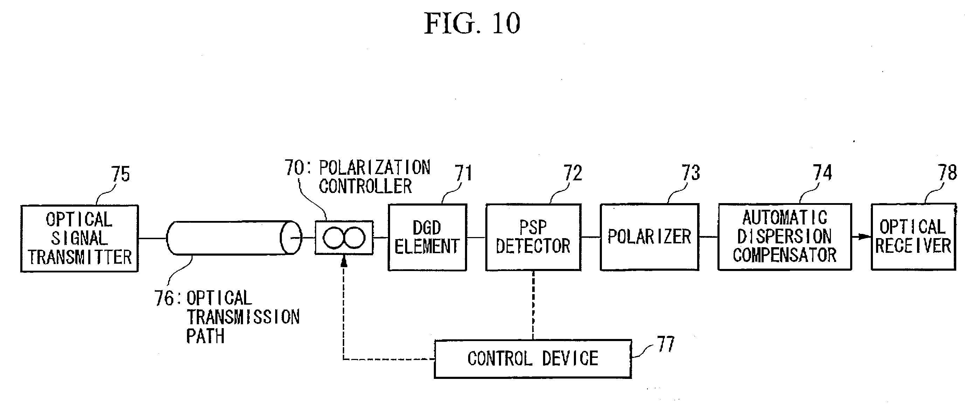

FIG. 10 is a block diagram showing the structure of a polarization mode dispersion compensation device according to an eighth preferred embodiment of the present invention. This polarization mode dispersion compensation device of the eighth preferred embodiment is made up from a polarization controller 70 which is disposed at the signal reception side of the optical transmission system, a DGD element 71 which compensates for PMD, a principal state of polarization (PSP detector 72 which detects the principal state of polarization, a polarizer 73 which separates out a specified polarization component, and an automatic dispersion compensator 74.

The optical signal which is received from an optical signal transmitter 75 is propagated along an optical transmission path 76, and, after it has passed through the polarization controller 70, it is inputted to the DGD element 71. The DGD element 71 compensates the PMD for the optical signal which has been inputted, and outputs it to the PSP detector 72. After the PSP of this optical signal whose PMD has been compensated has been detected by the PSP detector 72, it is inputted to the polarizes 73, which separates out a specified polarization component, and dispatches the resulting optical signal to the optical receiver 78. The control device 77 controls the polarization controller 70 so that the overall principal state of polarization of the optical transmission path 76 and the DGD element 71 which is detected by the PSP detector 72 is parallel (or is perpendicular) to the polarization state which is being separated out by the polarizer 73.

In this manner, by changing the polarization state of the optical signal with the polarization controller 70, the control device 77 is able to change the direction of the PMD vectors of the optical transmission path 76 and the DGD element 71, and is thereby able to control the overall PMD vector of the optical transmission path 76 and the DGD element 71.

Furthermore, if the overall PSP of the optical transmission path 76 and the DGD element 71 is parallel (or is perpendicular) to the polarization state which is being separated out by the polarizer 73, then the waveform deterioration of the optical signal will become a minimum. Accordingly, by separating out only the optical signal component which has arrived by propagation in the overall PSP of the optical transmission path 76 and the DGD element 71, it is possible to compensate for the transmission quality deterioration due to DGD.

Yet further, even if the PSP of the optical transmission path 76 changes along with the passage of time, since the overall PSP of the optical transmission path 76 and of the DGD element 71 is controlled to be parallel (or to be perpendicular) to the polarization state which is being separated out by the polarizer 73, therefore it becomes possible to perform PMD compensation in a stable manner.

The effect of change (PCD) dependent upon the DGD wavelength becomes equivalent to group velocity dispersion, if attention is paid to only one of the two principal states of polarization which are orthogonal to one another. Due to this, the optical signal which has been separated out by the polarizer 73 is the optical signal which has arrived by propagation in one of the PSF, and it is possible simultaneously to implement PCD compensation by compensating the group velocity dispersion with the automatic dispersion compensator 74. It should be understood that the automatic dispersion compensator 74 may also be disposed in the stage before the polarization controller 70.

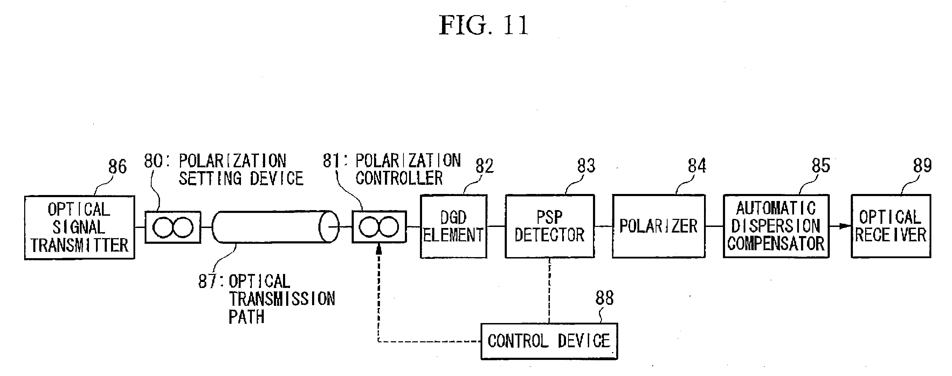

FIG. 11 is a block diagram showing the structure of a polarization mode dispersion compensation device according to a ninth preferred embodiment of the present invention. This polarization mode dispersion compensation device of the ninth preferred embodiment is made up from a polarization setting device 80 which is disposed at the signal dispatch side of the optical transmission system, a polarization controller 81 which is disposed at its signal reception side, a DGD element 82 which compensates for PMD, a PSP detector 83 which detects the PSP, a polarizer 84 which separates out a specified polarization component, and an automatic dispersion compensator 85.

The optical signal which is dispatched from an optical signal transmitter 86 is set to circular polarization (or to linear polarization) by the polarization setting device 80, and is incident upon an optical transmission path 87. This optical signal is propagated along the optical transmission path 87, and, after it has passed through the polarization controller 81, it is inputted to the DGD element 82. The DGD element 82 compensates the PMD for the optical signal which has been inputted, and outputs it to the PSP detector 83. After the PSP of this optical signal whose PMD has been compensated has been detected by the PSP detector 83, it is inputted to the polarizer 84, which separates out a specified linear polarization component (or a circular polarization component) and dispatches the resulting optical signal to the optical receiver 89. The control device 88 controls the polarization controller 81 so that the overall principal state of polarization of the optical transmission path 87 and the DGD element 82 Which is detected by the PSP detector 83 is parallel (or is perpendicular) to the polarization state which is being separated out by the polarizer 84.

In this manner, by changing the polarization state of the optical signal with the polarization controller 81, the control device 88 is able to change the direction of the PMD vectors of the optical transmission path 87 and-the DGD element 82, and is thereby able to control the overall PMD vector of the optical transmission path 87 and the DGD element 82.

Furthermore, if the overall PSP of the optical transmission path 87 and the DGD clement 82 is parallel (or is perpendicular) to the linear polarization state (or to the circular polarization state) which is being separated out by the polarizer 84, then the waveform detexioration of the optical signal will become a minimum. Accordingly, by separating out only the optical signal component which has arrived by propagation in the overall PSP of the optical transmission path 87 and the DGD element 82, it is possible to compensate for the transmission quality deterioration due to DGD.

Yet further, even if the PSP of the optical transmission path 87 changes along with the passage of time, since the overall PSP of the optical transmission path 87 and of the DGD element 82 is controlled to be parallel (or to be perpendicular) to the polarization state which is being separated out by the polarizer 84, therefore, if the linear polarization component is separated out by the polarizer 84, by setting the optical signal which is being dispatched to circular polarization, it becomes possible to maintain the power which is being inputted in the PSP in which the polarization component which is being received is being propagated always constant, and it becomes possible to perform PMD compensation in a stable manner.

The effect of change (PCD) dependent upon the DGD wavelength becomes equivalent to group velocity dispersion, if attention is paid to only one of the two principal states of polarization which are orthogonal to one another. Due to this, the optical signal which has been separated out by the polarizer 84 is the optical signal which has arrived by propagation in one of the principal states of polarization PSP, and it is possible simultaneously to implement PCD compensation by compensating the group velocity dispersion with the automatic dispersion compensator 85. It should be understood that the automatic dispersion compensator 85 may also be disposed in the stage before the polarization controller 81.

FIG. 12 is a block diagram showing the structure of a polarization mode dispersion compensation device according to a tenth preferred embodiment of the present invention In this polarization mode dispersion compensation device of the tenth preferred embodiment, the above described waveform deterioration detector 3 is made up from an optical divider 90, a photoelectric conversion device 91, a DC component detector 92, a specified frequency component detector 93, and a control device 94. The optical signal which has been separated out by the above described polarizer 2 is wave separated by the optical divider 90, and one of the resultant optical signals is inputted to the automatic dispersion compensator 4, while the other one thereof is inputted to the photoelectric conversion device 91. The optical signal which has been inputted to the photoelectric conversion device 91 is converted thereby to an electrical signal, and then the DC component of this electrical signal which has thus been converted and a specifed frequency component thereof (for example, 1/2 its bit rate) are respectively detected by the DC component detector 92 and the specified frequency component detector 93. And, based upon information related to this DC component and the specified frequency component, the control device 94 controls the polarization control device 1 so that the ratio of the intensity of the specified frequency component with respect to the intensity of the DC component which has been detected attains a maximum.

Since the ratio of the intensities of the DC component and of the specified frequency component attains its maximum when the waveform deterioration due to PMD attains its minimum, it is possible for the polarizer 2 to separate out the polarization component which is parallel to the principal state of polarization (PSP) of the optical transmission path 6 by performing control so that the ratio of the intensities of the DC component and of the specified frequency component attains its maximum.

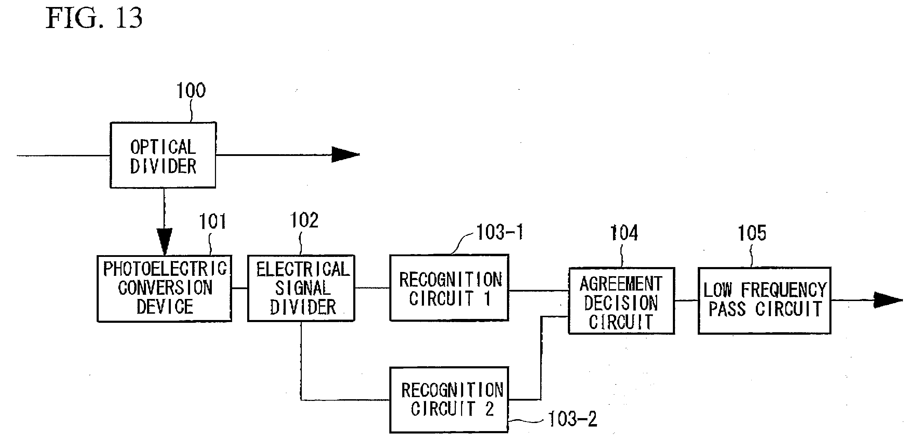

FIG. 13 is a block diagram showing the structure of a polarization mode dispersion compensation device according to an eleventh preferred embodiment of the present invention. In this polarization mode dispersion compensation device of the eleventh preferred embodiment, the above described waveform deterioration detector is made up from an optical divider 100, a photoelectric conversion device 101, an electrical signal divider 102, two recognition circuits 103-1 and 103-2, an agreement decision circuit 104, and a low frequency pass circuit 105.

The optical signal which has been outputted from the above described polarizer or the above described dispersion compensation module is wave separated by the optical divider 100, and one of the resultant optical signals is inputted to the optical signal receiver, while the other one thereof is inputted to the photoelectric conversion device 101. The optical signal which has been inputted to the photoelectric conversion device 101 is converted thereby to an electrical signal, and then is divided by the electrical signal divider 102, the two resultant electrical signals then being respectively inputted to the recognition circuits 103-1 and 103-2 One of these two recognition circuits 103-1 and 103-2 is set to a recognition level which is higher than a suitable recognition level, while the other of these two recognition circuits is set to a recognition level which is lower than that suitable recognition level. When the intensity of signal '1' becomes low due to waveform deterioration, then recognition is performed by the recognition circuit which has the high recognition level, and the output signals of the two recognition circuits come to be in disagreement with one another. Furthermore, if the intensity of signal '0' should become high, then again the output signals of the two recognition circuits come not to agree with one another. If the input signals to the agreement decision circuit 104 from the two recognition circuits 103-1 and 103-2 do not agree with one another, then the agreement decision circuit 104 outputs a high level signal.

When the waveform deterioration becomes high, a large number of disagreements between the decisions of the two recognition circuits 103-1 and 103-2 occurs, and the proportion of high level signals which are outputted by the agreement decision circuit 104 becomes high. The intensity of the low frequency component which has been extracted by the low frequency pass circuit from the output signal of the agreement decision circuit 104 becomes great in proportion to the rate of high level signals which are outputted from this agreement decision circuit 104, in other words, becomes great in proportion to the waveform deterioration. Accordingly, it is possible to minimize the waveform deterioration due to PMD by the above described control circuit controlling the polarization conversion means so that the output voltage of the low frequency pass circuit 105 attains a minimum, and the above described polarizer is able to separate out the polarization component which is parallel to the PSP of the above described optical transmission path. Furthermore, by controlling the above described dispersion compensation module in the same manner, the above described control circuit is able to minimize the waveform deterioration due to group velocity dispersion.

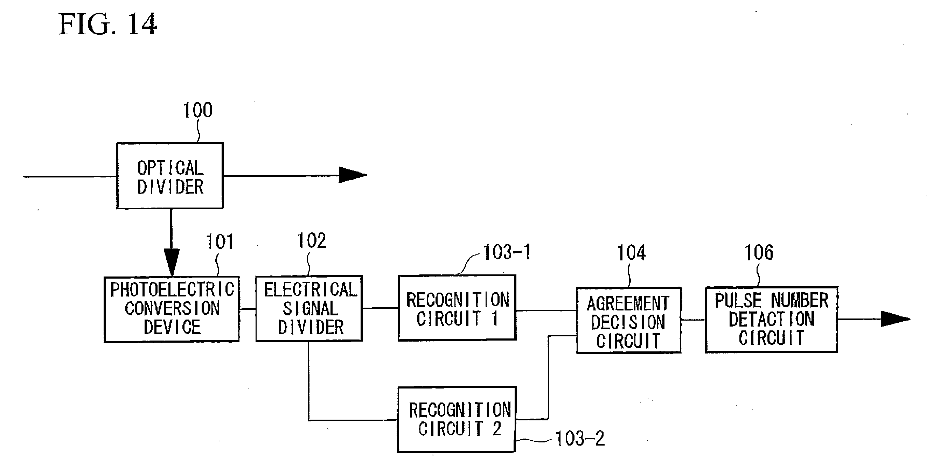

FIG. 14 is a block diagram showing the structure of a polarization mode dispersion compensation device according to a twelfth preferred embodiment of the present invention. This polarization mode dispersion compensation device of the twelfth preferred embodiment has the same basic structure as the polarization mode dispersion compensation device of the above described eleventh preferred embodiment, except that it is distinguished therefrom in that, instead of the low frequency pass circuit 105 of that eleventh preferred embodiment, there is utilized a pulse number detection circuit 106. In this case it is possible to detect waveform deterioration by detecting the number of pulses in the output signal of the agreement decision circuit 104, even if the number of disagreements is extremely small, in other words if the degree of waveform deterioration is small.

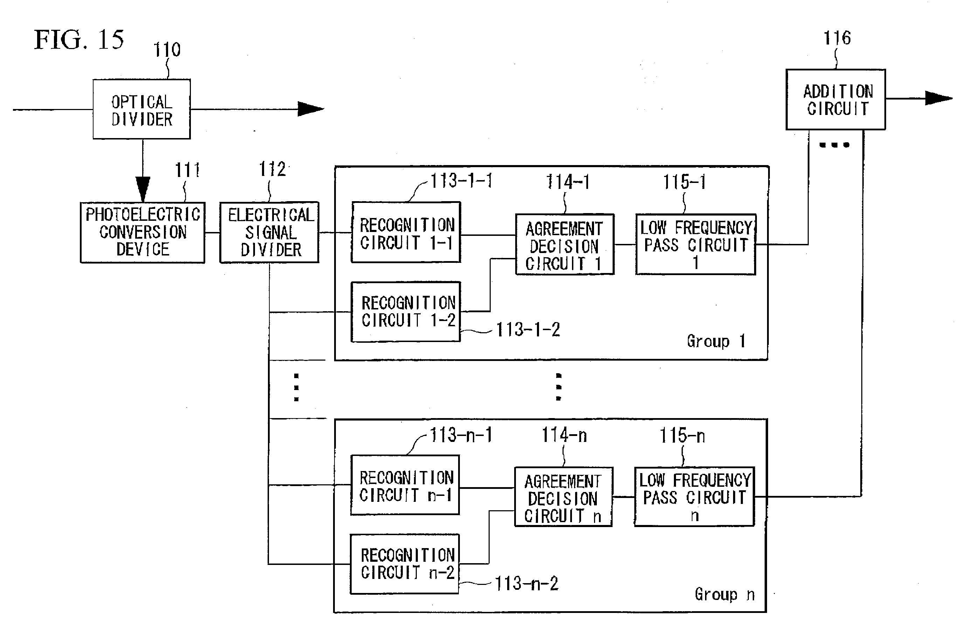

FIG. 15 is a block diagram showing the structure of a polarization mode dispersion compensation device according to a thirteenth preferred embodiment of the present invention. In this polarization mode dispersion compensation device of the thirteenth preferred embodiment, the above described waveform deterioration detector is made up from an optical divider 110, a photoelectric conversion device 111, an electrical signal divider 112, (2×n) recognition circuits 113-1-1 through 113-n-2, n agreement decision circuits 114-1 through 114-n, n low frequency pass circuits 115-1 through 115-n, and an addition circuit 116. It should be understood that, in the above description, n is a positive integer; and this convention will be utilized henceforward.

The optical signal which has been outputted from the above described polarizer or the above described dispersion compensation module is wave separated by the optical divider 110, and one of the resultant optical signals is inputted to the optical signal receiver, while the other one thereof is inputted to the photoelectric conversion device 111. The optical signal which has been inputted to the photoelectric conversion device 111 is converted thereby to an electrical signal, and then is divided by the electrical signal divider 112, the (2×n) resultant electrical signals then being respectively inputted to the recognition circuits 113-1-1 through 113-n-2. These (2×n) recognition circuits 113-1-1 through 113-n-2 are grouped into pairs. For example, as shown in FIG. 15, group 1 consists of the recognition circuits 113-1-1 and 113-1-2, while group n consists of the recognition circuits 113-n-1 and 113-n-2.

In each of these groups, the two recognition circuits perform recognition operation at the same timing, and one of these two recognition circuits is set to a recognition level which is higher than a suitable recognition level, while the other of these two recognition circuits is set to a recognition level which is lower than that suitable recognition level. When the intensity of signal '1' becomes low due to waveform deterioration, then recognition is performed by that recognition circuit which has the high recognition level, and the output signals of the two recognition circuits come to be in disagreement with one another. Furthermore, if the intensity of signal '0' should become high, again the output signals of the two recognition circuits come not to agree with one another. If the input signals to the corresponding one of the agreement decision circuits 114 from these two recognition circuits do not agree with one anothcr, then that one of the agreement decision circuits 114 outputs a high level signal.

When the waveform deterioration becomes high, for example, a large number of disagreements occur between the decisions of the two recognition circuits 103-1-1 and 103-1-2, and the proportion of high level signals which are outputted by the corresponding agreement decision circuit 114-1 becomes high. The intensity of the low frequency component which has been extracted by the corresponding low frequency pass circuit 115-1 from the output signal of this agreement decision circuit 114-1 becomes great in proportion to the rate of high level signals which are outputted from this agreement decision circuit 114-1, in other words, becomes great in proportion to the waveform deterioration. Moreover, by performing the recognition operation in each of the groups at a different timing; it is possible to detect waveform deterioration over a wide range of time slots. In other words, by adding together the output voltages of all of the low frequency pass circuits 115-1 through 115-n for each of the groups, it becomes possible also to detect waveform deterioration in the phase direction.

Accordingly, it is possible to minimize the waveform deterioration due to PMD by the above described control circuit controlling the polarization conversion means so that the output voltage of the addition circuit 116 attains a minimum, and the above described polarizer is able to separate out the polarization component which is parallel to the PSP of the above described optical transmission path, Furthermore, by controlling the above described dispersion compensation module in the same manner, the above described control circuit is able to minimize the waveform deterioration due to group velocity dispersion.

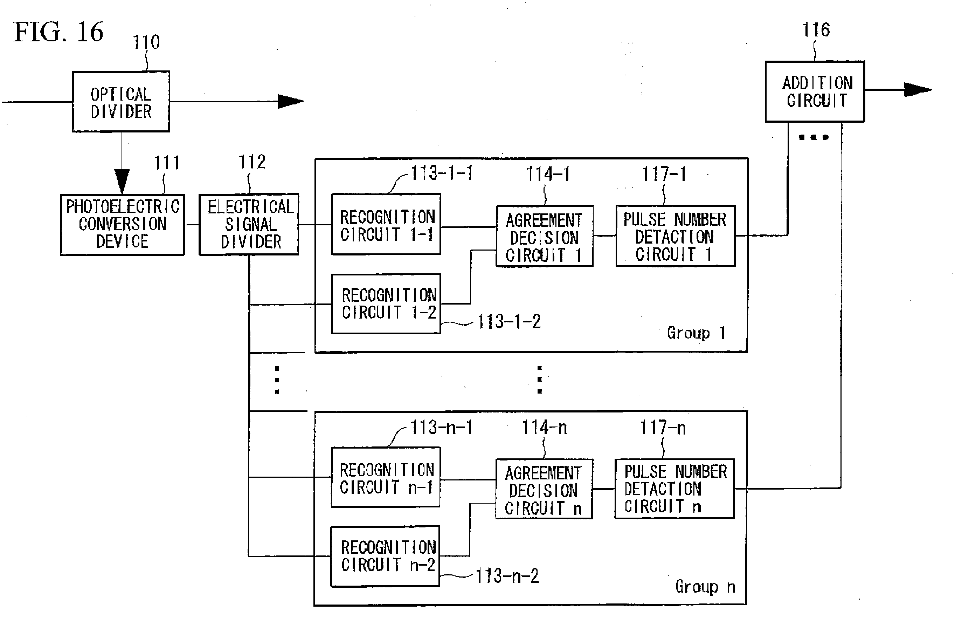

FIG. 16 is a block diagram showing the structure of a polarization mode dispersion compensation device according to a fourteenth preferred embodiment of the present invention. This polarization mode dispersion compensation device of the fourteenth preferred embodiment has the same basic structure as the polarization mode dispersion compensation device of the above described thirteenth preferred embodiment, except that it is distinguished therefrom in that, instead of the low frequency pass circuits 115-1 through 115-n of that thirteenth preferred embodiment, there are utilized pulse number detection circuits 117-1 through 117-n. In this case it is possible to detect waveform deterioration by detecting the number of pulses in the output signals of the various agreement decision circuits 114-1 through 114-n, even if the number of disagreements is extremely small, in other words if the degree of waveform deterioration is small.

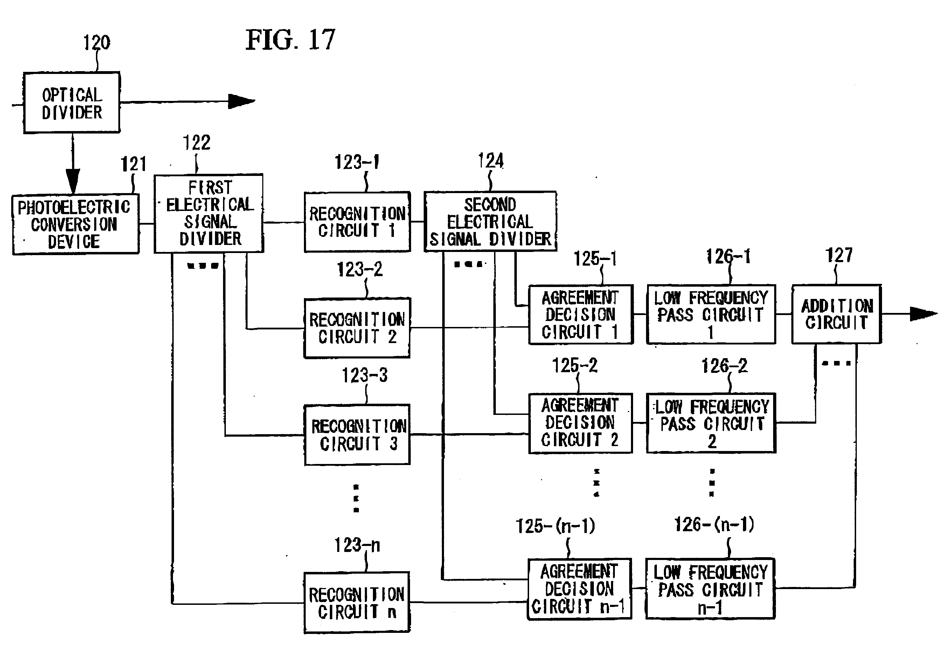

FIG. 17 is a block diagram showing the structure of a polarization mode dispersion compensation device according to a fifteenth preferred embodiment of the present invention. In this polarization mode dispersion compensation device of the fifteenth preferred embodiment, the above described waveform deterioration detector is made up from an optical divider 120, a photoelectric conversion device 121, a first electrical signal divider 122, n recognition circuits 123-1 through 123-n, a second selectrical signal divider 124, (n-1) agreement decision circuits 125-1 through 125-(n-1), (n-1) low frequency pass circuits 126-1 through 126-(n-1), and an addition circuit 127. The optical signal which has been outputted from the above described polarizer or the above described dispersion compensation module is wave separated by the optical divider 120, and one of the resultant optical signals is inputted to the optical signal receiver, while the other one thereof is inputted to the photoelectric conversion device 121. The optical signal which has been inputted to the photoelectric conversion device 121 is converted thereby to an electrical signal, and then is divided by the first electrical signal divider 122 into n electrical signals, which are then respectively inputted to the recognition circuits 123-1 through 123-n. One recognition circuit which has been selected from this group of recognition circuits (in the following, by way of example, the recognition circuit 123-1) is set to the most suitable recognition level and to the most suitable recognition liming. The other ones of these recognition circuits (in the following, by way of example, the recognition circuits 123-2 through 123-n) may perform their recognition operation all at the same timing, or may perform their recognition operation at any desired plurality of timings. Their recognition levels may be higher than the suitable recognition level, or may be lower than it; and moreover the recognition levels for those ones of these recognition circuits which operate at the same timing should be set to be mutually different.

Furthermore, the signal which is outputted from the recognition circuit 123-1 is again divided by the second electrical signal divider 124 into (n-1) signals, and its agreement or disagreement with the output signals of each of the recognition circuits 123-2 through 123-n is decided upon by the respective one of the agreement decision circuits 125-1 through 125-(n-1). The output intensities of the low frequency components of the output signals from the agreement decision circuits 125-1 through 125-(n-1) which are extracted by the low frequency pass circuits 126-1 through 126-(n-1) which correspond to these agreement decision circuits are added together by the addition circuit 127. When the intensity of signal '1' becomes low due to waveform deterioration, then recognition is performed by those recognition circuits which have high recognition levels, and the output signals of these recognition circuits and the output signal of the recognition circuit 123-1 which is set to the most suitable recognition level come to be in disagreement with one another. Furthermore, if the intensity of signal '0' should become high, the output signals of those recognition circuits which have low recognition levels and the output signal of the recognition circuit 123-1 again come not to agree with one another. If the input signals to any one of the agreement decision circuits 125-1 through 125-(n-1) from its two corresponding recognition circuits (one of which is the recognition circuit 123-1) do not agree with one another, then that one of the agreement decision circuits 125-1 through 125-(n-1) outputs a high level signal.

When the waveform deterioration becomes high, a large number of disagreements occur between the decision of the recognition circuit 123-1 and the decisions of each of the other recognition circuits 123-2 through 123-n, and the proportion of high level signals which are outputted by the corresponding agreement decision circuits 125-1 through 125-(n-1) becomes high. In other words, it is possible to obtain an eye opening for each recognition level by comparing the output signal of the one of the recognition circuits which is set to the most suitable recognition level (in other words, the output signal of the recognition circuit 123-1) with the output signals of the plurality of other recognition circuits 123-2 through 123-n which are set to different recognition levels-Furthermore, it is possible to obtain information relating to the signal waveform over a wide phase range by comparing the output signal of the recognition circuit 123-1 which is set to the most suitable recognition level and the most suitable recognition timing with the output signals of the plurality of other recognition circuits 123-2 through 123-n which are set to different recognition timings. The intensities of the low frequency components which have been extracted by the corresponding low frequency pass circuit 126-1 through 126-(n-1) from the output signals of the agreement decision circuits 125-1 through 125-(n-1) become great in proportion to the rate of high level signals which are outputted from the corresponding agreement decision circuits 125-1 through 125-(n-1), in other words, becomes great in proportion to the waveform deterioration. In other words, by adding together the outputs of the various low frequency pass circuits 126-1 through 126-(n-1), it is possible to obtain information relating to the signal waveform over a wide intensity range and a wide phase range, and it is possible to detect waveform deterioration with high sensitivity. Accordingly, it is possible to minimize the waveform deterioration due to PMD by the above described control circuit controlling the polarization conversion means so that the output voltage of the addition circuit 127 attains a minimum, and the above described polarizer is able to separate out the polarization component which is parallel to the PSP of the above described optical transmission path. Furthermore, by controlling the above described dispersion compensation module in the same manner, the above described control circuit is able to minimize the waveform deterioration due to group velocity dispersion,

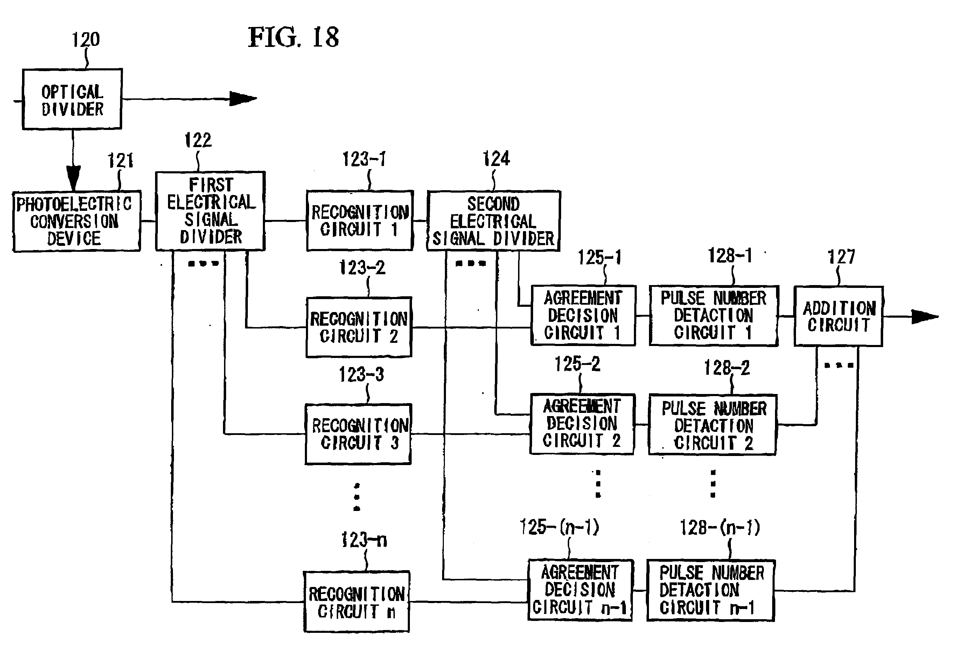

FIG. 18 is a block diagram showing the structure of a polarization mode dispersion compensation device according to a sixteenth preferred embodiment of the present invention. This polarization mode dispersion compensation device of the sixteenth preferred embodiment has the same basic structure as the polarization mode dispersion compensation device of the above described fifteenth preferred embodiment, except that it is distinguished therefrom in that, instead of the low frequency pass circuits 126-1 through 126-(n-1) of that fifteenth preferred embodiment, there are utilized pulse number detection circuits 128-1 through 128-(n-1) In this case it is possible to detect waveform deterioration by detecting the number of pulses in the output signals of the various agreement decision circuits 125-1 through 125-(n-1), even if the number of disagreements is extremely small, in other words even if the degree of waveform deterioration is small.

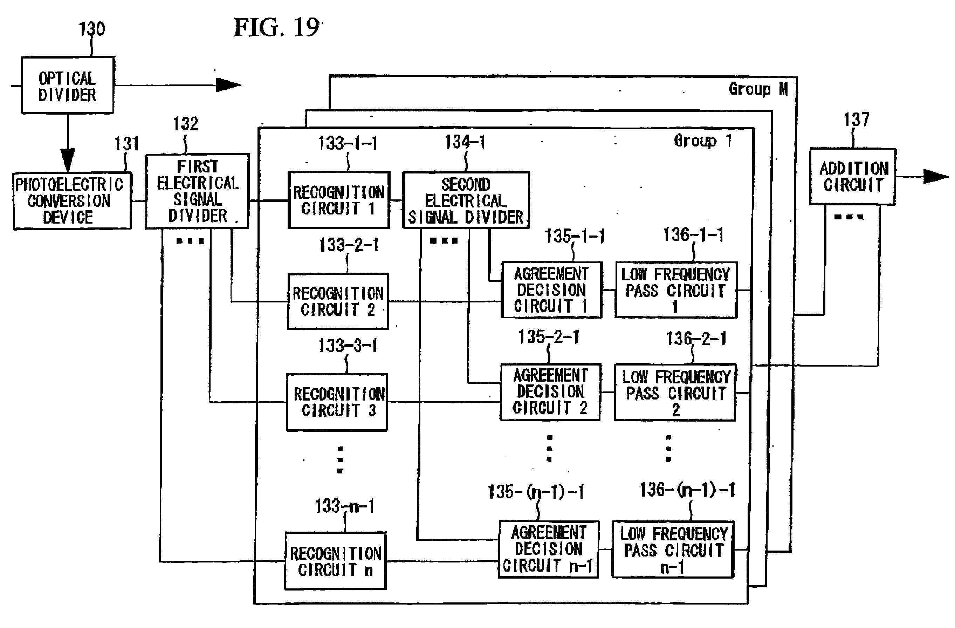

FIG 19 is a block diagram showing the structure of a polarization mode dispersion compensation device according to a seventeenth preferred embodiment of the present invention. In this polarization mode dispersion compensation device of the seventeenth preferred embodiment, the above described waveform deterioration detector is made up from an optical divider 130, a photoelectric conversion device 131, a first electrical signal divider 132, (m×n) recognition circuits 133-1-1 through 133-n-m, m second electrical signal dividers 134-1 through 134-m, m×(n-1) agreement decision circuits 135-1-1 through 135-(n-1)-m, m×(n-1) low frequency pass circuits 136-1-1 through 136-(n-1)-m, and an addition circuit 137. It should be understood that, in the above description, m is a positive integer; and this convention will be utilized henceforward. Furthermore, in FIG. 19, only the structural elements related to a first group 1 of elements are shown.

The optical signal which has been outputted from the above described polarizer or the above described dispersion compensation module is wave separated by the optical divider 130, and one of the resultant optical signals is inputted to the optical signal receiver, while the other one thereof is inputted to the photoelectric conversion device 131. The optical signal which has been inputted to the photoelectric conversion device 131 is converted thereby to an electrical signal, and then is divided by the first electrical signal divider 132 into (m×n) electrical signals, which are then respectively inputted to the (m×n) recognition circuits 133-1-1 through 133-n-m, In each group which consists of m elements, the following signal processing is performed for each of n electrical signals, and the recognition operation is performed for each of them at a different timing. Within a single group (for example, in FIG. 19, group 1), one recognition circuit which has been selected from this group 1 of recognition circuits (in the following, by way of example, the recognition circuit 133-1-1) is set to the most suitable recognition level and to the most suitable recognition timing. The other ones of these recognition circuits (in the following, by way of example, the recognition circuits 133-2-1 through 133-n-1) are set to recognition levels which may be higher than the suitable recognition level, or may be lower than it; they should be set to mutually different recognition levels.

Furthermore, the signal which is outputted from the recognition circuit 133-1-1 is again divided by the second electrical signal divider 134-1 into (n-1) signals, and its agreement or disagreement with the output signals of each of the recognition circuits 133-2-1 through 133-n-1 is decided upon by the respective one of the agreement decision circuits 135-1-1. through 135-(n-1)-1. The low frequency components are extracted from the output signals from the agreement decision circuits 135-1-1 through 135-(n-1)-1 by the low frequency pass circuits 136-1-1 through 136-(n-1)-1 which correspond to these agreement decision circuits, and are outputted as (n-1) voltages The (m×(n-1)) output voltages which are outputted from all of the m groups are added together by the addition circuit 137. When the intensity of signal '1' becomes low due to waveform deterioration, then recognition is performed by those recognition circuits which have high recognition levels, and the output signals of these recognition circuits and the output signal of the recognition circuit 133-1 through 133-1-m which is set to the most suitable recognition level come to be in disagreement with one another. Furthermore, if the intensity of signal '0' should become high, the output signals of those recognition circuits which have low recognition levels and the output signal of that recognition circuit 133-1-1 through 133-1-m again come not to agree with one another. If the input signals to any one of the agreement decision circuits 135-1-1 through 135-(n-1)-m from its two corresponding recognition circuits (one of which is the recognition circuit 133-1-1) do not agree with one another, then that one of the agreement decision circuits 135-1-1 through 135-(n-1)-m outputs a high level signal.

When the waveform deterioration becomes high, a large number of disagreements occur between the decision of the recognition circuits 133-1-1 through 133-1-m and the decisions of each of the other recognition circuits, and the proportion of high level signals which are outputted by the corresponding agreement decision circuits becomes high. In other words, it is possible to obtain an eye opening for each recognition level by comparing the output signal of the one of the recognition circuits which is set to the most suitable recognition level with the output signals of the plurality of other recognition circuits 133-2 through 133-n which arc set to different recognition levels Furthermore, the intensities of the low frequency components which have been extracted by the low frequency pass circuits 136-1-1 through 13G-(n-1)-m from the output signals of the agreement decision circuits 135-1-1 through 135-(n-1)-m become great in proportion to the rate of outputting of high level signals by the agreement decision circuits, in other words, in proportion to the amount of waveform deterioration. In other words, by adding together the outputs of the various low frequency pass circuits, it is possible to obtain information relating to the signal waveform over a wide intensity range. Furthermore, since within the m groups they have different recognition timings, it is possible to obtain information relating to the signal waveform over a wide phase range, and it is possible to detect waveform deterioration with high sensitivity. Accordingly, it is possible to minimize the waveform deterioration due to PMD by the above described control circuit controlling the polarization conversion means so that the output voltage of the addition circuit 137 attains a minimum, and the above described polarizer is able to separate out the polarisation component which is parallel to the PSP of the above described optical transmission path. Furthermore, by controlling the above described dispersion compensation module in the same manner, the above described control circuit is able to minimize the waveform deterioration due to group velocity dispersion.

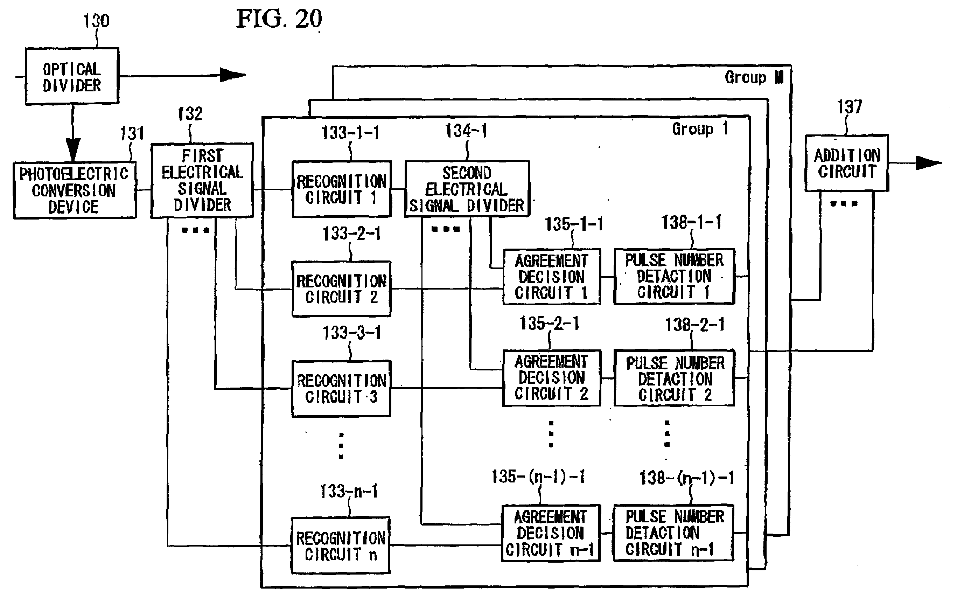

FIG. 20 is a block diagram showing the structure of a polarization mode dispersion compensation device according to an eighteenth preferred embodiment of the present invention. This polarization mode dispersion compensation device of the eighteenth preferred embodiment has the same basic structure as the polarization mode dispersion compensation device of the above described seventeenth preferred embodiment, except that it is distinguished therefrom in that, instead of the low frequency pass circuits 136-1-1 through 136-(n-1)-m of that seventeenth preferred embodiment, there are utilized pulse number detection circuits 138-1-1 through 138-(n-1)-m. In this case it is possible to detect waveform deterioration by detecting the number of pulses in the output signals of the various agreement decision circuits 135-1-1 through 135-(n-1)-m even if the number of disagreements is extremely small, in other words even if the degree of waveform deterioration is small.

FIG. 21 is a block diagram showing the structure of a polarization mode dispersion compensation device according to a nineteenth preferred embodiment of the present invention. With this polarization mode dispersion compensation device of the nineteenth preferred embodiment, the above described principal state of polarization detector 83 and polarizer 84 are made up from a polarization separation device 140 which separates the optical signal into two mutually orthogonal polarization components, an optical divider 141, a first photoelectric conversion device 142 and a second photoelectric conversion device 143, a first specified frequency component detector 144 and a second specified frequency component detector 145, and a control device 146, so as to simultaneously implement a PSP detection function and a specified polarization selection function.

The optical signal which has been inputted to the polarization separation device 140 is separated by the polarization separation device 140 into two mutually orthogonal polarization components. One of the resultant separated polarization components is inputted to the first photoelectric conversion device 142 and is converted thereby into an electrical signal. The other of the polarization components which has been separated out is wave separated into two by the optical divider 141, and one of the resultant optical signals is inputted to an automatic dispersion compensator 85, while the other thereof is inputted to the second photoelectric conversion device 143, and is converted thereby into an electrical signal.

The two electrical signals which have been converted by the first photoelectric conversion device 142 and by the second photoelectric conversion device 143 are respectively inputted to the first specified frequency component detector 144 and to the second specified frequency component detector 145, which detect the intensities of specified frequency components thereof (for example, of 1/2 of their bit rates). And, based upon information related to the intensities of these two frequency components, the control device 146 controls the polarization controller 81 so that the intensities of these two frequency components become equal.

For the intensities of these two frequency components which are being detected to become equal, the intensities of the two mutually orthogonal polarization components of the optical signal which have been separated out are equal, and moreover they have the same signal waveform. These conditions hold if the two mutually orthogonal polarization components which have been separated out are each being propagated in a PSP. Accordingly, it is possible to separate out the polarization components which are parallel to a PSP of the optical transmission path 87 by performing control so that the intensities of the two frequency components which are being detected become equal.

FIG. 22 is a block diagram showing the structure of a polarization mode dispersion compensation device according to a twentieth preferred embodiment of the present invention. With this polarization mode dispersion compensation device of the twentieth preferred embodiment, the above described principal State of polarization detector 21 and polarizer 22 are made up from a polarization separation device 150 which separates the optical signal into two mutually orthogonal polarization components, an optical divider 151, a first photoelectric conversion device 152 and a second photoelectric conversion device 153, a phase comparison device 154, and a control device 155, so as to simultaneously implement a PSP detection function and a specified polarization selection function.

It should be understood that, as a preferred example of the above described phase comparison device 154, a phase comparator may be utilized.

The optical signal which has been inputted to the polarization separation device 150 is separated by the polarization separation device 150 into two mutually orthogonal polarization components. One of the resultant separated polarization components is inputted to the first photoelectric conversion device 152 and is convened thereby into an electrical signal. The other of the polarization components which has been separated out is wave separated into two by the optical divider 151, and one of the resultant optical signals is inputted to the automatic dispersion compensator 23, while the other thereof is inputted to the second photoelectric conversion device 153, and is converted by this second photoelectric conversion device 153 into an electrical signal. The two electrical signals which have been converted by the first photoelectric conversion device 152 and by the second photoelectric conversion device 153 are inputted to the phase comparison device 154, which detects the phase difference between them. And, based upon information related to this phase difference which has thus been detected, the control device 155 controls the polarization controller 20 so that this phase difference becomes a maximum.

For the phase difference which is being detected to become a maximum, the two mutually orthogonal polarization components of the optical signal which have been separated out are each being propagated in a PSP. Accordingly, it is possible to separate out the polarization components which are parallel to a PSP of the optical transmission path 25 by performing control so that the phase difference becomes a maximum.

FIG. 23 is a block diagram showing the structure of a polarization mode dispersion compensation device according to a twenty-first preferred embodiment of the present invention. With this polarization mode dispersion compensation device of the twenty-first preferred embodiment, the above described principal state of polarization detector 21 and polarizer 22 are made up from a polarization separation device 150 which separates the optical signal into two mutually orthogonal polarization components, an optical divider 151, a first photoelectric conversion device 152 and a second photoelectric conversion device 153, a first band restriction device 156 and a second band restriction device 157, a phase comparison device 154, and a control device 155, so as to simultaneously implement a PSP detection function and a specified polarization selection function.

It should be understood that, as preferred examples of the above described band restriction devices 156 and 157, LFFs may be utilized.

The optical signal which has been inputted to the polarization separation device 150 is separated by the polarization separation device 150 into two mutually orthogonal polarization components. One of the resultant separated polarization components is inputted to the first photoelectric conversion device 152 and is converted thereby into an electrical signal. The other of the polarization components which has been separated out is wave separated into two by the optical divider 151, and one of the resultant optical signals is inputted to the automatic dispersion compensator 23, while the other thereof is inputted to the second photoelectric conversion device 153, and is converted by this second photoelectric conversion device 153 into an electrical signal. The two electrical signals which have been converted by the first photoelectric conversion device 152 and by the second photoelectric conversion device 153 are inputted respectively to the first band restriction device 156 and to the second band restriction device 157, which eliminate the high frequency components from each of them. The two electrical signals from which the high frequency components have thus been removed are inputted to the phase comparison device 154, which detects the phase difference between them. And, based upon information related to this phase difference which has thus been detected, the control device 155 controls the polarization controller 20 so that this phase difference becomes a maximum

For the phase difference which is being detected to become a maximum, the two mutually orthogonal polarization components of the optical signal which have been separated out are each being propagated in a PSF. Accordingly, it is possible to separate out the polarization components which are parallel to a PSP of the optical transmission path 25 by performing control so that the phase difference becomes a maximum,

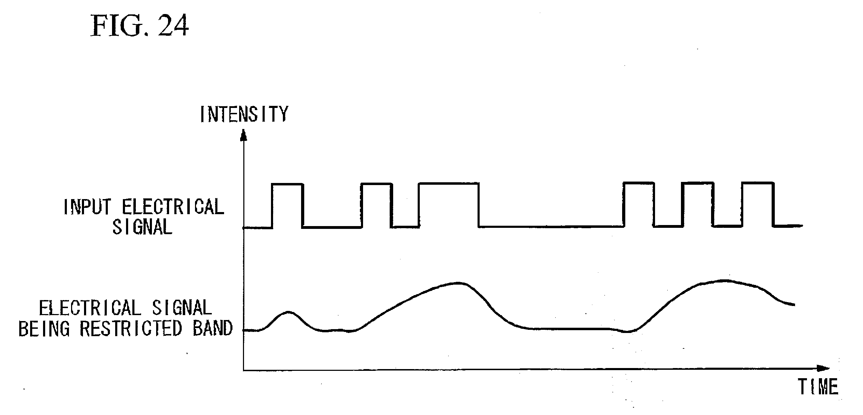

When the high frequency components are eliminated from the electrical signals by the band restriction devices 156 and 157, as shown in FIG. 24, long period patterns appear which depend upon the signal patterns. By performing phase comparison of these long period patterns, it becomes also possible to perform control for a DGD value which is longer than a single time slot.

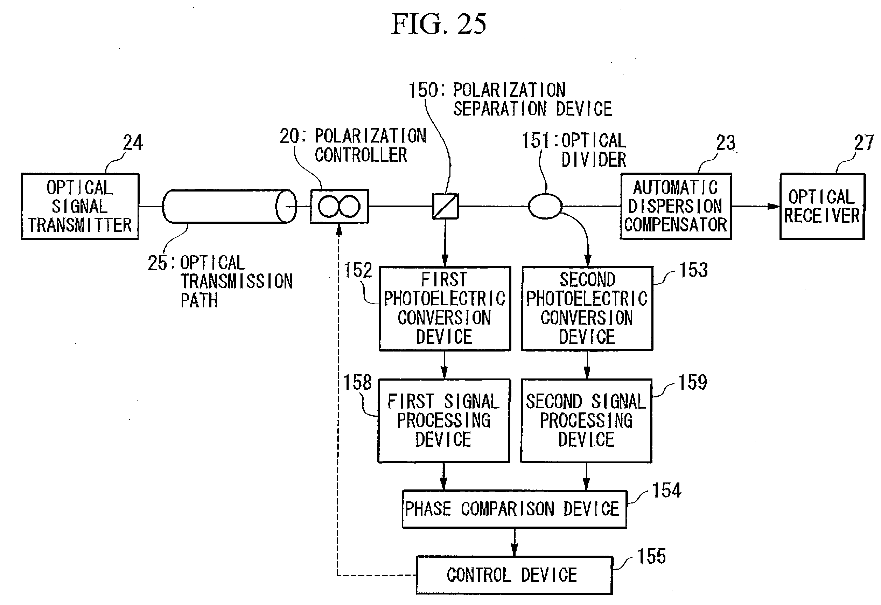

FIG. 25 is a block diagram showing the structure of a polarization mode dispersion compensation device according to a twenty-second preferred embodiment of the present invention. With this polarization mode dispersion compensation device of the twenty-second preferred embodiment, the above described principal state of polarization detector 21 and polarizer 22 are made up from a polarization separation device 150 which separates the optical signal into two mutually orthogonal polarization components, an optical divider 151, a first photoelectric conversion device 152 and a second photoelectric conversion device 153, a first signal processing device 158 and a second signal processing device 159, a phase comparison device 154, and a control device 155, so as to simultaneously implement a PSP detection function and a specified polarization selection function.

The optical signal which has been inputted to the polarization separation device 150 is separated by the polarization separation device 150 into two mutually orthogonal polarization components. One of the resultant separated polarization components is inputted to the first photoelectric conversion device 152 and is converted thereby into an electrical signal. The other of the polarization components which has been separated out is wave separated into two by the optical divider 151, and one of the resultant optical signals is inputted to the automatic dispersion compensator 23, while the other thereof is inputted to the second photoelectric conversion device 153, and is converted by this second photoelectric conversion device 153 into an electrical signal. The two electrical signals which have been converted by the first photoelectric conversion device 152 and by the second photoelectric conversion device 153 are inputted respectively to the first signal processing device 158 and to the second signal processing device 159, which perform pattern conversion upon them according to specified rules, so as to convert them to patterns which have longer periods than their original signal patterns.

As the specified rule for this pattern conversion, for example, the rule may be used that the output signal level becomes high when a continuous series of high level bits occurs, or that the output signal level becomes high only when a specified pattern appears in the signal pattern, or the like; any rule which is able to convert into a signal pattern which has longer period than the original signal pattern will be acceptable.

It should be understood that, in addition to the structure shown in the above described FIGS. 22, 23, and 25, for example, a DGD element may also be included at a stage before the polarization controller 20. In this case, the fact that the phase difference which is being detected becomes a maximum means that the two mutually orthogonal polarization components which have been separated out are each being propagated in a PSP, and the fact that the phase difference which is being detected becomes a minimum means that the two mutually orthogonal polarization components which have been separated out are each being propagated in a PSP, or that the overall polarization mode dispersion of the optical transmission path and the DGD element is a minimum. Accordingly, it is possible to minimize the waveform deterioration due to polarization mode dispersion by performing control so that the phase difference is a maximum or a minimum.

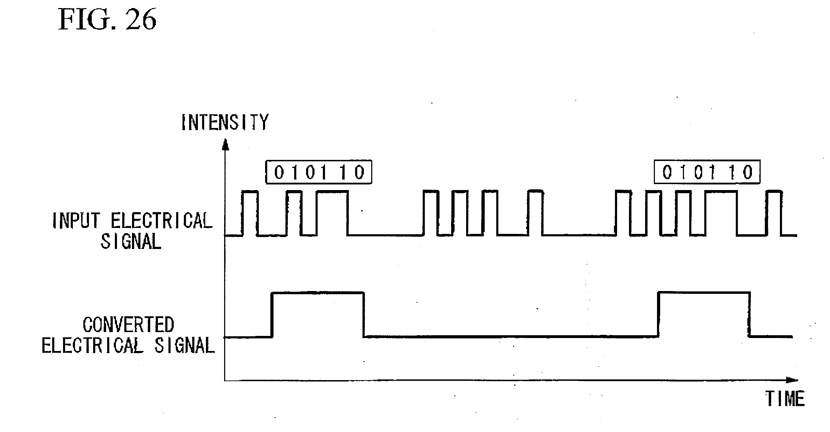

FIG. 26 shows in schematic form an example of the operation for pattern conversion when a specified pattern has appeared in the signal pattern. The two electrical signals which have been pattern converted are inputted to the phase comparison device 154, and their phase difference is detected. Based upon information related to the phase difference which is detected, the control device controls the polarization controller 20 so that this phase difference attains a maximum.

The fact that the phase difference which is being detected becomes a maximum means that the two mutually orthogonal polarization components which have been separated out are each being propagated in a PSP. Accordingly, it is possible to separate out the polarization component which is parallel to the PSP of the optical transmission path by performing control so that this phase difference attains a maximum. By further converting the electrical signals to long period patterns and by performing phase comparison, it becomes also possible to perform control for a DGD value which is longer than a single time slot.

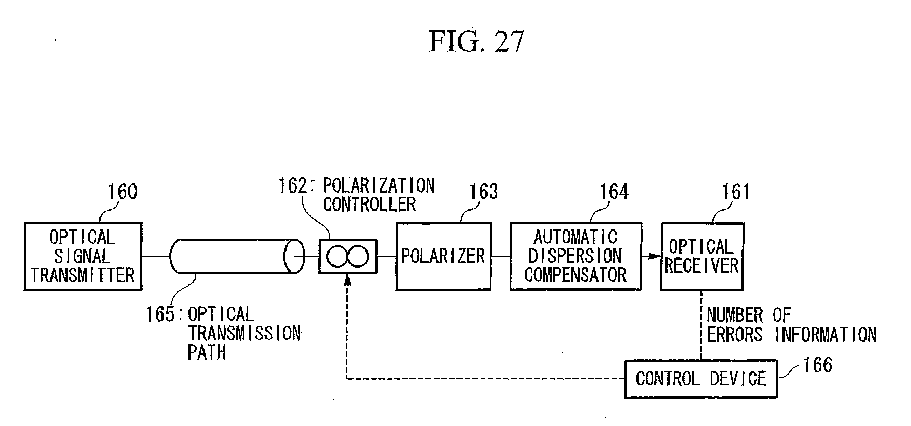

FIG. 27 is a block diagram showing the structure of a polarization mode dispersion compensation device according to a twenty-third preferred embodiment of the present invention With this polarization mode dispersion compensation device of the twenty-third preferred embodiment, there are included: an optical signal transmitter 160 and an optical signal receiver 161 which are endowed with an error detection function, a polarization controller 162 which is disposed at the signal reception side of the optical transmission system, a polarizer 163 which separates out a specified polarization component, and an automatic dispersion compensator 164.

An optical signal which has been inputted to the optical signal transmitter 160, after having being subjected by the optical signal transmitter 160 to processing for error detection (for example, to BIP-8 for SDH or the like), is outputted upon the optical transmission path 165. The optical signal which has been outputted is propagated along the optical transmission path 165, and, after having passed through the polarization controller 162, is inputted to the polarizer 163, which separates out a specified polarization component of this optical signal. After the optical signal which has been separated out has passed through the automatic dispersion compensator 164, it is received by the optical signal receiver 161. The optical signal receiver 161 performs error detection upon the optical signal which it has received, and outputs information relating to the number of errors therein to the control device 166. Based upon this number of errors information, the control device 166 controls the polarization controller 162 so as to minimize this number of errors.

Waveform deterioration of the optical signal which has been separated out is the smallest, and the number of errors in the signal which is received is a minimum, in the state in which the polarizer 163 separates out the polarization component which is parallel (or is perpendicular) to the principal state of polarization of the optical transmission path. Due to this, it is possible to separate out only the optical signal component which has arrived by propagation in the principal state of polarization of the optical transmission path 165 by performing control so that the number of errors attains a minimum, and it is possible thus to compensate for transmission quality degradation due to DGD.

The effect of change (PCD) dependent upon the DGD wavelength becomes equivalent to group velocity dispersion, if attention is paid only to one of the two PSP which are orthogonal to one another, as described above. Due to this, the optical signal which has been separated out by the polarizer 163 is the optical signal which has arrived by propagation along one of the PSP, and it is possible simultaneously to implement PCD compensation by compensating the group velocity dispersion with the automatic dispersion compensator 164.

Furthermore, by using the error detection function of the signal transmitter and receiver 160 and 161, it becomes possible to reduce the number of analog components, and so to build the structure easily,

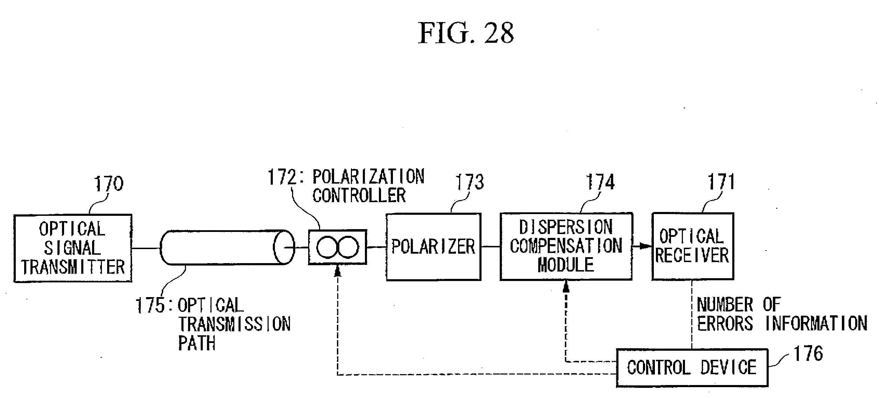

FIG. 28 is a block diagram showing the structure of a polarization mode dispersion compensation device according to a twenty-fourth preferred embodiment of the present invention. With this polarization mode dispersion compensation device of the twenty-fourth preferred embodiment, there are included: an optical signal transmitter 170 and an optical signal receiver 171 which are endowed with an error detection function, a polarization controller 172 which is disposed at the signal reception side of the optical transmission system, a polarizer 173 which separates out a specified polarization component, and a dispersion compensation module 174.

An optical signal which has been inputted to the optical signal transmitter 170, after having being subjected by the optical signal transmitter 170 to processing for error detection (for example, to BIP-8 for SDH or the like), is outputted upon the optical transmission path 175. The optical signal which has been outputted is propagated along the optical transmission path 175, and, after having passed through the polarization controller 172, is inputted to the polarizer 173, which separates out a specified polarization component of this optical signal. After the optical signal which has been separated out has passed through the dispersion compensation module 174, it is received by the optical signal receiver 171. The optical signal receiver 171 performs error detection upon the optical signal which it has received, and outputs information relating to the number of errors therein to a control device 176. Based upon this number of errors information, the control device 176 controls the polarization controller 172 and the dispersion compensation module 174 so as to minimize this number of errors which are detected.

Waveform deterioration of the optical signal which has been separated out is the smallest, and the number of errors in the signal which is received is a minimum, in the state in which the polarizer 173 separates out the polarization component which is parallel (or is perpendicular) to the principal state of polarization of the optical transmission path. Due to this, it is possible to separate out only the optical signal component which has arrived by propagation in the principal state of polarization of the optical transmission path 175 by performing control so that the number of errors attains a minimum, and it is possible thus to compensate for transmission quality degradation due to DGD.

The effect of change (PCD) dependent upon the DGD wavelength becomes equivalent to group velocity dispersion, if attention is paid only to one of the two PSP which are orthogonal to one another, as described above. Due to this, the optical signal which has been separated out by the polarizer 173 is the optical signal which has arrived by propagation along one of the PSP, and it is possible simultaneously to implement PCD compensation by compensating the group velocity dispersion with the dispersion compensation module 174.

Furthermore, by using the error detection function of the signal transmitter and receiver 170 and 171, it becomes possible to reduce the number of analog components, and so to build the structure easily.

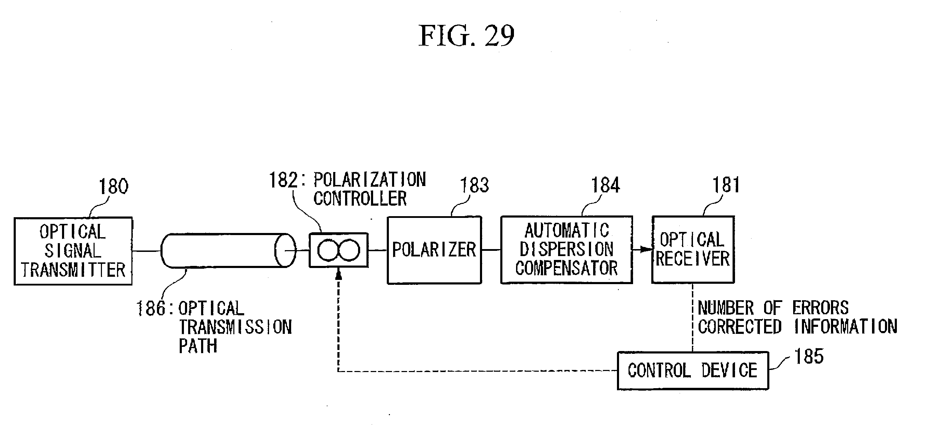

FIG. 29 is a block diagram showing the structure of a polarization mode dispersion compensation device according to a twenty-fifth preferred embodiment of the present invention. With this polarization mode dispersion compensation device of the twenty-fifth preferred embodiment, there are included: an optical signal transmitter 180 and an optical signal receiver 181 which are endowed with an error correction function, a polarization controller 182 which is disposed at the signal reception side of the optical transmission system, a polarizer 183 which separates out a specified polarization component, and an automatic dispersion compensator 184.

After the optical signal transmitter 180 has performed processing for encoding of error correction codes for an optical signal which has been dispatched, it outputs the resulting signal upon the optical transmission path 186. The optical signal which has been dispatched from the optical signal transmitter 180 is propagated along the optical transmission path 186, and, after having passed through the polarization controller 182, is inputted to the polarizer 183, which separates out a specified polarization component of this optical signal. After the optical signal which has been separated out has passed through the automatic dispersion compensator 184, it is received by the optical signal receiver 181. The optical signal receiver 181 performs decoding processing for the error correction codes upon the optical signal which it has received, and outputs information relating to the number of errors which it has corrected to the control device 185. Based upon this number of errors corrected information, the control device 185 controls the polarization controller 182 so as to minimize this number of errors corrected.

Waveform deterioration of the optical signal which has been separated out is the smallest, and the number of errors in the signal which is received is a minimum, in the state in which the polarizer 183 separates out the polarization component which is parallel (or is perpendicular) to the principal state of polarization of the optical transmission path 186. Due to this, it is possible to separate out only the optical signal component which has arrived by propagation in the principal state of polarization of the optical transmission path 186 by performing control so that the number of errors corrected attains a minimum, and it is possible thus to compensate for transmission quality degradation due to DGD.

The effect of change (PCD) dependent upon the DGD wavelength becomes equivalent to group velocity dispersion, if attention is paid only to one of the two PSP which are orthogonal to one another, as described above. Due to this, the optical signal which has been separated out by the polarizer 183 is the optical signal which has arrived by propagation along one of the PSP, and it is possible simultaneously to implement PCD compensation by compensating the group velocity dispersion with the automatic dispersion compensator 184.

Furthermore, by using the error correction function of the signal transmitter and receiver 180 and 181, it becomes possible to reduce the number of analog components, and so to build the structure easily.

Yet further, since the control is performed using the number of errors which are corrected, it becomes possible to perform control with no errors being present in the signal which is outputted from the optical signal receiver.

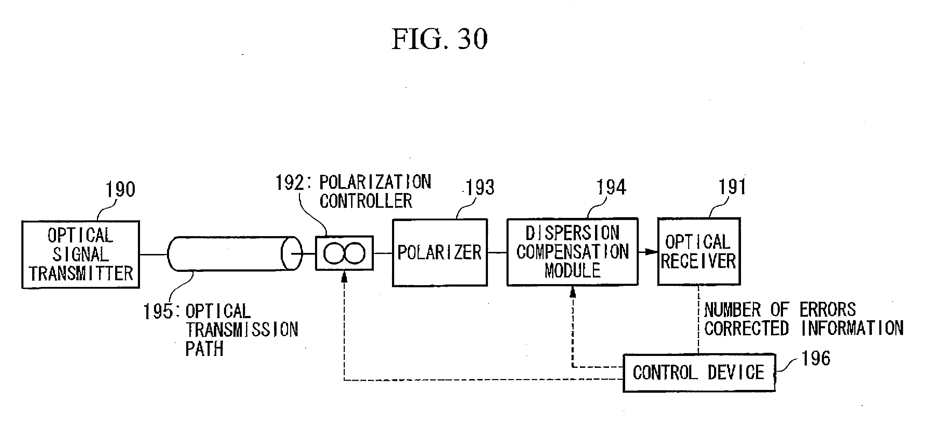

FIG. 30 is a block diagram showing the structure of a polarization mode dispersion compensation device according to a twenty-sixth preferred embodiment of the present invention. With this polarization mode dispersion compensation device of the twenty-sixth preferred embodiment, there are included; an optical signal transmitter 190 and an optical signal receiver 191 which are endowed with an error correction function, a polarization controller 192 which is disposed at the signal reception side of the optical transmission system, a polarizer 193 which separates out a specified polarization component, and a dispersion compensation module 194.

After the optical signal transmitter 190 has performed processing for encoding of error correction codes for an optical signal which has been dispatched, it outputs the resulting signal upon the optical transmission path 195. The optical signal which has been dispatched from the optical signal transmitter 190 is propagated along the optical transmission path 195, and, after having passed through the polarization controller 192, is inputted to the polarizer 193, which separates out a specified polarization component of this optical signal. After the optical signal which has been separated out has been dispersion compensated by the dispersion compensation module 194, it is received by the optical signal receiver 191. The optical signal receiver 191 performs decoding processing for the error correction codes upon the optical signal which it has received, and outputs information relating to the number of errors which it has corrected to the control device 196. Based upon this number of errors corrected information, the control device 196 controls the polarization controller 192 and the dispersion compensation module 194 so as to minimize this number of errors corrected.

Waveform deterioration of the optical signal which has been separated out is the smallest, and the number of errors in the signal which is received is a minimum, in the state in which the polarizer 193 separates out the polarization component which is parallel (or is perpendicular) to the principal state of polarization of the optical transmission path 195. Due to this, it is possible to separate out only the optical signal component which has arrived by propagation in the principal state of polarization of the optical transmission path 195 by performing control so that the number of errors corrected attains a minimum, and it is possible thus to compensate for transmission quality degradation due to DGD.

The effect of change (PCD) dependent upon the DGD wavelength becomes equivalent to group velocity dispersion, if attention is paid only to one of the two PSP which are orthogonal to one another, as described above. Due to this, the optical signal which has been separated out by the polarizer 193 is the optical signal which has arrived by propagation along one of the PSP, and, by compensating the group velocity dispersion with the dispersion compensation module 194 so that the number of errors corrected becomes a minimum, it is possible simultaneously to implement PCD compensation by compensating the group velocity dispersion with the dispersion compensation module 194.

Furthermore, by using the error correction function of the signal transmitter and receiver 190 and 191, it becomes possible to reduce the number of analog components, and so to build the structure easily.

Yet further, since the control is performed using the number of errors which are corrected, it becomes possible to perform control with no errors being present in the signal which is outputted from the signal receiver.

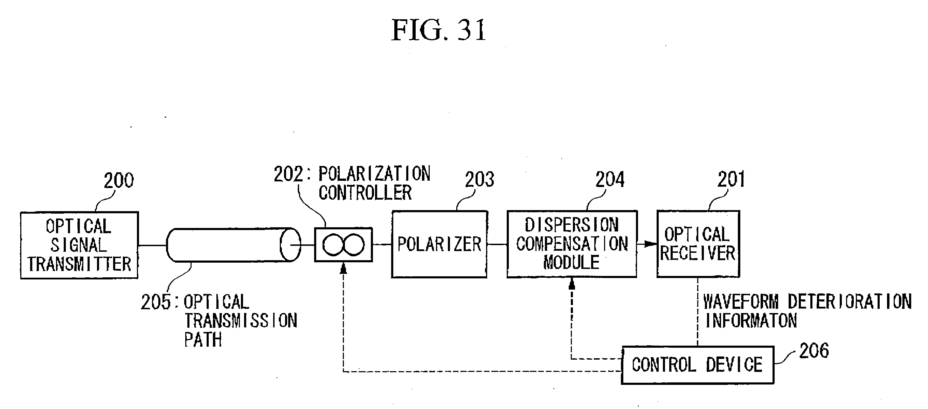

FIG. 31 is a block diagram showing the structure of a polarization mode dispersion compensation device according to a twenty-seventh preferred embodiment of the present invention. With this polarization mode dispersion compensation device of the twenty-seventh preferred embodiment, there are included: an optical signal transmitter 200, an optical signal receiver 201 which is endowed with a waveform deterioration detection function, a polarization controller 202 which is disposed at the signal reception side of the optical Transmission system, a polarizer 203 which separates out a specified polarization component, and a dispersion compensation module 204,

An optical signal which has been inputted to the optical signal transmitter 200, after having being subjected by the optical signal transmitter 200 to processing for encoding error correction codes, is outputted upon the optical transmission path 205. The optical signal which has been dispatched from the optical signal transmitter 200 is propagated along the optical transmission path 205, and, after having passed through the polarization controller 202, is inputted to the polarizer 203, which separates out a specified polarization component of this optical signal. After the optical signal which has been separated out has been dispersion compensated by the dispersion compensation module 204, it is received by the optical signal receiver 201. The optical signal receiver 201 performs waveform deterioration detection upon the optical signal which it has received, and, via a control device 206, controls the polarization controller 202 and the dispersion compensation module 204 so as to minimize this waveform deterioration.

Waveform deterioration of the optical signal which has been separated out is the smallest, and the number of errors in the signal which is received is a minimum, in the state in which the polarizer 203 separates out the polarization component which is parallel (or is perpendicular) to the principal state of polarization of the optical transmission path. Due to this, it is possible to separate out only the optical signal component which has arrived by propagation in the principal state of polarization of the optical transmission path 205 by performing control so that the number of errors corrected attains a minimum, and it is possible thus to compensate for transmission quality degradation due to DGD.

The effect of change (PCD) dependent upon the DGD wavelength becomes equivalent to group velocity dispersion, if attention is paid only to one of the two PSP which are orthogonal to one another, as described above. Due to this, the optical signal which has been separated out by the polarizer 203 is the optical signal which has arrived by propagation along one of the PSP, and it is possible simultaneously to implement PCD compensation by compensating the group velocity dispersion with the dispersion compensation module 204 so that the number of errors which are detected becomes a minimum.

Furthermore, by using the error correction function of the signal transmitter and receiver 200 and 201, it becomes possible to reduce the number of analog components, and so to build the structure easily.

Yet further, since the control is performed using the number of errors which are corrected, it becomes possible to perform control with no errors being present in the signal which is outputted from the optical signal receiver.

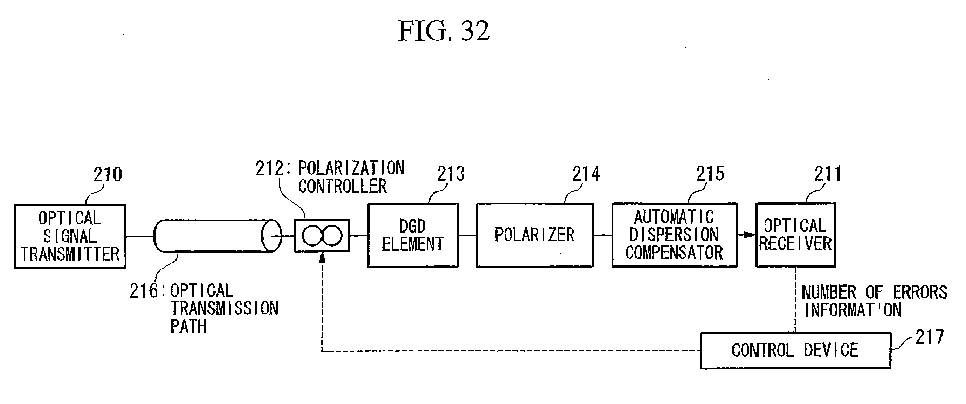

FIG. 32 is a block diagram showing the structure of a polarization mode dispersion compensation device according to a twenty-eighth preferred embodiment of the present invention. With this polarization mode dispersion compensation device of the twenty-eighth preferred embodiment, there are included: an optical signal transmitter 210 and an optical signal receiver 211 which are endowed with an error detection function, a polarization controller 212 which is disposed at the signal reception side of the optical transmission system, a DGD element 213 which compensates for PMD, a polarizer 214 which separates out a specified polarization component, and an automatic dispersion compensator 215.

An optical signal, after having being subjected by the optical signal transmitter 210 to processing for error detection (for example, to BIP-8 for SDH or the like), is outputted upon the optical transmission path 216. The optical signal which has been dispatched from the optical signal transmitter 210 is propagated along the optical transmission path 216, and, after having passed through the polarization controller 212, is inputted to the DGD element 213. This DGD element 213 compensates for the PDM in the optical signal which is inputted to it, and outputs the resulting optical signal to the polarizer 214. A specified polarization component of this optical signal for which the PDM has been compensated is separated out by the polarizer 214. After the optical signal which has been separated out has passed through the automatic dispersion compensator 215, it is received by the optical signal receiver 211. The optical signal receiver 211 performs error detection upon the optical signal which it has received, and outputs information relating to the number of errors therein to a control device 217. Based upon this number of errors information, the control device 217 controls the polarization controller 212 so as to minimize this number of errors which are detected.

By the control device 217 changing the polarization state of the optical signal with the polarization controller 212, it changes the direction of the PMD vectors of the optical transmission path 216 and of The DGD element 213, so that it is able to control the overall PMD vector of the optical transmission path 216 and of the DGD element 213,

Waveform deterioration of the optical signal is the smallest, and the number of errors which are detected by the optical signal receiver 211 is a minimum, if the state holds in which the overall PSP of the optical transmission path 216 and the DGD element 213 is parallel (or is perpendicular) to the linear polarization state (or the circular polarization state) which is separated out by the polarizer 214. Due to this, it is possible to separate out only the optical signal component which has arrived by propagation in the overall principal state of polarization of the optical transmission path 216 and the DGD element 213 by performing control so that the number of errors attains a minimum, and it is possible thus to compensate for transmission quality degradation due to DGD. Furthermore, if the linear polarization component is separated out by the polarizer 214. even if the PSP of the optical transmission path 216 changes along with the passage of time, since the overall PSP of the optical transmission path 216 and of the DGD element 213 is controlled to be parallel (or to be perpendicular) to the polarization state which is being separated out by the polarizer 214, therefore it becomes possible to perform PMD compensation in a stable manner.

The effect of change (PCD) dependent upon the DGD wavelength becomes equivalent to group velocity dispersion, if attention is paid to only one of the two principal states of polarization which are orthogonal to one another. Due to this, the optical signal which has been separated out by the polarizer 214 is the optical signal which has arrived by propagation in one of the PSP, and it is possible simultaneously to implement PCD compensation by compensating the group velocity dispersion with the automatic dispersion compensator 215.

Furthermore, by using the error detection function of the signal transmitter and receiver 210 and 211, it becomes possible to reduce the number of analog components, and so to build the structure easily.

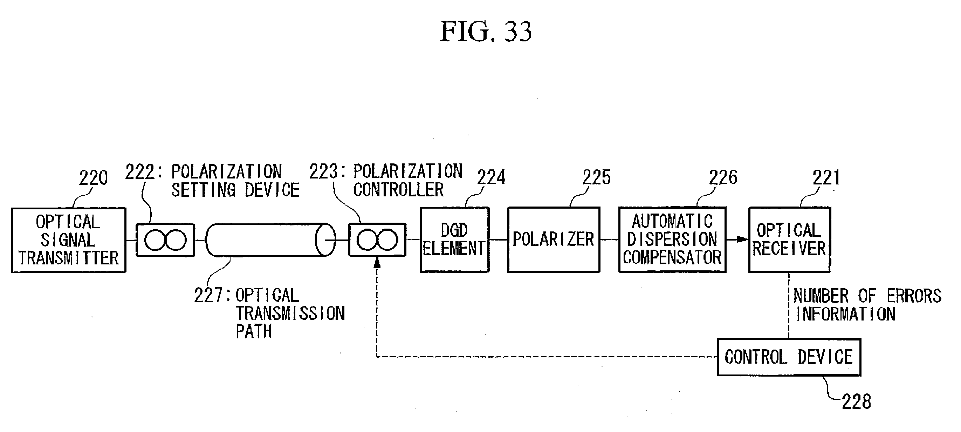

FIG. 33 is a block diagram showing the structure of a polarization mode dispersion compensation device according to a twenty-ninth preferred embodiment of the present invention. With this polarization mode dispersion compensation device of the twenty-ninth preferred embodiment, there are included; an optical signal transmitter 220 and an optical signal receiver 221 which are endowed with an error detection function, a polarization setting device 222 which is disposed at the signal dispatch side of the optical transmission system, a polarization controller 223 which is disposed at the signal reception side of the optical transmission system, a DGD element 224 which compensates for PMD, a polarizer 225 which separates out a specified polarization component, and an automatic dispersion compensator 226.

An optical signal, after having being Subjected by the optical signal transmitter 220 to processing for error detection (for example, to BIP-8 for SDH or the like), is outputted to the polarization setting device 222. After having set the optical signal which it has inputted from the optical signal transmitter 220 to circular polarization (or to linear polarization), the polarization setting device 222 outputs it to the optical transmission path 227. The optical signal which has been dispatched from the polarization setting device 222 is propagated along the optical transmission path 227, and, after having passed through the polarization controller 223, is inputted to the DGD element 224. This DGD element 224 compensates for the PDM in the optical signal which is inputted to it, and outputs the resulting optical signal to the polarizer 225. A specified polarization component of this optical signal for which the PDM has been compensated is separated out by the polarizer 225. After the optical signal which has been separated out has passed through the automatic dispersion compensator 226, it is received by the optical signal receiver 221. The optical signal receiver 221 performs error detection upon the optical signal which it has received, and outputs information relating to the number of errors therein to a control device 228. Based upon this number of errors information, the control device 228 controls the polarization controller 223 so as to minimize this number of errors which are detected.

By the control device 228 changing the polarization state of the optical signal with the polarization controller 223, it changes the direction of the PMD vectors of the optical transmission path 227 and of the DGD element 224, so that it is able to control the overall PMD vector of the optical transmission path 227 and of the DGD clement 224.

Waveform deterioration of the optical signal is the smallest, and the number of errors which are detected by the optical signal receiver 221 is a minimum, if the state holds in which the overall PSP of the optical transmission path 227 and the DGD element 224 is parallel (or is perpendicular) to the linear polarization state (or the circular polarization state) which is separated out by the polarizer 225. Due to this, it is possible to separate out only the optical signal component which has arrived by propagation in the overall principal state of polarization of the optical transmission path 227 and the DGD clement 224 by performing control so that the number of errors attains a minimum, and it is possible thus to compensate for transmission quality degradation due to DGD.

Furthermore, if the linear polarization component is separated out by the polarizer 225, even if the PSP of the optical transmission path 227 changes along with the passage of time, the overall PSP of the optical transmission path 227 and of the DGD element 224 is controlled to be parallel (or to be perpendicular) to the polarization state which is being separated out by the polarizer 225, Accordingly, by setting the optical signal which is dispatched to circular polarization, it becomes possible to keep the power which is inputted to the PSP in which the polarization component which is being received is propagated always constant, and therefore it becomes possible to perform PMD compensation in a stable manner.

The effect of change (PCD) dependent upon the DGD wavelength becomes equivalent to group velocity dispersion, if attention is paid to only one of the two principal states of polarization which are orthogonal to one another. Due to this, the optical signal which has been separated out by the polarizer 225 is the optical signal which has arrived by propagation in one of the FSP, and it is possible simultaneously to implement PCD compensation by compensating the group velocity dispersion with the automatic dispersion compensator 226.

Furthermore, by using the error detection function of the signal transmitter and receiver 220 and 221, it becomes possible to reduce the number of analog components, and so to build the structure easily.

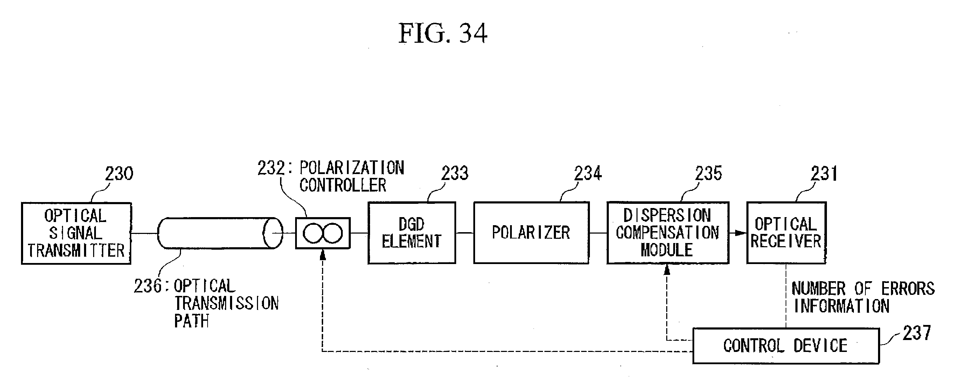

FIG. 34 is a block diagram showing the structure of a polarization mode dispersion compensation device according to a thirtieth preferred embodiment of the present invention. With this polarization mode dispersion compensation device of the thirtieth preferred embodiment, there are included: an optical signal transmitter 230 and an optical signal receiver 231 which are endowed with an error detection function, a polarization controller 232 which is disposed at the signal reception side of the optical transmission system, a DGD element 233 which compensates for PMD, a polarizer 234 which separates out a specified polarization component, and a dispersion compensation module 235.

An optical signal, after having being subjected by the optical signal transmitter 230 to processing for error detection (for example, to BIF-8 for SDH or the like), is outputted to the optical transmission path 236. The optical signal which has been dispatched from the optical signal transmitter 230 is propagated along the optical transmission path 236, and, after having passed through the polarization controller 232, is inputted to the DGD element 233. This DGD element 233 compensates for the PDM in the optical signal which is inputted to it, and outputs the resulting optical signal to the polarizer 234. A specified polarization component of this optical signal for which the PDM has been compensated is separated out by the polarizer 234. After the optical signal which has been separated out has been subjected to group velocity dispersion compensation by the dispersion compensation module 235, it is received by the optical signal receiver 231. The optical signal receiver 231 performs error detection upon the optical signal which it has received, and outputs information relating to the number of errors therein to a control device 237. Based upon this number of errors information, the control device 237 controls the polarization controller 232 and the dispersion compensation module 235 so as to minimize this number of errors which are detected.

By the control device 237 changing the polarization state of the optical signal with the polarization controller 232, it changes the direction of the PMD vectors of the optical transmission path 236 and of the DGD element 233, so that it is able to control the overall PMD vector of the optical transmission path 236 and of the DGD element 233.

Waveform deterioration of the optical signal is the smallest, and the number of errors which are detected by the optical signal receiver 231 is a minimum, if the state holds in which the overall PSP of the optical transmission path 236 and the DGD element 233 is parallel (or is perpendicular) to the polarization state which is separated out by the polarizer 234, Due to this, it is possible to separate out only the optical signal component which has arrived by propagation in the overall principal state of polarization of the optical transmission path 236 and the DGD element 233 by performing control so that the number of errors attains a minimum, and it is possible thus to compensate for transmission quality degradation due to DGD.

Furthermore, if the linear polarization component is separated out by the polarizer 234, since, even if the PSP of the optical transmission path 236 changes along with the passage of time, the overall PSP of the optical transmission path 236 and of the DGD element 233 is controlled to be parallel (or to be perpendicular) to the polarization state which is being separated out by the polarizer 234, accordingly it becomes possible to perform PMD compensation in a stable manner,

The effect of change (PCD) dependent upon the DGD wavelength becomes equivalent to group velocity dispersion, if attention is paid to only one of the two principal states of polarization which are orthogonal to one another. Due to this, the optical signal which has been separated out by the polarizer 234 is the optical signal which has arrived by propagation in one of the PSP, and it is possible simultaneously to implement PCD compensation by compensating the group velocity dispersion with the dispersion compensation module 235 so that the number of errors which are detected attains a minimum.

Furthermore, by using the error detection function of the signal transmitter and receiver 230 and 231, it becomes possible to reduce the number of analog components, and so to build the structure easily.

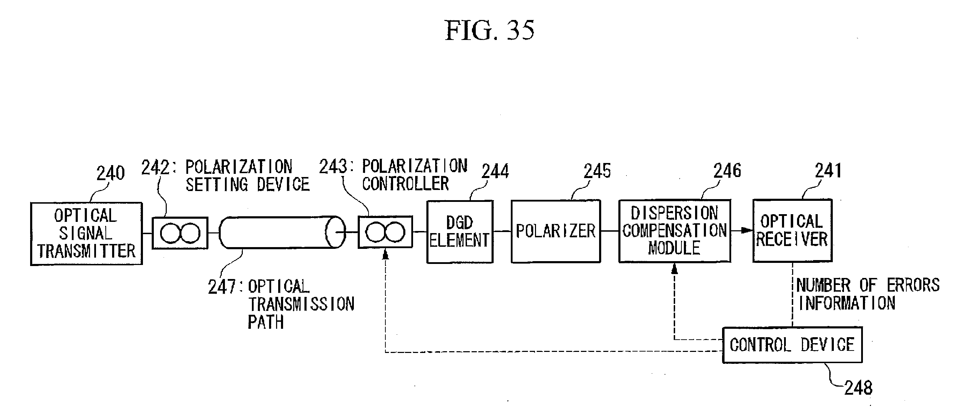

FIG. 35 is a block diagram showing the structure of a polarization mode dispersion compensation device according to a thirty-first preferred embodiment of the present invention. With this polarization mode dispersion compensation device of the thirty-first preferred embodiment, there are included: an optical signal transmitter 240 and an optical signal receiver 241 which are endowed with an error detection function, a polarization setting device 242 which is disposed at the signal dispatch side of the optical transmission system, a polarization controller 243 which is disposed at the signal reception side of the optical transmission system, a DGD element 244 which compensates for PMD, a polarizer 245 which separates out a specified polarization component, and a dispersion compensation module 246.

An optical signal, after having being subjected by the optical signal transmitter 240 to processing for error detection (for example, to BIP-8 for SDH or the like), is outputted to the polarization selting device 242. After having set the optical signal which it has inputted from the optical signal transmitter 240 to circular polarization (or to linear polarization), the polarization setting device 242 outputs it to the optical transmission path 247. The optical signal which has been dispatched from the polarization setting device 242 is propagated along the optical transmission path 247, and, after having passed through the polarization controller 243, is inputted to the DGD element 244. This DGD element 244 compensates for the PDM in the optical signal which is inputted to it, and outputs the resulting optical signal to the polarizer 245. A specified polarization component of this optical signal for which the PDM has been compensated is separated out by the polarizer 245. After the optical signal which has been separated out has passed through the dispersion compensation module 246, it is received by the optical signal receiver 241. The optical signal receiver 241 performs error detection upon the optical signal which it has received, and outputs information relating to the number of errors therein to a control device 248. Based upon this number of errors information, the control device 248 controls the polarization controller 243 and the dispersion compensation module 246 so as to minimize this number of errors which are detected.

By the control device 248 changing the polarization state of the optical signal with the polarization controller 243, it changes the directions of the PMD vectors of the optical transmission path 247 and of the DGD element 244, so that it is able to control the overall PMD vector of the optical transmission path 247 and of the DGD element 244.

Waveform deterioration of the optical signal is the smallest, and the number of errors which are detected by the optical signal receiver 241 is a minimum, if the state holds in which the overall PSP of the optical transmission path 247 and the DGD element 244 is parallel (or is perpendicular) to the linear polarization stale (or the circular polarization state) which is separated out by the polarizer 245. Due to this, it is possible to separate out only the optical signal component which has arrived by propagation in the overall principal state of polarization of the optical transmission path 247 and the DGD element 244 by performing control so that the number of errors attains a minimum, and it is possible thus to compensate for transmission quality degradation due to DGD.

Furthermore, if the linear polarization component is separated out by the polarizer 245, since, even if the PSP of the optical transmission path 247 changes along with the passage of time, the overall PSP of the optical transmission path 247 and of the DGD element 244 is controlled to be parallel (or to be perpendicular) to the polarization state which is being separated out by the polarizer 245, accordingly, by setting the optical signal which is dispatched to circular polarization, it becomes possible to keep the power which is inputted to the PSP in which the polarization component which is being received is propagated always constant, and therefore it becomes possible to perform PMD compensation in a stable manner.

The effect of change (PCD) dependent upon the DGD wavelength becomes equivalent to group velocity dispersion, if attention is paid to only one of the two principal states of polarization which are orthogonal to one another. Due to this, the optical signal which has been separated out by the polarizer 245 is the optical signal which has arrived by propagation in one of the PSP, and it is possible simultaneously to implement PCD compensation by compensating the group velocity dispersion with the dispersion compensation module 246.

Furthermore, by using the error detection function of the signal transmitter and receiver 240 and 241, it becomes possible to reduce the number of analog components, and so to build the structure easily.

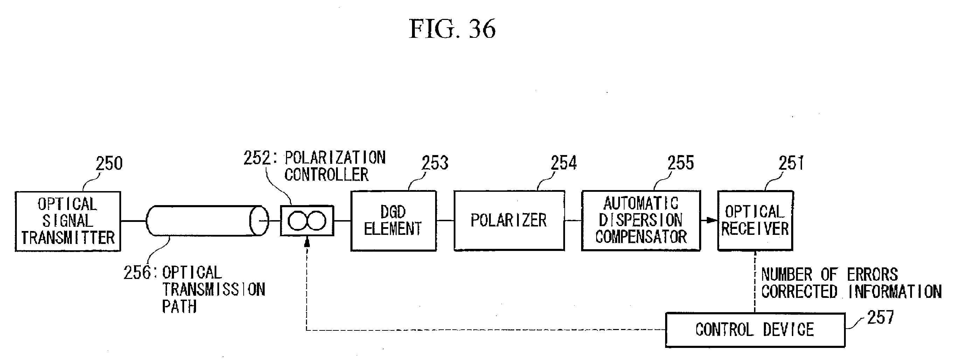

FIG. 36 is a block diagram showing the structure of a polarization mode dispersion compensation device according to a thirty-second preferred embodiment of the present invention. With this polarization mode dispersion compensation device of the thirty-second preferred embodiment, there are included: an optical signal transmitter 250 and an optical signal receiver 251 which are endowed with an error correction function, a polarization controller 252 which is disposed at the signal reception side of the optical transmission system, a DGD element 253 which compensates for PMD, a polatazer 254 which separates out a specified polarization component, and an automatic dispersion compensator 255.

An optical signal, after having being subjected by the optical signal transmitter 250 to encoding processing for error correction codes, is outputted to the optical transmission path 256. The optical signal which has been dispatched from the optical signal Transmitter 250 is propagated along the optical transmission path 256, and, after having passed through the polarization controller 252, is inputted to the DGD element 253. This DGD element 253 compensates for the PDM in the optical signal which is inputted to it, and outputs the resulting optical signal to the polarizer 254. A specified polarization component of this optical signal for which the PDM has been compensated is separated out by the polarizer 254. After the optical signal which has been separated out has been subjected to group velocity dispersion compensation by the automatic dispersion compensator 255, it is received by the optical signal receiver 251, and is subjected to decoding processing of the error correction codes, so that errors therein are corrected. The optical signal receiver 251 performs error correction detection upon the optical signal which it has received, and outputs information relating to the number of errors which were corrected to a control device 257. Based upon this number of errors corrected information, the control device 257 controls the polarization controller 252 so as to minimize this number of errors which are corrected.

By the control device 257 changing the polarization state of the optical signal with the polarization controller 252, it changes the direction of the PMD vectors of the optical transmission path 256 and of the DGD element 253, so that it is able to control the overall PMD vector of the optical transmission path 256 and of the DGD element 253.

Waveform deterioration of the optical signal is the smallest, and the number of errors which are detected by the optical signal receiver 251 is a minimum, if the state holds in which the overall PSP of the optical transmission path 256 and the DGD element 253 is parallel (or is perpendicular) to the polarization state which is separated out by the polarizer 254.

Due to this, it is possible to separate out only the optical signal component which has arrived by propagation in the overall principal state of polarization of the optical transmission path 256 and the DGD element 253 by performing control so that the number of errors which are corrected attains a minimum, and it is possible thus to compensate for transmission quality degradation due to DGD

Furthermore, if the linear polarization component is separated out by the polarizer 254, even if the PSP of the optical transmission path 256 changes along with the passage of time, since the overall PSP of the optical transmission path 256 and of the DGD element 253 is controlled to be parallel (or to be perpendicular) to the polarization state which is being separated out by the polarizer 254, therefore it becomes possible to perform PMD compensation in a stable manner.

The effect of change (PCD) dependent upon the DGD wavelength becomes equivalent to group velocity dispersion, if attention is paid only to one of the two PSP which are orthogonal to one another, as described above. Due to this, the optical signal which has been separated out by the polarizer 254 is the optical signal which has arrived by propagation along one of the PSP, and it is possible simultaneously to implement PCD compensation by compensating the group velocity dispersion with the automatic dispersion compensator 255.

Furthermore, by using the error detection function of the signal transmitter and receiver 250 and 251, it becomes possible to reduce the number of analog components, and so to build the structure easily.

Yet further, since the control is performed using the number of errors which are corrected, it becomes possible to perform control with no errors being present in the signal which is outputted from the optical signal receiver.

FIG, 37 is a block diagram showing the structure of a polarization mode dispersion compensation device according to a thirty-third preferred embodiment of the present invention. With this polarization mode dispersion compensation device of the thirty-third preferred embodiment, there are included: an optical signal transmitter 260 and an optical signal receiver 261 which are endowed with an error correction function, a polarization setting device 262 which is disposed at the signal dispatch side of the optical transmission system, a polarization controller 263 which is disposed at the signal reception side of the optical transmission system, a DGD element 264 which compensates for PMD, a polarizer 265 which separates out a specified polarization component, and an automatic dispersion compensator 266.

An optical signal, after having being subjected by the optical signal transmitter 260 to encoding processing for error correction codes, is outputted to the polarization control device 262. This optical signal which has been outputted from the optical signal transmitter 260 is set to circular polarization (or to linear polarization) by the polarization setting device 262, and is then dispatched into the optical transmission path 267. The optical signal which has thus been dispatched from the polarization setting device 262 is propagated along the optical transmission path 267, and, after having passed through the polarization controller 263, is inputted to the DGD element 264. This DGD element 264 compensates for the PDM in the optical signal which is inputted to it, and outputs the resulting optical signal to the polarizer 265. A specified polarization component of this optical signal for which the PDM has been compensated is separated out by the polarizer 265. After the optical signal which has been separated out has been subjected to group velocity dispersion compensation by the automatic dispersion compensator 266, it is received by the optical signal receiver 261, and is subjected to decoding processing of the error correction codes, so that errors therein are corrected. The optical signal receiver 261 performs error correction detection upon the optical signal which it has received, and outputs information relating to the number of errors which were corrected to a control device 268. Based upon this number of errors corrected information, the control device 268 controls the polarization controller 263 so as to minimize this number of errors which are corrected.

By the control device 268 changing the polarization state of the optical signal with the polarization controller 263, it changes the directions of the PMD vectors of the optical transmission path 267 and of the DGD element 264, so that it is able to control the overall PMD vector of the optical transmission path 267 and of the DGD element 264. Waveform deterioration of the optical signal is the smallest, and the number of errors which are detected by the optical signal receiver 261 is a minimum, if the state holds in which the overall PSP of the optical transmission path 267 and the DGD element 264 is parallel (or is perpendicular) to the polarization state which is separated out by the polarizer 265.

Due to this, it is possible to separate out only the optical signal component which has arrived by propagation in the overall principal state of polarization of the optical transmission path 267 and the DGD element 264 by performing control so that the number of errors which are corrected attains a minimum, and it is possible thus to compensate for transmission quality degradation due to DGD.

Furthermore, if the linear polarization component is separated out by the polarizer 265, even if the PSP of the optical transmission path 267 changes along with the passage of time, since the overall PSP of the optical transmission path 267 and of the DGD element 264 is controlled to be parallel (or to be perpendicular) to the polarization state which is being separated out by the polarizer 265. Accordingly, by setting the optical signal which is dispatched to circular polarization, it is possible to keep the power which is inputted in the PSP in which the polarization component which is being received is being propagated always constant, and therefore it becomes possible to perform PMD compensation in a stable manner.

The effect of change (PCD) dependent upon the DGD wavelength becomes equivalent to group velocity dispersion, if attention is paid only to one of the two PSP which are orthogonal to one another, as described above. Due to this, the optical signal which has been separated out by the polarizer 265 is the optical signal which has arrived by propagation along one of the PSP, and it is possible simultaneously to implement PCD compensation by compensating the group velocity dispersion with the automatic dispersion compensator 266.

Furthermore, by using the error detection function of the signal transmitter and receiver 260 and 261, it becomes possible to reduce the number of analog components, and so to build the structure easily.

Yet further, since the control is performed using the number of errors which are corrected, it becomes possible to perform control with no errors being present in the signal which is outputted from the optical signal receiver.

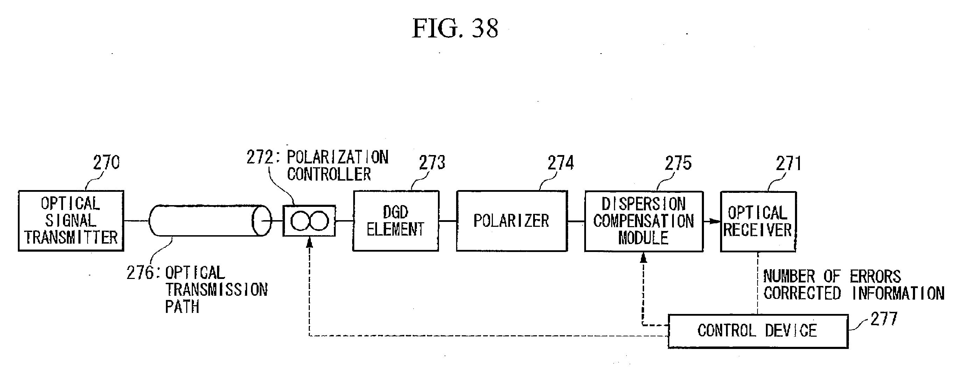

FIG. 38 is a block diagram showing the structure of a polarization mode dispersion compensation device according to a thirty-fourth preferred embodiment of the present invention. This polarization mode dispersion compensation device of the thirty-fourth preferred embodiment has the same basic structure as the polarization mode dispersion compensation device of the above described thirtieth preferred embodiment, except that it is distinguished therefrom in that an optical signal transmitter 270 and an optical signal receiver 271 which are endowed with an error correction function are utilized, and the polarization controller 272 and the dispersion compensation module 275 are controlled by the optical signal receiver 271 so that the number of errors which are corrected attains a minimum.

In this case as well, since the error detection functions of the signal transmitter and receiver 270 and 271 are utilized, it becomes possible to reduce the number of analog components, so that the structure can be built easily,

Yet further, since the control is performed using the number of errors which are corrected, it becomes possible to perform control with no errors being present in the signal which is outputted from the optical signal receiver.

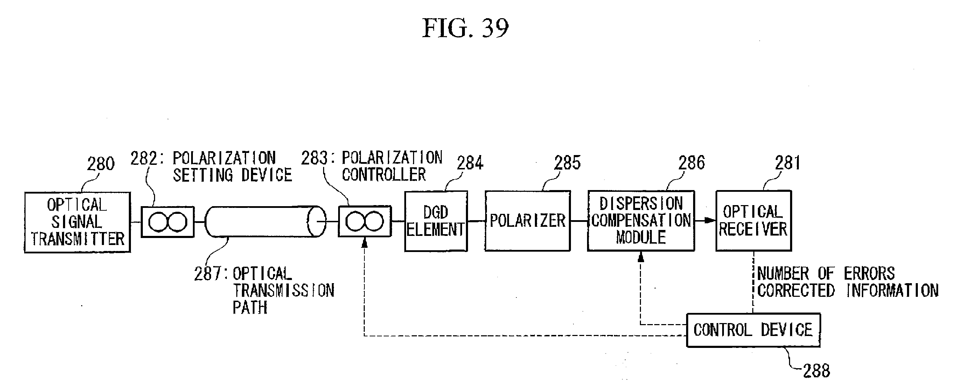

FIG. 39 is a block diagram showing the structure of a polarization mode dispersion compensation device according to a thirty-fifth preferred embodiment of the present invention. This polarization mode dispersion compensation device of the thirty-fifth preferred embodiment has the same basic structure as the polarization mode dispersion compensation device of the above described thirty-first preferred embodiment, except that it is distinguished therefrom in that an optical signal transmitter 280 and an optical signal receiver 281 which are endowed with an error correction function are utilized, and the polarization controller 283 and the dispersion compensation module 286 are controlled by the optical signal receiver 281 so that the number of errors which are corrected attains a minimum.

In this case as well, since the error detection functions of the signal transmitter and receiver 280 and 281 are utilized, it becomes possible to reduce the number of analog components, so that the structure can be built easily.

Yet further, since the control is performed using the number of errors which are corrected, it becomes possible to perform control with no errors being present in the signal which is outputted from the optical signal receiver.

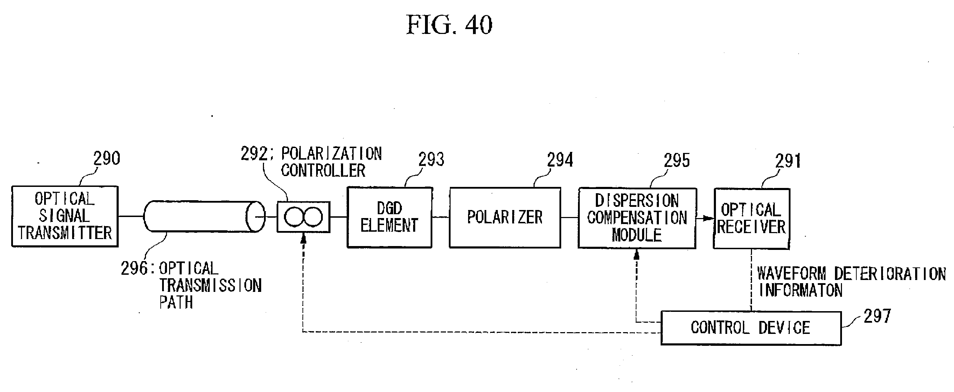

FIG. 40 is a block diagram showing the structure of a polarization mode dispersion compensation device according to a thirty-sixth preferred embodiment of the present invention. This polarization mode dispersion compensation device of the thirty-sixth preferred embodiment has the same basic structure as the polarization mode dispersion compensation device of the above described thirtieth preferred embodiment, except that it is distinguished therefrom in that a normal optical signal transmitter 290 and an optical signal receiver 291 which is endowed with an error correction function are utilized, and the polarization controller 292 and the dispersion compensation module 295 are controlled by the optical signal receiver 291 so that the waveform deterioration which is detected attains a minimum.

In this case, by using the waveform deterioration detection function of the optical signal receiver 291 for the control, it is possible to detect low waveform deterioration in which code errors do not occur, and it becomes possible to perform control in a stabilized manner within a region in which the error ratio is extremely low.

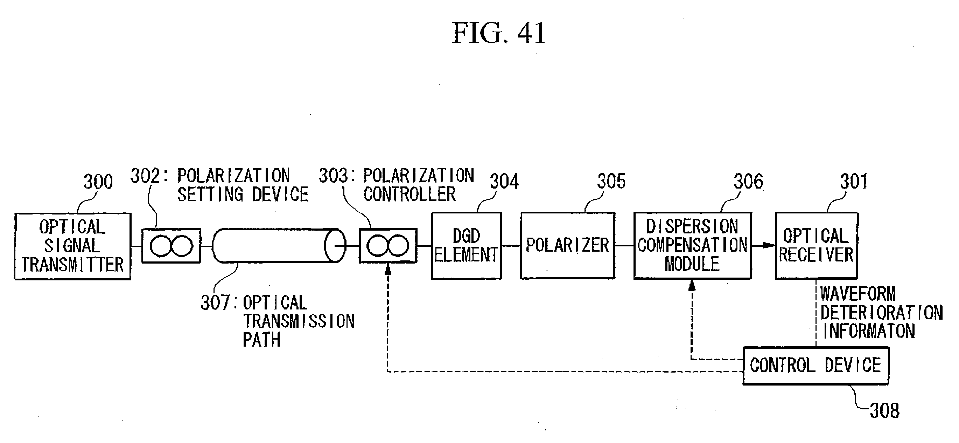

FIG. 41 is a block diagram showing the structure of a polarization mode dispersion compensation device according to a thirty-seventh preferred embodiment of the present invention. This polarization mode dispersion compensation device of the thirty-seventh preferred embodiment has the same basic structure as the polarization mode dispersion compensation device of the above described thirty-first preferred embodiment, except that it is distinguished therefrom in that a normal optical signal transmitter 300 and an optical signal receiver 301 which is endowed with an error correction function are utilized, and the polarization controller 303 and the dispersion compensation module 306 are controlled by the optical signal receiver 301 so that the waveform deterioration which is detected attains a minimum.

In this case, by using the waveform deterioration detection function of the optical signal receiver 301 for the control, it is possible to detect low waveform deterioration in which code errors do not occur, and it becomes possible to perform control in a stabilized manner within a region in which the error ratio is extremely low.

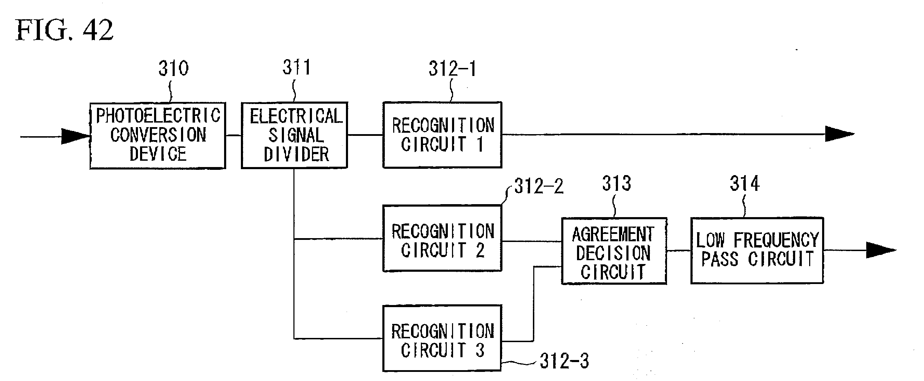

FIG. 42 is a block diagram showing the structure of a polarization mode dispersion compensation device according to a thirty-eighth preferred embodiment of the present invention. In this polarization mode dispersion compensation device of the thirty-eighth preferred embodiment, the optical signal receiver which is endowed with a waveform deterioration detection function is made up from a photoelectric conversion device 310, an electrical signal divider 311, three recognition circuits 312-1, 312-2, and 312-3, an agreement decision circuit 313, and a low frequency pass circuit 314.

The optical signal which has been inputted to the optical signal receiver is inputted to the photoelectric conversion device 310. It is converted to an electrical signal by the photoelectric conversion device 310, and then is divided by the electrical signal divider 311, the three resultant electrical signals then being respectively inputted to the three recognition circuits 312-1; 312-2, and 312-3. One of these three recognition circuits which has been selected (for example, the recognition circuit 312-1) is set to a most suitable recognition level, and its output signal is outputted to the outside as a recognition and regeneration data signal. And one of the other two recognition circuits 312-2 and 312-3 other than the above recognition circuit 312-1 is set to a recognition level which is higher than that suitable recognition level, while the other of these other two recognition circuits 312-2 and 312-3 is set to a recognition level which is lower than that suitable recognition level. When the intensity of signal '1' becomes low due to waveform deterioration, then recognition is performed by the recognition circuit which has the high recognition level, and the output signals of the two recognition circuits 312-2 and 312-3 come to be in disagreement with one another. Furthermore, if the intensity of signal '0' should become high, the output signals of the two recognition circuits 312-2 and 312-3 also come not to agree with one another. If the input signals to the agreement decision circuit 313 from the two recognition circuits 312-2 and 312-3 do not agree with one another, then the agreement decision circuit 313 outputs a high level signal.

When the waveform deterioration becomes high, a large number of disagreements between the decisions of the two recognition circuits 312-2 and 312-3 occurs, and the proportion of high level signals which are outputted by the agreement decision circuit 313 becomes high. The intensity of the low frequency component which has been extracted by the low frequency pass circuit 314 from the output signal of the agreement decision circuit 313 becomes great in proportion to the rate of high level signals which are outputted from this agreement decision circuit 313, in other words, becomes great in proportion to the waveform deterioration. Accordingly, it is possible to minimize the waveform deterioration due to PMD by the above described control circuit controlling the polarization conversion means so that the output voltage of the low frequency pass circuit 314 attains a minimum, and the above described polarizer is able to separate out the polarization component which is parallel to the PSP of the above described optical transmission path. Furthermore, by controlling the above described dispersion compensation module in the same manner, the above described control circuit is able to minimize the waveform deterioration due to group velocity dispersion.

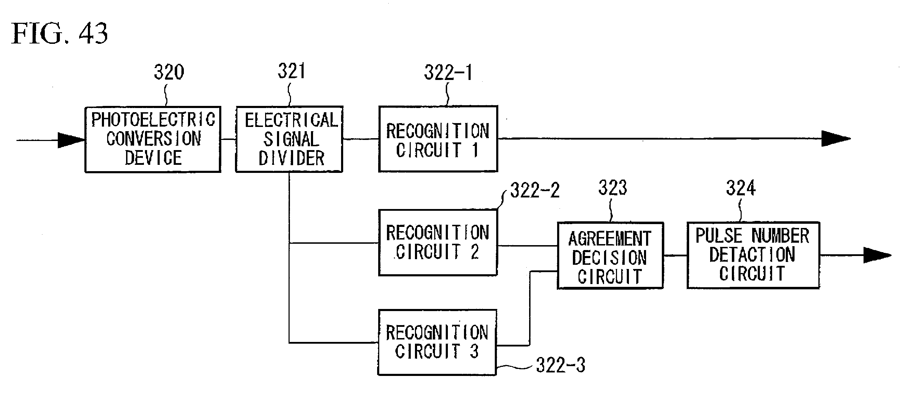

FIG. 43 is a block diagram showing the structure of a polarization mode dispersion compensation device according to a thirty-ninth preferred embodiment of the present invention. This polarization mode dispersion compensation device of the thirty-ninth preferred embodiment has the same basic structure as the polarization mode dispersion compensation device of the above described thirty-eighth preferred embodiment, except that it is distinguished therefrom in that, instead of the low frequency pass circuit 314 of that thirty-eighth preferred embodiment, there is utilized a pulse number detection circuit 324. In this case it is possible to detect waveform deterioration by detecting the number of pulses in the output signal of the agreement decision circuit 323, even if the number of disagreements is extremely small, in other words if the degree of waveform deterioration is small.

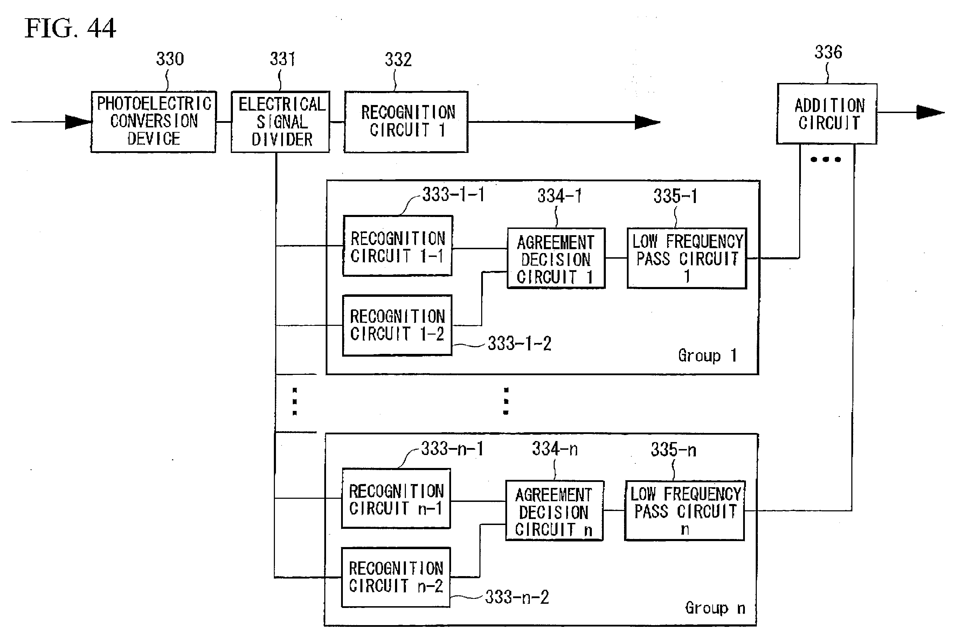

FIG. 44 is a block diagram showing the structure of a polarization mode dispersion compensation device according to a fortieth preferred embodiment of the present invention. In this polarization mode dispersion compensation device of the fortieth preferred embodiment, the optical signal receiver which is endowed with a waveform deterioration detection function is made up from a photoelectric conversion device 330, an electrical signal divider 331, ((2×n)+1) recognition circuits 332, 333-1-1 through 333-n-2, n agreement decision circuits 334-1 through 334-n, n low frequency pass circuits 335-1 through 335-n, and an addition circuit 336.

The optical signal which has been inputted to the optical signal receiver is inputted to the photoelectric conversion device 330. It is converted to an electrical signal by the photoelectric conversion device 310, and then is divided by the electrical signal divider 331, the resultant electrical signals then being respectively inputted to the ((2×n)+1) recognition circuits 332 and 333-1-1 through 333-n-2, One recognition circuit which has been selected from these ((2×n)+1) recognition circuits 332 and 333-1-1 through 333-n-2 (for example, the recognition circuit 332) is set to the most suitable recognition level, and its output signal is outputted to the outside as a recognition and regeneration data signal. The other (2×n) recognition circuits are grouped into pairs. For example, as shown in FIG. 44, group 1 consists of the recognition circuits 333-1-1 and 333-1-2, while group n consists of the recognition circuits 333-n-1 and 333-n-2.

In each of these groups, the two recognition circuits perform recognition operation at the same timing, and one of these two recognition circuits is set to a recognition level which is higher than the suitable recognition level, while the other of these two recognition circuits is set to a recognition level which is lower than the suitable recognition level. When the intensity of signal '1' becomes low due to waveform deterioration, then recognition is performed by that recognition circuit which has the high recognition level, and the output signals of the two recognition circuits come to be in disagreement with one another. Furthermore, if the intensity of signal '0' should become high, again the output signals of the two recognition circuits come not to agree with one another. If the input signals to the corresponding one of the agreement decision circuits 334-1 through 334-n from these two recognition circuits do not agree with one another, then that One of the agreement decision circuits 334-1 through 334-n outputs a high level signal.

When the waveform deterioration becomes high, for example, a large number of disagreements occur between the decisions of the two recognition circuits 333-1-1 and 333-1-2, and the proportion of high level signals which are outputted by the corresponding agreement decision circuit 334-1 becomes high. The intensity of the low frequency component which has been extracted by the corresponding low frequency pass circuit 335-1 from the output signal of this agreement decision circuit 334-1 becomes great in proportion to the rate of high level signals which are outputted from this agreement decision circuit 334-1, in other words, becomes great in proportion to the waveform deterioration. Moreover, by performing the recognition operation in each of the groups at a different timing, it is possible to detect waveform deterioration over a wide range of time slots. In other words, by adding together the output voltages of all of the low frequency pass circuits 335-1 through 335-n for each of the groups, it becomes possible also to detect waveform deterioration in the phase direction.

Accordingly, it is possible to minimize the waveform deterioration due to PMD by the above described control circuit controlling the polarization conversion means so that the output voltage of the addition circuit 336 attains a minimum, and the above described polarizer is able to separate out the polarization component which is parallel to the PSP of the above described optical transmission path. Furthermore, by controlling the above described dispersion compensation module in the same manner, the above described control circuit is able to minimize the waveform deterioration due to group velocity dispersion.

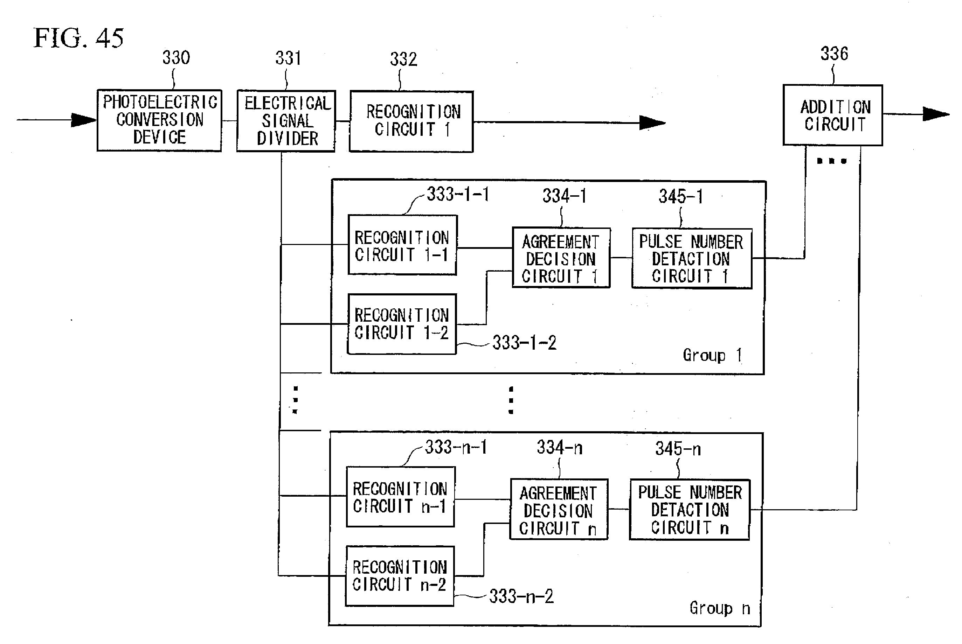

FIG. 45 is a block diagram showing the structure of a polarization mode dispersion compensation device according to a forty-first preferred embodiment of the present invention. This polarization mode dispersion compensation device of the forty-first preferred embodiment has the same basic structure as the polarization mode dispersion compensation device of the above described fortieth preferred embodiment, except that it is distinguished therefrom in that, instead of the low frequency pass circuits 335-1 through 335-n of that fortieth preferred embodiment, there are utilized pulse number detection circuits 345-1 through 345-n. In this case it is possible to detect waveform deterioration by detecting the number of pulses in the output signals of the various agreement decision circuits 345-1 through 345-n, even if the number of disagreements is extremely small, in other words if the degree of waveform deterioration is small.

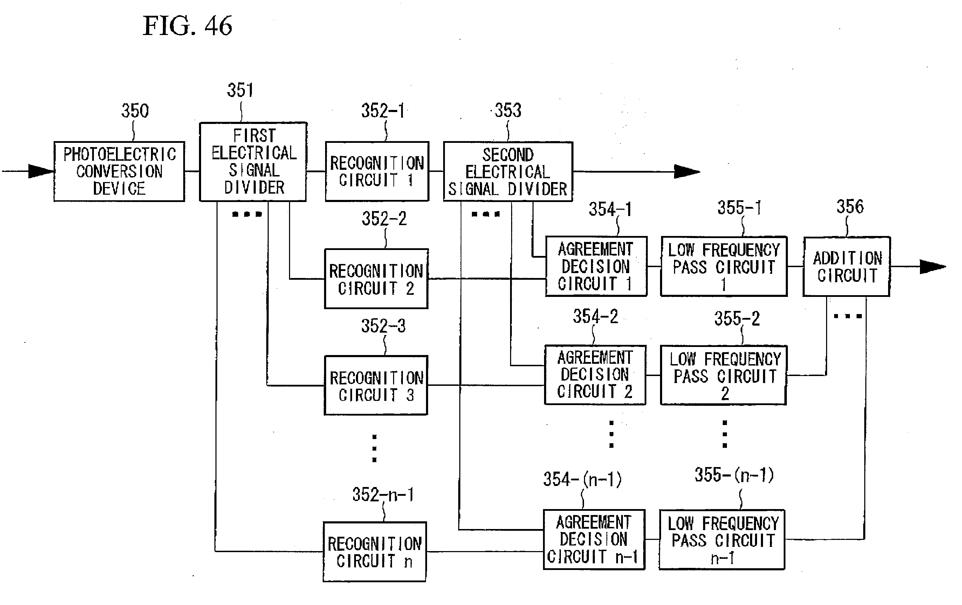

FIG. 46 is a block diagram showing the structure of a polarization mode dispersion compensation device according to a forty-second preferred embodiment of the present invention. in this polarization mode dispersion compensation device of the forty-second preferred embodiment, the optical signal receiver which is endowed with a waveform deterioration detection function is made up from a photoelectric conversion device 350, a first electrical signal divider 351, n recognition circuits 352-1 through 352-n, a second electrical signal divider 353, (n-1) agreement decision circuits 354-1 through 354-(n-1), (n-1) low frequency pass circuits 355-1 through 355-(n-1), and an addition circuit 356.

The optical signal which has been inputted to the optical signal receiver is inputted to the photoelectric conversion device 350. It is converted to an electrical signal by the photoelectric conversion device 350, and then is divided by the electrical signal divider 351 into n electrical signals, which are then respectively inputted to the recognition circuits 352-1 through 352-n. One recognition circuit which has been selected from this group of recognition circuits (in the following, by way of example, the recognition circuit 352-1) is set to the most suitable recognition level and to the most suitable recognition timing. The other ones of these recognition circuits (in the following, by way of example, the recognition circuits 352-2 through 352-n) may perform their recognition operation all at the same timing, or may perform their recognition operation at any desired plurality of timings. Their recognition levels may be higher than the suitable recognition level, or may be lower than it; and moreover the recognition levels for those ones of these recognition circuits which operate at the same timing should be set to be mutually different.

Furthermore, the signal which is outputted from the recognition circuit 352-1 is again divided by the second electrical signal divider 353 into n signals, and one of these output signals which have thus been separated is outputted to the outside as a recognition and regeneration data signal. And the agreement or disagreement of the other (n-1) of these output signals which have thus been separated out with the output signals of each of the recognition circuits 352-2 through 352-n is decided upon by the respective one of the agreement decision circuits 354-1 through 354-(n-1). The output intensities of the low frequency components of the output signals from the agreement decision circuits 354-1 through 354-(n-1) which are extracted by the low frequency pass circuits 355-1 through 355-(n-1) which correspond to these agreement decision circuits are added together by the addition circuit 356. When the intensity of signal '1' becomes low due to waveform deterioration, then recognition is performed by those recognition circuits which have high recognition levels, and the output signals of these recognition circuits and the output signal of the recognition circuit 352-1 which is set to the most suitable recognition level come to be in disagreement with one another. Furthermore, if the intensity of signal '0' should become high, the output signals of those recognition circuits which have low recognition levels and the output signal of the recognition circuit 352-1 again come not to agree with one another. If the input signals to any one of the agreement decision circuits 354-1 through 354-(n-1) from its two corresponding recognition circuits (one of which is the recognition circuit 352-1) do not agree with one another, then that one of the agreement decision circuits 354-1 through 354-(n-1) outputs a high level signal.

When the waveform deterioration becomes high, a large number of disagreements occur between the decision of the recognition circuit 352-1 and the decisions of each of the other recognition circuits 352-2 through 352-n, and the proportion of high level signals which are outputted by the corresponding agreement decision circuits 354-1 through 354-(n-1) becomes high. In other words, it is possible to obtain an eye opening for each recognition level by comparing the output signal of the one of the recognition circuits which is set to the most suitable recognition level (in other words, the output signal of the recognition circuit 352-1) with the output signals of the plurality of other recognition circuits 352-2 through 352-n which are set to different recognition levels, Furthermore, it is possible to obtain information relating to the signal waveform over a wide phase range by comparing the output signal of the recognition circuit 352-1 which is set to the most suitable recognition level and the most suitable recognition timing with the output signals of the plurality of other recognition circuits 352-2 through 352-n which are set to different recognition timings. The intensities of the low frequency components which have been extracted by the corresponding low frequency pass circuit 355-1 through 355-(n-1) from the output signals of the agreement decision circuits 354-1 through 354-(n-1) become great in proportion to the rate of high level signals which are outputted from the corresponding agreement decision circuits 354-1 through 354-(n-1), in other words, becomes great in proportion to the waveform deterioration. In other words, by adding together the outputs of the various low frequency pass circuits 355-1 through 355-(n-1), it is possible to obtain information relating to the signal waveform over a wide intensity range and a wide phase range, and it is possible to detect waveform deterioration with high sensitivity. Accordingly, it is possible to minimize the waveform deterioration due to PMD by the above described control circuit controlling the polarization conversion means so that the output voltage of the addition circuit 356 attains a minimum, and the above described polarizer is able to separate out the polarization component which is parallel to the principal state of polarization (PSP) of the above described optical transmission path. Furthermore, by controlling the above described dispersion compensation module in the same manner, the above described control circuit is able to minimize the waveform deterioration due to group velocity dispersion.

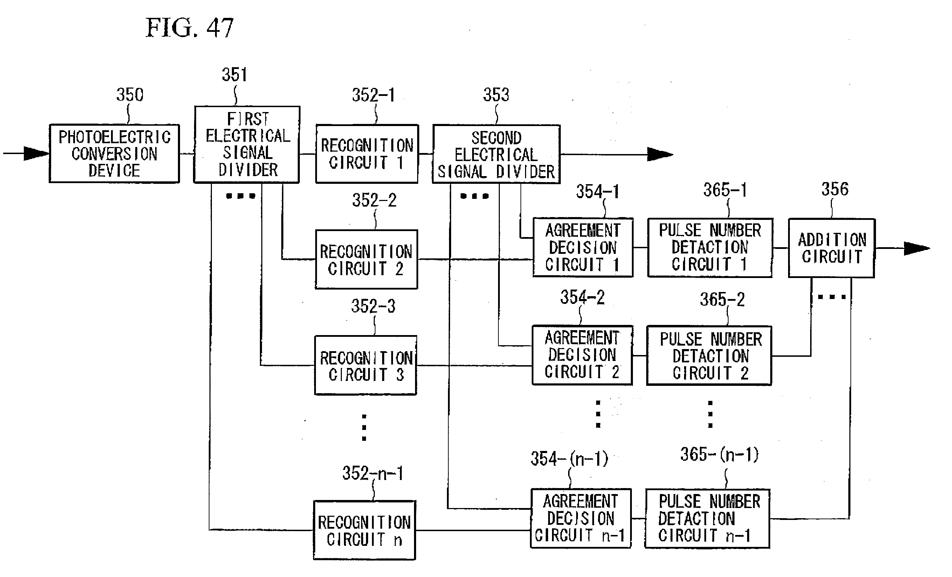

FIG. 47 is a block diagram showing the structure of a polarization mode dispersion compensation device according to a forty-third preferred embodiment of the present invention. This polarization mode dispersion compensation device of the forty-third preferred embodiment has the same basic structure as the polarization mode dispersion compensation device of the above described forty-second preferred embodiment, except that it is distinguished therefrom in that, instead of the low frequency pass circuits 355-1 through 355-(n-1) of that forty-second preferred embodiment, there are utilized pulse number detection circuits 365-1 through 365-(n-1). In this case it is possible to detect waveform deterioration by detecting the number of pulses in the output signals of the various agreement decision circuits 354-1 through 354-(n-1), even if the number of disagreements is extremely small, in other words even if the degree of waveform deterioration is small.

The polarization mode dispersion compensation device of a forty-fourth preferred embodiment of the present invention has the same basic structure as any of the polarization mode dispersion compensation devices of the above described first through forty-third preferred embodiments, except that it is distinguished in that, as one example, the optical signal receiver 260 of the thirty-third preferred embodiment performs its output in a return-to-zero format, in which the optical phase is additionally reversed for each bit.

Although compensation is performed by the automatic dispersion compensator 266 with regard to transmission quality deterioration due to PCD for higher order PMD, pulse widening after transmission also occurs due to change of another PSP dependent upon the wavelength. Since a single polarization component is separated out by the polarizer 265, occurrence of interference with the neighboring bits and pulse widening are suppressed, even when pulse width widening has occurred, by utilizing a return to zero format in which, for the optical signal, the optical phase is reversed for each bit. By doing this, it is possible to suppress deterioration of the transmission quality due to changes of the PSF which are dependent upon the wavelength.

Furthermore, as another example, the polarization mode dispersion compensation device of the thirty-third preferred embodiment may have the same basic structure as any of the polarization mode dispersion compensation devices of the above described first through forty-third preferred embodiments, except that it is distinguished in that the optical signal receiver 260 performs its output in a return-to-zero format, in which the optical phase is additionally reversed for each pulse. In this case, as described above, with regard to transmission quality deterioration due to PCD for higher order PMD, although compensation is performed by the automatic dispersion compensator 266, pulse widening after transmission also occurs due to change of another PSP dependent upon the wavelength. Since a single polarization component is separated out by the polarizer 265, a return to zero format is utilized in which, for the optical signal, the optical phase is reversed for each pulse.

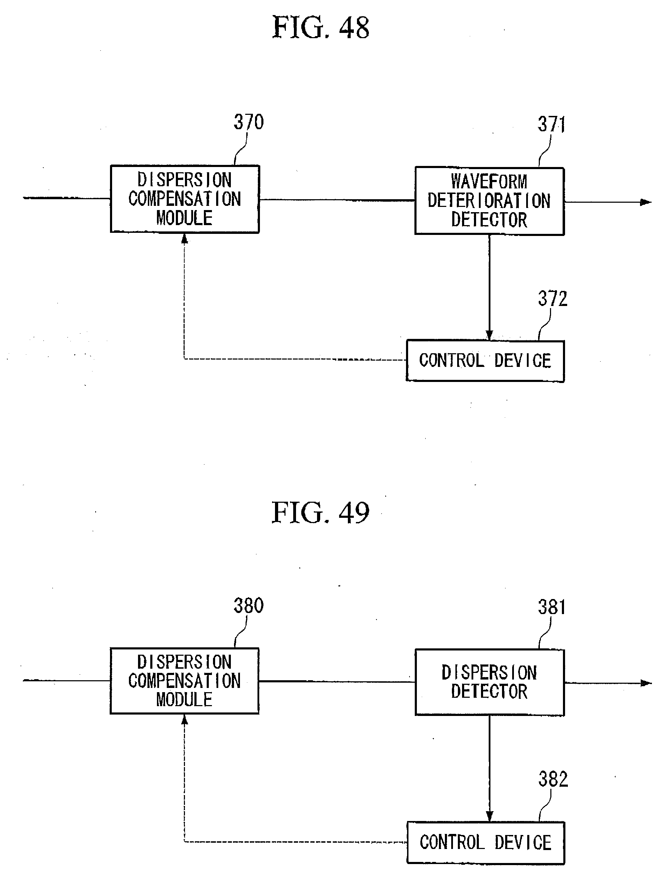

FIG. 48 is a block diagram showing the structure of a polarization mode dispersion compensation device according to a forty-fifth preferred embodiment of the present invention. In this polarization mode dispersion compensation device of the forty-fifth preferred embodiment, the automatic dispersion compensator described with regard to the above described preferred embodiments is distinguished in that, as one example, the automatic dispersion compensator 266 of the thirty-third preferred embodiment comprises a dispersion compensation module 370, a waveform deterioration detector 371, and a control device 372.

The optical signal is inputted to the dispersion compensation module 370, and dispersion is applied thereto by the dispersion compensation module 370. After the optical signal to which dispersion has been applied has been outputted to the waveform deterioration detector 371, its waveform deterioration is detected by the waveform deterioration detector 371. And the control device 372 receives information related to the waveform deterioration which has been detected, and controls the dispersion value which is applied by the dispersion compensation module 370 so that this waveform deterioration is minimized.

Since the waveform deterioration attains its minimum when the cumulative dispersion in the optical signal has been compensated, along with compensating the group velocity dispersion of the optical transmission path, by minimizing the waveform deterioration, it is possible also simultaneously to compensate for PCD.

FIG 49 is a block diagram showing the structure of a polarization mode dispersion compensation device according to a forty-sixth preferred embodiment of the present invention. In this polarization mode dispersion compensation device of the forty-sixth preferred embodiment, the automatic dispersion compensator described with regard to any of the first through the forty-third preferred embodiments described above is distinguished in that, as one example, the automatic dispersion compensator 266 of the thirty-third preferred embodiment comprises a dispersion compensation module 380, a dispersion detector 381, and a control device 382.

The optical signal is inputted to the dispersion compensation module 380, and dispersion is applied thereto by the dispersion compensation module 380. After the optical signal to which dispersion has been applied has been outputted to the dispersion detector 381, the fractional value which has accumulated in the optical signal is detected by the dispersion detector 381. And the control device 382 receives information related to the dispersion value which has been detected, and controls the dispersion value which is applied by the dispersion compensation module 380 so that this dispersion value is brought to zero.

By compensating the dispersion which has accumulated in this optical signal, along with compensating the group velocity dispersion of the optical transmission path, it is possible also simultaneously to compensate for PCD.

Furthermore, since the dispersion value is detected by the dispersion detector 381, it is possible to decide whether to control in the direction to increase the dispersion value which is applied by the dispersion compensation module 380, or 10 reduce said dispersion value, so that it is accordingly possible to implement stabilized control.

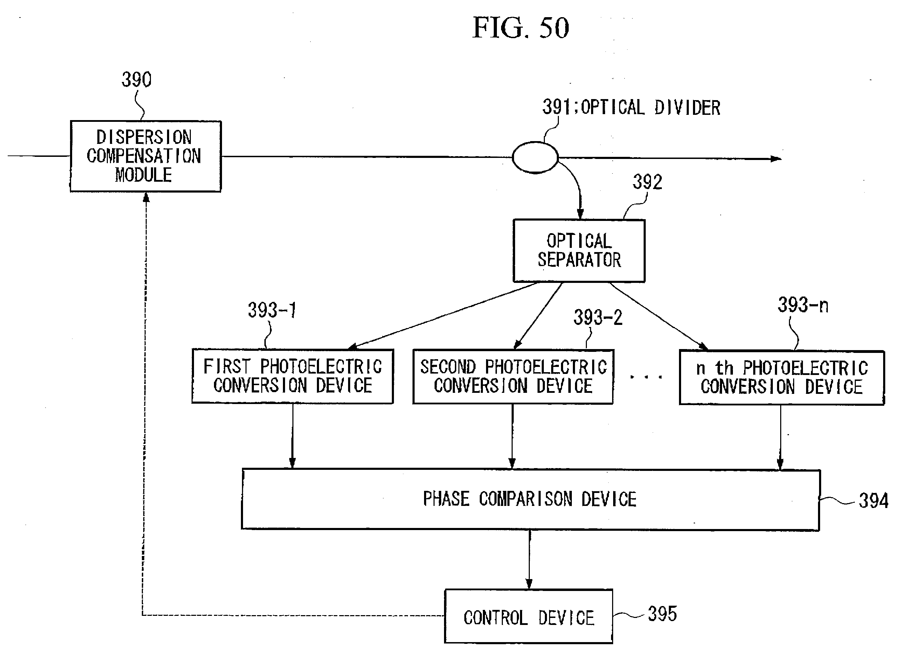

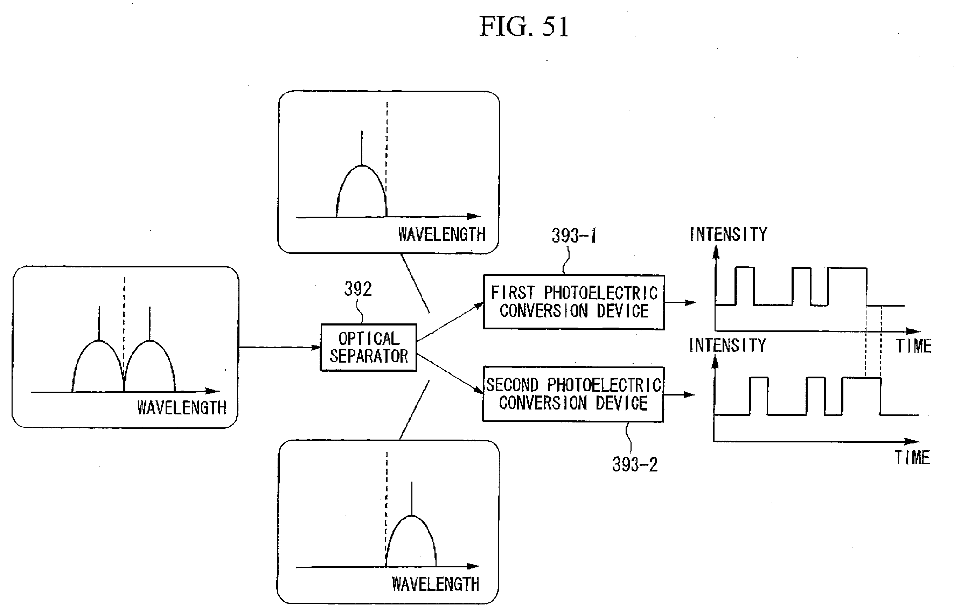

Next, a polarization mode dispersion compensation device according to a forty-seventh preferred embodiment of the present invention will be described with reference to FIGS. 50 and 51.

FIG. 50 is a block diagram showing the structure of a polarization mode dispersion compensation device according to this forty-seventh preferred embodiment of the present invention In this polarization mode dispersion compensation device of the forty-seventh preferred embodiment, the automatic dispersion compensator described with regard to any of the first through the forty-third preferred embodiments described above is distinguished in that, as one example, the automatic dispersion compensator 266 of the thirty-third preferred embodiment comprises a dispersion compensation module 390, an optical divider 391, an optical separator 392, a first photoelectric conversion device 393-1 through an nth photoelectric conversion device 393-n, a phase comparison device 394, and a control device 395.

FIG. 51 shows in schematic form the case in which two optical signals of different wavelengths are being transmitted and received with the polarization mode dispersion compensation device of the forty-seventh preferred embodiment of the present invention.

The optical signal which has passed through the dispersion compensation module 390 and has been divided by the optical divider 391, after having been inputted to the optical separation device 392, is separated for each wavelength by the optical separation device 392. The optical signal which has been thus separated for each wavelength is converted into electrical signals by the first photoelectric conversion device 393-1 and the second photoelectric conversion device 393-2. The two electrical signals which have thus been converted are inputted into the phase comparison device 394, and the phase difference of these two electrical signals is detected by the phase comparison device 394.

When dispersion is present in the optical signal, since the propagation delays are different due to the wavelength of the optical signal, the control device 395 calculates the dispersion value from the wavelength gap between two of the optical signals which have different wavelengths and the phase difference which has been detected, and controls the dispersion value which is applied by the dispersion compensation module 390 so that this dispersion value is brought to zero.

In this manner, it is possible to implement stabilized control by measuring the magnitude and the sign of the dispersion value.

## Claims

1. A polarization mode dispersion compensation method in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, comprising:
sending said optical signal from said optical signal transmitter to said optical transmission path;
separating from said optical signal which is propagated along said optical transmission path, the polarization component which is parallel to, or the polarization component which is perpendicular to, the principal state of polarization of said optical transmission path;
compensating the group velocity dispersion at said polarization component which has thus been separated; and
receiving by said optical signal receiver said optical signal which has been compensated.

2. A polarization mode dispersion compensation method in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, comprising:
sending said optical signal from said optical signal transmitter to said optical transmission path;
separating from said optical signal which is propagated along said optical transmission path, the polarization component which is parallel to, and the polarization component which is perpendicular to, the principal state of polarization of said optical transmission path;
compensating the group velocity dispersion of said one polarization component which has thus been separated; and
receiving by said optical signal receiver said optical signal which has been compensated.

3. A polarization mode dispersion compensation method in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, comprising:
outputting said optical signal from said optical signal transmitter;
receiving input of said optical signal, and converting said optical signal to circular polarization or to linear polarization;
sending said optical signal which has been thus converted to said optical transmission path;
a PMD medium which is connected to said optical transmission path is provided in advance at the signal reception side of said optical transmission path,
separating the PSP of said optical transmission path and said PMD medium from the optical signal which has been propagated through said optical transmission path and said PMD medium, said optical transmission path and said PMD medium are made so that the principal axes of polarization (PSP) of said optical transmission path and said PMD medium are linearly polarized or circularly polarized, and the polarization component which is parallel to, or the polarization component which is perpendicular to;
compensating the group velocity dispersion at said polarization component which has thus been separated; and
receiving by said optical signal receiver said optical signal which has been compensated.

4. A polarization mode dispersion compensation method in an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal, comprising:
outputting said optical signal from said optical signal transmitter;
receiving input of said optical signal, and converting said optical signal is to circular polarization or to linear polarization;
sending said optical signal which has been thus converted to said optical transmission path;
a PMD medium which is connected to said optical transmission path is provided in advance at the signal reception side of said optical transmission path,
separating the principal axes of polarization (PSP) of said optical transmission path and said PMD medium from the optical signal which has been propagated through said optical transmission path and said PMD medium, said optical transmission path and said PMD medium are made so that the PSP of said optical transmission path and said PMD medium are linearly polarized or circularly polarized, and the polarization component which is parallel to, and the polarization component which is perpendicular to;
compensating the group velocity dispersion at said polarization component which has thus been separated; and
receiving by said optical signal receiver said optical signal which has been compensated.

5. A polarization mode dispersion compensation method according to any one of Claims 1 through 4, wherein said polarization component which has been separated out from said optical signal is controlled so that, when said polarization component has been converted into an electrical signal, the ratio of a specified frequency component with respect to the DC component becomes a maximum, and is separated into a polarization component which is parallel to and a polarization component which is perpendicular to, said principal state of polarization.

6. A polarization mode dispersion compensation method according to Claim 2 or 4, wherein the polarization component of said optical signal which is parallel to, and the polarization component of said optical signal which is perpendicular to, said principal state of polarization (PSP) of said optical transmission path are converted into respective electrical signals, are controlled so that the intensities of specified frequency components become equal to one another, and are separated into a polarization component which is parallel to, and a polarization component which is perpendicular to, said PSP.

7. A polarization mode dispersion compensation method according to Claim 2 or 4, wherein the polarization component of said optical signal which is parallel to, and the polarization component of said optical signal which is perpendicular to, said principal slate of polarization (PSP) of said optical transmission path are controlled so that the phase difference between said two parallel polarization component and perpendicular polarization component which are parallel to one another becomes a maximum or a minimum, and are separated into a polarization component which is parallel to, and a polarization component which is perpendicular to, said PSP.

8. A polarization mode dispersion compensation method according to Claim 7, wherein the polarization component of said optical signal which is parallel to, and the polarization component of said optical signal which is perpendicular to, said principal state of polarization (PSP) of said optical transmission path are converted into respective electrical signals, are controlled, after the respective high frequency components have been eliminated, so that the phase difference between said two parallel polarization component and perpendicular polarization component which are parallel to one another becomes a maximum or a minimum, and are separated into polarization components which are parallel to, or polarization components which are perpendicular to, said PSP.

9. A polarization mode dispersion compensation method according to Claim 7, wherein the polarization component of said optical signal which is parallel to, and the polarization component of said optical signal which is perpendicular to said principal state of polarization (PSP) of said optical transmission path are controlled, after their respective signal patterns have been pattern converted according a specified rule, so that the phase difference between said two parallel polarization component and perpendicular polarization component which are parallel to one another becomes a maximum or a minimum, and are separated into polarization components which are parallel to, or polarization components which are perpendicular to, said PSP.

10. A polarization mode dispersion compensation method according to any one of Claims 1 through 4, wherein:
allocating specified codes from said optical signal transmitter to said optical signal and sending them;
receiving by said optical signal receiver said optical signal and detecting errors in said codes; and
controlling the polarization components which are separated from said optical signal which is propagated along said optical transmission path, so that the number of errors which are detected by said optical signal receiver becomes a minimum.

11. A polarization mode dispersion compensation method according to any one of Claims 1 through 4, wherein:
allocating specified error correction codes from said optical signal transmitter to said optical signal and sending them;
receiving by said optical signal receiver said optical signal and decoding said error correction codes and correcting it; and
controlling the polarization components which are separated from said optical signal which is propagated along said optical transmission path, so that the number of errors which are corrected by said optical signal receiver becomes a minimum.

12. In an optical transmission system which comprises an optical signal transmitter which sends an optical signal, an optical transmission path which is connected to said optical signal transmitter and which transmits said optical signal, and an optical signal receivcr which is connected to said optical signal transmitter via said optical transmission path and which receives said optical signal,
a polarization mode dispersion compensation device, provided upon said transmission path, and comprising:
a polarization controller which converts the polarization state of the optical signal which has been outputted from said optical signal transmitter;
a polarizer which separates out a specified polarization component from the optical signal which is outputted from said polarization controller;
a waveform deterioration detector which detects waveform deterioration of the polarization component which has been separated out by said polarizcr;
a control device which controls said polarization controller so that the waveform deterioration which is detected by said waveform deterioration detector becomes a minimum; and
an automatic dispersion compensator which compensates the group velocity dispersion of the polarization component which has been separated out by said polarizer

13. In an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal,
a polarization mode dispersion compensation device, provided upon said transmission path, and comprising:
a polarization controller which converts the polarization state of the optical signal which has been outputted from said optical signal transmitter;
a polarizer which separates out a specified polarization component from the optical signal which is outputted from said polarization controller;
a dispersion compensation module which compensates the group velocity dispersion of the polarization component which has been separated out by said polarizer;
a waveform deterioration detector which detects waveform deterioration of the polarization component which is outputted from said dispersion compensation module; and
a control device which controls said polarization controller and said dispersion compensation module so that the waveform deterioration which is detected by said waveform deterioration detector becomes a minimum.

14. In an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal,
a polarization mode dispersion compensation device, provided upon said transmission path, and comprising:
a polarization controller which converts the polarization state of the optical signal which has been outputted from said optical signal transmitter;
a principal state of polarization (PSP) detector which detects the PSP of said optical transmission path from the optical signal which is outputted from said polarization controller;
a polarizer which separates out a specified polarization component from the optical signal which is outputted from said polarization controller;
a control device which controls said polarization controller so that the PSP which has been detected by said PSP detector agrees with the polarization state which is separated by said polarizer; and
an automatic dispersion compensator which compensates the group velocity dispersion of the polarization component which has been separated out by said polarizer.

15. In an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal,
a polarization mode dispersion compensation device, provided upon said transmission path, and comprising:
a polarization controller which converts the polarization state of the optical signal which has been outputted from said optical signal transmitter;
a Differential Group Delay (DGD) element which allocates a PMD to the optical signal which is outputted from said polarization controller;
a polarizer which separates out a specified polarization component from the optical signal which is outputted from said DGD element;
a waveform deterioration detector which detects waveform deterioration of the polarization component which has been separated out by said polarizer;
a control device which controls said polarization controller so that the waveform deterioration which is detected by said waveform deterioration detector becomes a minimum; and
an automatic dispersion compensator which compensates the group velocity dispersion of the polarization component which has been separated out by said polarizer.

16. A polarization mode dispersion compensation device according to Claim 15, further comprising a polarization setting device that sets the polarization state of the optical signal which is outputted from said optical signal transmitter to circular polarization or to linear polarization.

17. In an optical transmission system which comprises an optical signal Transmitter which sends an optical signal, an optical transmission path which is connected to said optical signal transmitter and which transmits said optical signal, and an optical signal receiver which is connected to said optical signal transmitter via said optical transmission path and which receives said optical signal,
a polarization mode dispersion compensation device, provided upon said transmission path, and comprising:
a polarization controller which converts the polarization state of the optical signal which has been outputted from said optical signal transmitter;
a Differential Group Delay (DGD) element which allocates a PMD to the optical signal which is outputted from said polarization controller;
a polarizer which separates out a specified palarization component from the optical signal which is outputted from said DGD element;
a dispersion compensation module which compensates the group velocity dispersion of the polarization component which has been separated out by said polarizer;
a waveform deterioration detector which detects waveform deterioration of the optical signal which is outputted from said dispersion compensation module; and
a control device which controls said polarization controller and said dispersion compensation module so that the waveform deterioration which is detected by said waveform deterioration detector becomes a minimum.

18. A polarization mode dispersion compensation device according to Claim 17, further comprising a polarization setting device which sets the polarization state of the optical signal which is outputted from said optical signal transmitter to circular polarization or to linear polarization.

19. In an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal,
a polarization mode dispersion compensation device, provided upon said transmission path, and comprising:
a polarization controller which converts the polarization state of the optical signal which has been outputted from said optical signal transmitter;
a Differential Group Delay (DGD) element which allocates a PMD to the optical signal which is outputted from said polarization controller;
a principal state of polarization (PSP) detector which detects the PSP of said optical transmission path and of said DGD element said from the optical signal which is outputted from said DGD element;
a polarizer which separates out a specified polarization component from the optical signal which is outputted from said polarization controller;
a control device which controls said polarization controller so that the PSP which has been detected by said PSP detector agrees with the polarization state which is separated by said polarizer; and
an automatic dispersion compensator which compensates the group velocity dispersion of the polarization component which has been separated out by said polarizer.

20. A polarization mode dispersion compensation device according to Claim 19, further comprising a polarization setting device that sets the polarization state of the optical signal which is outputted from said optical signal transmitter to circular polarization or to linear polarization.

21. A polarization mode dispersion compensation device according to any one of Claims 12, 13, 15, and 17, wherein:
said waveform deterioration detector comprises an optical divider which divides the polarization components which have been separated by said polarization selection device, a photoelectric conversion device which converts one of the optical signals which have been divided by said optical divider into an electrical signal, a specified frequency detector which detects a specified frequency component of the electrical signal which has been converted by said photoelectric conversion device, and a DC component detector which detects the DC compuonent of the electrical signal which has been converted by said photoelectric conversion device; and
said control device controls said polarization controller so that the ratio of said specified frequency component and said DC component, becomes a maximum.

22. A polarization mode dispersion compensation device according to any one of Claims 12, 13, 15, and 17, wherein:
said waveform deterioration detector comprises an optical divider which divides the polarization components which have been separated by said polarization selection device, a photoelectric conversion device which converts one of the optical signals which have been divided by said optical divider into an electrical signal, an electrical signal divider which divides the electrical signal which has thus been converted by said photoelectric conversion device into two, two recognition circuits which recognize and regenerate the electrical signals which have been divided out by said electrical signal divider, an agreement decision circuit which decides whether or not the logical values of said two signals which have been respectively outputted by said two recognition circuits agree with one another, and a low frequency pass circuit which detects the low frequency component of the output signal of said agreement decision circuit; and
said control device controls said polarization controller so that the output voltage of said low frequency pass circuit becomes a minimum.

23. A polarization mode dispersion compensation device according to any one of Claims 12, 13, 15, and 17, wherein:
said waveform deterioration detector comprises an optical divider which divides the polarization components which have been separated by said polarization selection device, a photoelectric conversion device which converts one of the optical signals which have been divided by said optical divider into an electrical signal, an electrical signal divider which divides the electrical signal which has thus been converted by said photoelectric conversion device into two signals, two recognition circuits which recognize and regenerate the electrical signals which have thus been divided out by said electrical signal divider, an agreement decision circuit which decides whether or not the logical values of said two signals which have been respectively outputted by said two recognition circuits agree with one another, and a pulse number detection circuit which integrates the number of pulses in the output signal of said agreement decision circuit and outputs a voltage which is proportional to this pulse number; and
said control device controls said polarization controller so that the output voltage of said pulse number detection circuit becomes a minimum

24. A polarization mode dispersion compensation device according to any one of Claims 12, 13,15, and 17, wherein:
said waveform deterioration detector comprises an optical divider which divides the polarization components which have been separated by said polarization selection device, a photoelectric conversion device which converts one of the optical signals which have been divided by said optical divider into an electrical signal, an electrical signal divider which divides the electrical signal which has thus been converted by said photoelectric conversion device into (2×n) signals, (2×n) recognition circuits which recognize and regenerate the respective electrical signals which have been divided out by said electrical signal divider, n agreement decision circuits which decide whether or not the logical values of two signals which have been respectively outputted by two of the recognition circuits which are selected from said (2×n) recognition circuits agree with one another, n low frequency pass circuits which detect the low frequency components of the output signals of said n agreement decision circuits, and an addition circuit which adds together and outputs the output voltages of said n low frequency pass circuits; and
said control device controls said polarization controller so that the output voltage of said addition circuit becomes a minimum.

25. A polarization mode dispersion compensation device according to any one of Claims 12,13,15, and 17, wherein:
said waveform deterioration detector comprises an optical divider which divides the polarization components which have been separated by said polarization selection device, a photoelectric conversion device which converts one of the optical signals which have been divided by said optical divider into an electrical signal, an electrical signal divider which divides the electrical signal which has thus been converted by said photoelectric conversion device into (2×n) signals, (2×n) recognition circuits which recognize and regenerate the respective electrical signals which have been divided out by said electrical signal divider, n agreement decision circuits which decide whether or not the logical values of two signals which have been respectively outputted by two of the recognition circuits which are selected from said (2×n) recognition circuits agree with one another, n pulse number detection circuits which integrate the numbers of pulses in the output signals of said n agreement decision circuits and output voltages which are proportional to these pulse numbers, and an addition circuit which adds together and outputs the output voltages of said n pulse number detection circuits; and
said control device controls said polarization controller so that the output voltage of said addition circuit becomes a minimum.

26. A polarization mode dispersion compensation device according to any one of Claims 12, 13, 15, and 17, wherein:
said waveform deterioration detector comprises an optical divider which divides the polazization components which have been separated by said polarization selection device, a photoelectric conversion device which converts one of the optical signals which have been divided by said optical divider into an electrical signal, a first electrical signal divider which divides the electrical signal which has thus been converted by said photoelectric conversion device into n signals, n recognition circuits which recognize and regenerate the respective electrical signals which have been divided out by said first electrical signal divider, a second electrical signal divider which divides the output signal of one recognition circuit which has been selected from said n recognition circuits into (n-1) signals, (n-1) agreement decision circuits which decide whether or not the logical values of the (n-1) output signals of those (n-1) recognition circuits other than said one recognition circuit which has been selected and the logical values of the (n-1) output signals of said second electrical divider respectively agree with one another, (n-1) low frequency pass circuits which detect the low frequency components of the output signals of said (n-1) agreement decision circuits, and an addition circuit which adds together and outputs the output voltages of said (n-1) low frequency pass circuits; and
said control device controls said polarization controller so that the output voltage of said addition circuit becomes a minimum.

27. A polarization mode dispersion compensation device according to any one of Claims 12, 13, 15, and 17, wherein:
said waveform deterioration detector comprises an optical divider which divides the polarization components which have been separated by said polarization selection device, a photoelectric conversion device which converts one of the optical signals which have been divided by said optical divider into an electrical signal, a first electrical signal divider which divides the electrical signal which has thus been converted by said photoelectric conversion device into n signals, n recognition circuits which recognize and regenerate the respective electrical signals which have been divided out by said first electrical signal divider, a second electrical signal divider which divides the output signal of one recognition circuit which has been selected from said n recognition circuits into (n-1) signals, (n-1) agreement decision circuits which decide whether or not the logical values of the (n-1) output signals of those (n-1) recognition circuits other than said one recognition circuit which has been selected and the logical values of the (n-1) output signals of said second electrical divider respectively agree with one another, (n-1) pulse number detection circuits which integrate the number of pulses in the output signals of said (n-1) agreement decision circuits and output voltages which are proportional to these pulse numbers, and an addition circuit which adds together and outputs the output voltages of said (n-1) pulse number detection circuits; and
said control device controls said polarization controller so that the output voltage of said addition circuit becomes a minimum.

28. A polarization mode dispersion compensation device according to any one of Claims 12, 13, 15, and 17, wherein:
said waveform deterioration detector comprises: an optical divider which divides the polarization components which have been separated by said polarization selection device; a photoelectric conversion device which converts one of the optical signals which have been divided by said optical divider into an electrical signal; a first electrical signal divider which divides the electrical signal which has thus been converted by said photoelectric conversion device into (m×n) signals; m functional block groups, each of which consists of n recognition circuits which recognize and regenerate the respective electrical signals which have been divided out by said first electrical signal divider, a second electrical signal divider which divides the output signal of one recognition circuit which has been selected from said n recognition circuits into (n-1) signals, (n-1) agreement decision circuits which respectively decide whether or not the logical values of the output signals from those (n-1) recognition circuits other than said recognition circuit which has thus been selected and the logical values of the respective (n-1) output signals of said second electrical signal divider agree with one another, and (n-1) low frequency pass circuits which detect the low frequency components of the output signals of said (n-1) agreement decision circuits; and an addition circuit which adds together and outputs the (m×(n-1)) output voltages which are outputted from said functional block groups; and
said control device controls said polarization controller so that the output voltage of said addition circuit becomes a minimum.

29. A polarization mode dispersion compensation device according to any one of Claims 12, 13,15, and 17, wherein:
said waveform deterioration detector comprises: an optical divider which divides the polarization components which have been separated by said polarization selection device; a photoelectric conversion device which converts one of the optical signals which have been divided by said optical divider into an electrical signal; a first electrical signal divider which divides the electrical signal which has thus been converted by said photoelectric conversion device into (m×n) signals; m functional block groups, each of which consists of n recognition circuits which recognize and regenerate the respective electrical signals which have been divided out by said first electrical signal divider, a second electrical signal divider which divides the output signal of one recognition circuit which has been selected from said n recognition circuits into (n-1) signals, (n-1) agreement decision circuits which respectively decide whether or not the logical values of the output signals from those (n-1) recognition circuits other than said recognition circuit which has thus been selected and the logical values of the respective (n-1) output signals of said second electrical signal divider agree with one another, and (n-1) pulse number detection circuits which integrate the numbers of pulses in the output signals of said (n-1) agreement decision circuits and output voltages proportional to said numbers of pulses; and an addition circuit which adds together and outputs the (m×(n-1)) output voltages which are outputted from said functional block groups; and
said control device controls said polarization controller so that the output voltage of said addition circuit becomes a minimum.

30. A polarization mode dispersion compensation device according to Claim 14 or 19, wherein:
said principal state of polarization (PSP) detector and said polarizer each comprises a polarization separation device which separates the optical signal which is outputted from said polarization controller into two polarization components which are orthogonal to one another, an optical divider which divides one of the optical signals which are separated out by said polarization separation device, a first photoelectric conversion device which converts the other optical signal which is separated out by said polarization separation device into an electrical signal, a second photoelectric conversion device which converts one of the optical signals which are separated out by said optical divider into an electrical signal, a first specified frequency detector which detects a specified frequency component of the electrical signal which is converted by said first photoelectric conversion device, and a second specified frequency detector which detects a specified frequency component of the electrical signal which is converted by said second photoelectric conversion device; and
said control device controls said polarization controller so that the intensities of the two frequency components which are detected by said specified frequency detector become equal to one another.

31. A polarization mode dispersion compensation device according to Claim 14 or 19, wherein:
said principal state of polarization (PSP) detector and said polarizer each comprises a polarization separation device which separates the optical signal which is outputted from said polarization controller into two polarization components which are orthogonal to one another, an optical divider which divides one of the optical signals which are separated out by said polarization separation device, a first, photoelectric conversion device which converts the other optical signal which is separated out by said polarization separation device into an electrical signal, a second photoelectric conversion device which converts one of the optical signals which are separated out by said optical divider into an electrical signal, and a phase comparison device which compares together the phase of the electrical signal which has been converted by said first photoelectric conversion device and the phase of the electrical signal which has been converted by said second photoelectric conversion device; and
said control device controls said polarization controller so that the phase difference which is detected by said phase comparison device becomes a maximum or a minimum.

32. A polarization mode dispersion compensation device according to Claim 14 or 19, wherein:
said principal state of polarization (PSP) detector and said polarizer each comprises a polarization separation device which separates the optical signal which is outputted from said polarization controller into two polarization components which are orthogonal to one another, an optical divider which divides one of the optical signals which are separated out by said polarization separation device, a first photoelectric conversion device which converts the other optical signal which is separated out by said polarization separation device into an electrical signal, a first band restriction device which eliminates the high frequency component from the electrical signal which has been converted by said first photoelectric conversion device, a second photoelectric conversion device which converts one of the optical signals which are separated out by said optical divider into an electrical signal, a second band restriction device which eliminates the high frequency component from the electrical signal which has been converted by said second photoelectric conversion device, and a phase comparison device which compares together the phase of the electrical signal from which the high frequency component has been eliminated by said first band restriction device and the phase of the electrical signal from which the high frequency component has been eliminated by said second band restriction device; and
said control device controls said polarization controller so that the phase difference which is detected by said phase comparison device becomes a maximum or a minimum

33. A polarization mode dispersion compensation device according to Claim 14 or 19, wherein:
said principal state of polarization (PSP) detector and said polarizer each comprises a polarization separation device which separates the optical signal which is outputted from said polarization controller into two polarization components which are orthogonal to one another, an optical divider which divides one of the optical signals which are separated out by said polarization separation device, a first photoelectric conversion device which converts the other optical signal which is separated out by said polarization separation device into an electrical signal, a first signal processing device which performs pattern conversion upon the signal pattern of the electrical signal which has been converted by said first photoelectric conversion device according to a specified rule, a second photoelectric conversion device which converts one of the optical signals which are separated out by said optical divider into an electrical signal, a second signal processing device which performs pattern conversion upon the signal pattern of the electrical signal which has been converted by said second photoelectric conversion device according to a specified rule, and a phase comparison device which compares together the phase of the electrical signal upon which pattern conversion has been performed by said first signal processing device and the phase of the electrical signal upon which pattern conversion has been performed by said second signal processing device; and
said control device controls said polarization controller so that the phase difference which is detected by said phase comparison device becomes a maximum or a minimum.

34. In an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal,
a polarization mode dispersion compensation device, provided upon said transmission path, and comprising:
a polarization controller which convents the polarization state of the optical signal which has been outputted from said optical signal transmitter;
a polarizer which separates out a specified polarization component from the optical signal which is outputted from said polarization controller;
a control device which controls said polarization controller so that the number of code errors which is detected by said optical signal receiver becomes a minimum; and
an automatic dispersion compensator which compensates the group velocity dispersion of the polarization component which has been separated out by said polarizer.

35. In an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal,
a polarization mode dispersion compensation device, provided upon said transmission path, and comprising:
a polarization controller which converts the polarization state of the optical signal which has been outputted from said optical signal transmitter;
a polarizer which separates out a specified polarization component from the optical signal which is outputted from said polarization controller;
a dispersion compensation module which compensates the group velocity dispersion of the polarization component which has been separated out by said polarizer; and
a control device which controls said polarization controller and said dispersion compensation module so that the number of code errors which is detected by said optical signal receiver becomes a minimum.

36. In an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal,
a polarization mode dispersion compensation device, provided upon said transmission path, and comprising:
a polarization controller which converts the polarization state of the optical signal which has been outputted from said optical signal transmitter;
a polarizer which separates out a specified polarization component from the optical signal which is outputted from said polarization controller;
a control device which controls said polarization controller so that the number of errors which are corrected by said optical signal receiver becomes a minimum; and
an automatic dispersion compensator which compensates the group velocity dispersion of the polarization component which has been separated out by said polarizer.

37. In an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal,
a polarization mode dispersion compensation device, provided upon said transmission path, and comprising:
a polarization controller which converts the polarization state of the optical signal which has been outputted from said optical, signal transmitter;
a polarizer which separates out a specified polarization component from the optical signal which is outputted from said polarization controller;
a dispersion compensation module which compensates the group velocity dispersion of the polarization component which has been separated out by said polarizer; and
a control device which controls said polarization controller and said dispersion compensation module so that the number of errors which are corrected by said optical signal receiver becomes a minimum.

38. In an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal,
a polarization mode dispersion compensation device, provided upon said transmission path, and comprising:
a polarization controller which converts the polarization state of the optical signal which has been outputted from said optical signal transmitter;
a polarizer which separates out a specified polarization component from the optical signal which is outputted from said polarization controller;
a dispersion compensation module which compensates the group velocity dispersion of the polarization component which has been separated out by said polarizer;
and wherein:
said optical signal receiver is endowed with a waveform deterioration detection function, and further comprises a control device which controls said polarization controller and said dispersion compensation module so that the waveform deterioration which is detected by said optical signal receiver becomes a minimum.

39. In an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal,
a polarization mode dispersion compensation device, provided upon said transmission path, and comprising:
a polarization controller which converts the polarization state of the optical signal which has been outputted from said optical signal transmitter;
a Differential Group Delay (DGD) element which allocates a PMD to the optical signal which is outputted from said polarization controller;
a polarizer which separates out a specified polarization component from the optical signal which is outputted from said polarization controller;
a control device which controls said polarization controller so that the number of code errors which is detected by said optical signal receiver becomes a minimum; and
an automatic dispersion compensator which compensates the group velocity dispersion of the polarization component which has been separated out by said polarizer,

40. A polarization mode dispersion compensation device according to Claim 39, further comprising a polarization setting device which sets the polarization state of the optical signal which is outputted from said optical signal transmitter to circular polarization or to linear polarization.

41. In an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal,
a polarization mode dispersion compensation device, provided upon said transmission path, and comprising:
a polarization controller which converts the polarization state of the optical signal which has been outputted from said optical signal transmitter;
a Differential Group Delay (DGD) element which allocates a PMD to the optical signal which is outputted from said polarization controller;
a polarizer which separates out a specified polarization component from the optical signal which is outputted from said polarization controller;
a dispersion compensation module which compensates the group velocity dispersion of the polarization component which has been separated out by said polarizer; and
a control device which controls said polarization controller and said dispersion compensation module so that the number of code errors which is detected by said optical signal receiver becomes a minimum.

42. A polarization mode dispersion compensation device according to Claim 41, further comprising a polarization setting device that sets the polarization state of the optical signal which is outputted from said optical signal transmitter to circular polarization or to linear polarization.

43. In an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal,
a polarization mode dispersion compensation device, provided upon said transmission path, and comprising:
a polarization controller which converts the polarization state of the optical signal which has been outputted from said optical signal transmitter;
a Differential Group Delay (DGD) element which allocates a PMD to the optical signal which is outputted from said polarization controller;
a polarizer which separates out a specified polarization component from the optical signal which is outputted from said DGD element;
a control device which controls said polarization controller so that the number of errors which are corrected by said optical signal receiver becomes a minimum; and
an automatic dispersion compensator which compensates the group velocity dispersion of the polarization component which has been separated out by said polarizer.

44. A polarization mode dispersion compensation device according to Claim 43, further comprising a polarization setting device that sets the polarization state of the optical signal which is outputted from said optical signal transmitter to circular polarization or to linear polarization.

45. In an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal,
a polarization mode dispersion compensation device, provided upon said transmission path, and comprising:
a polarization controller which converts the polarization state of the optical signal which has been outputted from said optical signal transmitter;
a Differential Group Delay (DGD) element which allocates a PMD to the optical signal which is outputted from said polarization controller;
a polarizer which separates out a specified polarization component from the optical signal which is outputted from said DGD element;
a dispersion compensation module which compensates the group velocity dispersion of the polarization component which has been separated out by said polarizer,
a control device which controls said polarisation controller and said dispersion compensation module so that the number of errors which are corrected by said optical signal receiver becomes a minimum.

46. A polarization mode dispersion compensation device according to Claim 45, further comprising a polarization setting device which sets the polarization state of the optical signal which is outputted from said optical signal transmitter to circular polarization or to linear polarization.

47. In an optical transmission system which comprises an optical signal transmitter which sends an optical signal, an optical transmission path which is connected to said optical signal transmitter and which transmits said optical signal, and an optical signal receiver which is connected to said optical signal transmitter via said optical transmission path and which receives said optical signal,
a polarization mode dispersion compensation device, provided upon said transmission path, and comprising:
a polarization controller which converts the polarization state of the optical signal which has been outputted from said optical signal transmitter;
a Differential Group Delay (DGD) element which allocates a PMD to the optical signal which is outputted from said polarization controller;
a polatizer which separates out a specified polarization component from the optical signal which is outputted from said DGD element; and
a dispersion compensation module which compensates the group velocity dispersion of the polarization component which has been separated out by said polarizer;
and wherein:
said optical signal receiver is endowed with a waveform deterioration detection function, and further comprises a control device which controls said polarization controller and said dispersion compensation module so that the waveform deterioration which is detected by said optical detector becomes a minimum.

48. A polarization mode dispersion compensation device according to Claim 47, further comprising a polarization setting device which sets the polarization state of the optical signal which is outputted from said optical signal transmitter to circular polarization or to linear polarization.

49. A polarization mode dispersion compensation device according to Claim 38 or 47, wherein:
said optical signal receiver which is endowed with said waveform deterioration detection function comprises a photoelectric conversion device which converts the optical signal into an electrical signal, an electrical signal divider which divides the electrical signal which has thus been converted by said photoelectric conversion device into three signals, three recognition circuits which recognize and regenerate the three electrical signals which have thus been divided out by said electrical signal divider, an agreement decision circuit which decides whether or not the logical values of two of said recognition circuits which have been selected from said three recognition circuits agree with one another, and a low frequency pass circuit which detects the low frequency component of the output signal of said agreement decision circuit;
said control device controls said polarization controller and said dispersion compensation module so that the output voltage of said low frequency pass circuit becomes a minimum; and
the one said recognition circuit other than said two recognition circuits which have been selected outputs recognition data to the outside.

50. A polarization mode dispersion compensation device according to Claim 38 or 47, wherein:
said optical signal receiver which is endowed with said waveform deterioration detection function comprises a photoelectric conversion device which converts the optical signal into an electrical signal, an electrical signal divider which divides the electrical signal which has thus been converted by said photoelectric conversion device into three signals, three recognition circuits which recognize and regenerate the three electrical signals which have thus been divided out by said electrical signal divider, an agreement decision circuit which decides whether or not the logical values of two of said recognition circuits which have been selected from said three recognition circuits agree with one another, and a pulse number detection circuit which integrates the number of pulses in the output signal of said agreement decision circuit and outputs a voltage proportional to said number of pulses;
said control device controls said polarization controller and said dispersion compensation module so that the output voltage of said pulse number detection circuit becomes a minimum; and
the one said recognition circuit other than said two recognition circuits which have been selected outputs recognition data to the outside.

51. A polarization mode dispersion compensation device according to Claim 38 or 47, wherein:
said optical signal receiver which is endowed with said waveform deterioration detection function comprises a photoelectric conversion device which converts the optical signal into an electrical signal, an electrical signal divider which divides the electrical signal which has thus been converted by said photoelectric conversion device into ((2×n)+1) signals, ((2×n)+1) recognition circuits which recognize and regenerate the respective electrical signals which have been divided out by said electrical signal divider, n agreement decision circuits which extract (2×n) of said recognition circuits from said ((2×n)+1) recognition circuits and decide whether or not the logical values of two signals which have been respectively outputted by two of the recognition circuits which are further selected from said (2×n) recognition circuits which have been extracted agree with one another, n low frequency pass circuits which detect the low frequency components of the output signals of said n agreement decision circuits, and an addition circuit which adds together and outputs the output voltages of said n low frequency pass circuits; and
said control device controls said polarization controller and said dispersion compensation module so that the output voltage of said addition circuit becomes a minimum; and
the one said recognition circuit other than said (2xn) recognition circuits which have been extracted outputs recognition data to the outside.

52. A polarization mode dispersion compensation device according to Claim 38 or 47, wherein:
said optical signal receiver which is endowed with said waveform deterioration detection function comprises a photoelectric conversion device which converts the optical signal into an electrical signal, an electrical signal divider which divides the electrical signal which has thus been converted by said photoelectric conversion device into ((2×n)+1) signals, ((2×n)+1) recognition circuits which recognize and regenerate the respective electrical signals which have been divided out by said electrical signal divider, n agreement decision circuits which extract (2×n) of said recognition circuits from said ((2×n)+1 recognition circuits and decide whether or not the logical values of two signals which have been respectively outputted by two of the recognition circuits which are further selected from said (2×n) recognition circuits which have been extracted agree with one another, n pulse number detection circuits which integrate the numbers of pulses in the output signals of said n agreement decision circuits and output voltages proportional to said numbers of pulses, and an addition circuit which adds together and outputs the output voltages of said n pulse number detection circuits; and
said control device controls said polarization controller and said dispersion compensation module so that the output voltage of said addition circuit becomes a minimum; and
the one said recognition circuit other than said (2xn) recognition circuits which have been extracted outputs recognition data to the outside

53. A polarization mode dispersion compensation device according to Claim 38 or 47, wherein:
said optical signal receiver which is endowed with said waveform deterioration detection function comprises a photoelectric conversion device which converts the optical signal into an electrical signal, a first electrical signal divider which divides the electrical signal which has thus been converted by said photoelectric conversion device into n signals, n recognition circuits which recognize and regenerate the respective electrical signals which have been divided out by said first electrical signal divider, a second electrical signal divider which divides the output signal of a one of said recognition circuits which has been selected from said n recognition circuits into n signals, (n-1) agreement decision circuits which decide whether or not the logical values of the output signals of the (n-1) recognition circuits other than said one recognition circuit which has thus been selected and the logical values of the (n-1) output signals which have been selected from said n output signals of said second electrical signal divider respectively agree with one another, (n-1) low frequency pass circuits which detect the low frequency components of the output signals of said (n-1) agreement decision circuits, and an addition circuit which adds together and outputs the output voltages of said (n-1) low frequency pass circuits;
said control device controls said polarization controller and said dispersion compensation module so that the output voltage of said addition circuit becomes a minimum; and
said second electrical signal divider outputs to the outside the one said output signal other than said (n-1) output signals which have been selected.

54. A polarization mode dispersion compensation device according to Claim 38 or 47, wherein:
said optical signal receiver which is endowed with said waveform deterioration detection function comprises a photoelectric conversion device which converts the optical signal into an electrical signal, a first electrical signal divider which divides the electrical signal which has thus been converted by said photoelectric conversion device into n signals, n recognition circuits which recognize and regenerate the respective electrical signals which have been divided out by said first electrical signal divider, a second electrical signal divider which divides the output signal of a one of said recognition circuits which has been selected from said n recognition circuits into n signals, (n-1) agreement decision circuits which decide whether or not the logical values of the output signals of the (n-1) recognition circuits other than said one recognition circuit which has thus been selected and the logical values of the (n-1) output signals which have been selected from said n output signals of said second electrical signal divider respectively agree with one another, (n-1) pulse number detection circuits which integrate the numbers of pulses in the output signals of said (n-1) agreement decision circuits and output voltages proportional to said numbers of pulses, and an addition circuit which adds together and outputs the output voltages of said (n-1) pulse number detection circuits; and
said control device controls said polarization controller and said dispersion compensation module so that the output voltage of said addition circuit becomes a minimum; and
said second electrical signal divider outputs a further one output signal to the outside.

55. A polarization mode dispersion compensation device according to any one of Claims 12 through 54, wherein said optical signal transmitter outputs an optical signal 10 which has been allocated a return-to-zero format in which the phase of the light has been reversed for each bit.

56. A polarization mode dispersion compensation device according to any one of Claims 12 through 54, wherein said optical signal transmitter outputs an optical signal to which has been allocated a return-to-zero format in which the phase of the light has been reversed for each pulse.

57. , A polarization mode dispersion compensation device according to any one of Claims 12, 14, 15, 19, 34, 36, 39, and 43, wherein said automatic dispersion compensator comprises:
a dispersion compensation module which compensates for dispersion in said optical signal which has been inputted;
a second waveform deterioration detector which is connected in series with said dispersion compensation module, and which detects waveform deterioration of the optical signal which has passed through said dispersion compensation module, and
a second control device which controls said dispersion compensation module so that the waveform deterioration which has been detected by said second waveform deterioration detector becomes a minimum.

58. A polarization mode dispersion compensation device according to any one of Claims 12, 14,15, 19, 34, 36, 39, and 43, wherein said automatic dispersion compensator comprises:
a dispersion compensation module which compensates for dispersion of said optical signal which has been inputted;
a dispersion detector which is connected in series with said dispersion compensation module, and which detects the cumulative dispersion value of the optical signal which has passed through said dispersion compensation module; and
a second control device which controls said dispersion compensation module so that said cumulative dispersion value which has been detected by said dispersion detector becomes zero.

59. A polarization mode dispersion compensation device according to Claim 58, wherein:
said optical signal transmitter sends an optical signal in which a plurality of wavelengths have been modulated with the same signal pattern; and
said dispersion detector comprises an optical separation device which separates the optical signal into a plurality of different wavelengths, a plurality of photoelectric conversion devices which convert said plurality of optical signals which have been separated out into respective electrical signals, and a phase comparison device which detects the phase differences between the electrical signals which have thus been converted by said photoelectric conversion devices.
